# EUROPEAN PATENT SPECIFICATION

(11) **EP 1 812 734 B1**
(45) Date of publication and mention of the grant of the patent: **21.11.2012**
(21) Application number: 05797910.6
(22) Date of filing: 20.09.2005
(51) Int. Cl.: F16H 9/00, F16H 59/00, F16H 61/00, F16H 63/00

(54) **TRANSMISSION SYSTEMS**
KRAFTÜBERTRAGUNGSSYSTEME
SYSTEMES DE TRANSMISSION

(30) Priority: 20.09.2004 US 610944 P; 19.09.2005 US 228474
(43) Date of publication of application: 01.08.2007
(73) Proprietor: Voss, Darrell, Vancouver, WA 98660 (US)
(72) Inventor: Voss, Darrell, Vancouver, WA 98660 (US)
(74) Representative: Jones, Graham Henry
(86) International application number: PCT/US2005/033512
(87) International publication number: WO 2006/034213

(56) References cited:
- DE-C- 194 018
- DE-C- 222 760
- FR-A- 349 009
- FR-A- 486 815
- US-A- 3 165 002
- US-A- 3 906 809
- US-A- 5 362 278
- US-A- 5 738 603
- US-A1- 2003 064 844
- US-B1- 6 352 486
- US-B1- 6 471 610

## Description

### REFERENCE TO RELATED APPLICATIONS

The present application claims the priority of provisional application No. 60/610,944 filed September 20, 2004 entitled BICYCLE SYSTEMS AND METHOD. [0002] The present application is related to pending Application No. 10/113,931, filed April 2, 2002 entitled VEHICLES AND METHODS USING CENTER OF GRAVITY AND MASS SHIFT CONTROL SYSTEM and to provisional application No. 60/622,846 filed October 29, 2004 entitled METHODS FOR MANUFACTURING A GEAR and RESULTING GEAR PRODUCTS. [0003] The present application is also related to an application filed September 19, 2005 by the same inventor entitled IMPROVED VEHICLE SYSTEMS AND METHOD.

### BACKGROUND OF THE INVENTION

### Field of the Invention

This invention, which is claimed in claims 1, 6 and 13, generally relates to transmission systems. The present invention relates to transmission systems with a particular emphasis on systems involving high efficiency, low frictional loss, and/or torque loads at low revolutions per minute. An example of an application for this system is a bicycle. However, the invention is not limited to vehicles or this vehicle type.

### Description of the Prior Art

Material transfer systems, power transfer systems, energy generation and storage systems, and vehicle drive systems make use of variable ratio transmission systems. Conventional variable ratio gear transmissions tend to be heavy and have high frictional losses. Transmissions incorporating multiple transmission carriers, an endless coupling loop, and a drive ratio change method have been developed that minimize weight, space, and frictional losses. Prior art transmission designs comprised of two opposing carriers, one acting as a drive and one acting as a driven, coupled together by an endless loop element, such as a chain, are commonly applied in the aforementioned systems.

Prior art transmission systems of this type have compromised transmission load transfer design and coupling methods to meet the demands of high force loads at low rotational speeds. Transmission components with limited contact surface areas have increased difficulty in making changes in the drive ratio under high force loads. Prior art of transmission carriers that are engaged by endless loop coupling elements has focused on carrier gear profile modifications to develop reliable drive ratio change methods. Endless loop coupling elements that are under high loads and operating at low revolutions per minute resist lateral movement and load transfers between transmission carrier diameters. Load stress is transferred through small contact areas because designs of the transmission carriers limit the contact surfaces to allow drive change shifts. In prior art, this reduction of the surface contact area to improve shift methods has resulted in the increased wear of the transmission components.

In prior art sprocket and chain systems, the sprocket has two lateral faces and an outer diameter that is a radiused involute drive tooth profile designed to receive a round drive pin. Basic sprocket chain construction is comprised of eight pieces: 2 outer links, 2 inner links, 2 connecting pins, and 2 round bushings assembled in a repeating pattern to create an endless loop. The inner and outer links are joined in an alternating pattern by pins. The connecting pin and the round bushings keep the pairs of links at the same distance apart along the length of the chain assembly. A round bushing around the outer diameter of the connecting pin is the contact surface to the toothed profile of the sprocket. During sprocket rotation, the tooth of the sprocket pierces the empty space between the round bushings of the chain linkage assembly then a radial side of the sprocket tooth engages with the round bushing outer diameter to transfer loads to and from the chain assembly. The contact surfaces are limited by the width of the sprocket tooth and radial clearances on the tooth form.

Prior art transmission carriers have limitations in the ability of the chain to engage the carrier elements that are at opposite ends of the carrier. Transmission carriers that have the chain aligned across elements at opposite ends of each carrier results in an undesirable angle of the chain centerline in relation to the centerline of the connected elements. This condition is often referred to as the crossover angle. Excessive crossover angles in prior art systems have resulted in high frictional losses and increased component wear. Prior art solutions to decrease the negative effects of crossover angles has been to limit the available drive ratio changes of the system or to require sufficient distances between the transmission carriers to minimize the angle.

Prior art has focused on the transmission as an integral part of either the drive mechanisms or the driven mechanisms. Examples being the internal transmissions located in the rear hubs of vehicles, the external transmissions used in vehicle designs, and the transmissions enclosed in the bottom bracket area of bicycles.

Prior art transmissions that are an integrated part of the driven mechanism such as the internal rear wheel hubs on vehicles are separated from the initial drive force mechanism by connecting elements that must endure many variations in drive force stresses. The application of the transmission within the rear hub creates a separation in location from the initial drive force and limits the flexibility in location of the drive force transfer mechanisms.

Prior art external transmissions currently have a wide separation of the drive and driven elements. The external design results in the requirement for multiple shifting mechanisms and tensioning elements. The location of the prior art external transmissions limits the flexibility of the transmission location and requires limitations in methods and mounting designs to meet the transmission component tolerance limitations required to function properly. Rear wheel hub internal transmissions have a limited scope of ratio range, because the restrictions in diameter and width reduce the available ratios.

Prior art internal transmissions that are an integral part of the bottom bracket of a bicycle have consisted of transmission mechanisms that are large and heavy, are difficult to manufacture, and consist of numerous complex elements. The bottom bracket internal transmissions have created complications in bicycle frame design and limit the flexibility of the transmission location.

Prior art internal transmissions that are an integral part of the rear wheel hub of a vehicle have consisted of transmission mechanisms that are large and bulky, are difficult to manufacture, and consist of numerous complex elements. The rear wheel hub internal transmissions have created complications in vehicle frame design and limit the flexibility of the transmission location. The additional weight of the internal rear wheel hub transmission adversely affects the performance of the vehicle in regards to the rear wheel weight and the overall vehicle balance.

In view of the limitations and shortcomings of the prior art devices, as well as other disadvantages not specifically mentioned above, it should be apparent for the need of an improved transmission method.

It is therefore a primary object of this invention to provide a transmission system that surpasses the limitations and shortcomings of the prior art. Such a transmission system and method is applicable to vehicle and non-vehicle applications where performance is defined by efficient transfer of energy, use of design structure, ease of manufacture, and flexibility of location.

### SUMMARY OF THE INVENTION

Briefly described, these and other objects of the invention are accomplished according to the present invention by providing at least a pair of oppositely oriented drive and driven transmission carriers. The present invention utilizes a set of transmission carriers, preferably conical, with fixably mounted drive/driven elements wherein the carrier's central axis are essentially parallel. The carriers are preferably identical, but this need not be the case. In other words, one carrier can be larger or smaller in diameter than the other and also vary in length. The carriers may consist of an equal or unequal quantity of fixably attached drive and driven elements. Fixably attached drive and driven elements have an outer diameter that has a drivable profile form or shape. Gear, sprocket, serration, square, and v-shape profiles are all examples of driveable forms.

The use of oppositely oriented transmission element carriers allows for a compactable and minimal element design, improved transmission drive ratio shifts, and a reduction of materials and components required for the device.

The invention features a transmission system comprising at least a pair of oppositely oriented drive and driven transmission carriers, each transmission carrier having mounted thereon ratioed drive and driven elements and wherein the carriers' central axes are essentially parallel, an endless drive transfer loop coupling said drive elements on said drive transmission carrier to the driven elements on said driven transmission carrier, a shifter for relatively shifting said endless loop laterally of said transmission carriers so as to provide different drive ratios between said drive elements and said drive elements.

The invention also features a transmission method comprising, providing a pair of oppositely oriented drive and driven transmission carriers, each transmission carrier having mounted thereon ratioed drive and driven elements and wherein the carriers' central axes are essentially parallel, an endless drive transfer chain coupling said drive elements on said drive transmission carrier to the driven elements on said driven transmission carrier, and sequentially shifting said endless loop laterally of said transmission carriers so as to provide different drive ratios between said drive elements and said drive elements such that changes in said transmission ratios are substantially uniform and that there are no gaps in said transmission ratios.

The invention provides for optimized use of materials resulting in material savings and a reduction of the components required for transmission. The transmission carrier may consist of a single piece construction. The carrier may comprise a multiple piece assembly. The fixably mounted elements may comprise a single fixably mounted piece. The fixably mounted elements may comprise a multiple piece assembly. The carrier may also be comprised of a single piece construction without separated fixably mounted elements. The carrier may comprise stepped profiled circumferences without spacing between the stepped circumferences. The carrier stepped profiles may comprise clearances, undercut surfaces, protruding pins, holes through for lightening purposes, as shown in prior art regarding traditional gear and sprocket shapes and shifting aides. A transmission carrier with stepped profiles is considered a stepped gear cluster.

In the case of the transmission carrier with stepped profiles, the endless loop coupling element engages the profiled surface of each step and support from the lateral face of the adjacent step. This carrier design allows for additional novel shifting means to enable drive ratio changes. The optimized construction makes for an improved and efficient transfer of the transmission force loads. A major benefit is the extended contact engagement area on the transmission carriers for the load transfer coupling element. The invention provides for a transmission design which allows the use of a novel endless loop design technology. The preferred embodiment of the transmission system implements the use of a novel chain construction and shape. The chain has an enlarged engagement surface area for transferring the loads through the chain links to the endless loop carriers. The novel chain link design uses a row of endless loop element links that engage on top of the profiled shape, use the side wall of the adjoining element to block path in the larger circumference direction, and use a profile or guide element to transfer path in the smaller circumference or larger circumference directions when a drive ratio change is desired. The endless loop design also allows for savings in part count and narrower profiles.

The invention enables flexibility in transmission drive ratio change methods. Drive ratio shifting methods may be from individual movements of endless loop guide mechanisms, transmission carrier shifts along their central axis, transmission carrier section movements, endless loop support pins, magnetic forces, and combinations of same that will become obvious. An example of a shift method is a shift of a transmission carrier along the carrier's central axis in conjunction with an endless loop control mechanism which enables a drive ratio change sequence. Another shift method is from a control mechanism that engages the endless connecting element in sequential shift steps as the transmission carriers remain stationary along their axis. An additional shift method is through combining a transmission carrier shift along the parallel axis and an integrated shift and tensioning mechanism movement. Another shift embodiment is using a series of movable pins extended through holes in the transmission carrier bodies. The pins shift out from the surface of the profile where the endless loop element engages the carrier and allow the endless loop to transfer to the next smallest diameter circumference. The pins also support the endless loop element during lateral shifts to the adjacent larger circumference. Additional methods of shift methods are available to enable a drive ratio change sequence.

Drive ratio change sequences can be initiated by mechanical means such as direct cable connection to the shift mechanisms or cam actuated mechanisms. Hydraulic and electrical devices may also be used such as solenoid actuated valves, stepper motors, and similar devices. As will be shown herein, the invention's design is not limited to one or two shift methods as prior art designs are.

The invention's compactability and optimized construction allows for increased flexibility of location related to the system or vehicle framework. In specific regards to vehicle applications, the compact size allows for locations within a vehicle frame, externally attached to vehicle frame, and within the components of a vehicle, such as inside an attached vehicle wheel assembly.

Additional benefits and advantages of the present invention will become apparent to those skilled in the art to which the present invention relates from the subsequent description of the preferred embodiment and the appended claims, taken in conjunction with the accompanying drawings.

### BRIEF DESCRIPTION OF THE DRAWINGS

The above and other objects, advantages, and features of the invention will become more apparent when considered with the following specification and accompanying drawings within:
FIG. 1 is an isometric view of a pair of oppositely oriented, conical transmission carriers in a parallel position,
FIG. 2-A is an isometric view of a stepped gear cluster,
FIG. 2-B is an isometric view of a pair of stepped gear clusters in an oppositely oriented parallel position.
FIG. 3 is an isometric view of conical transmission carriers in a parallel position with a connecting endless element,
FIG. 4-A is an end section view of a stepped gear cluster,
FIG. 4-B is an end section view of a narrow stepped gear cluster,
FIG. 4-C is an end section view of a conical transmission carrier,
FIG. 5-A is a side elevation view of a stepped gear cluster with a moveable portion and cam device,
FIG. 5-B is an end cutaway view of the stepped gear cluster of FIG. 5-A,
FIG. 6-A is a side elevation view of a stepped gear cluster with a moveable section,
FIG. 6-B is a side elevation view of the stepped gear cluster of FIG. 6-A with the section in position,
FIG. 7-A is an isometric view of an endless loop configuration,
FIG. 7-B is an isometric view of an endless loop configuration,
FIG. 7-C is an isometric view of an endless loop configuration,
FIG. 7-D is an isometric view of an endless loop configuration,
FIG. 7-E is an isometric view of an endless loop configuration,
FIG. 7-F is an isometric view of an endless loop configuration,
FIG. 7-G is an isometric view of an endless loop configuration,
FIG. 7-H is an isometric view of an endless loop configuration,

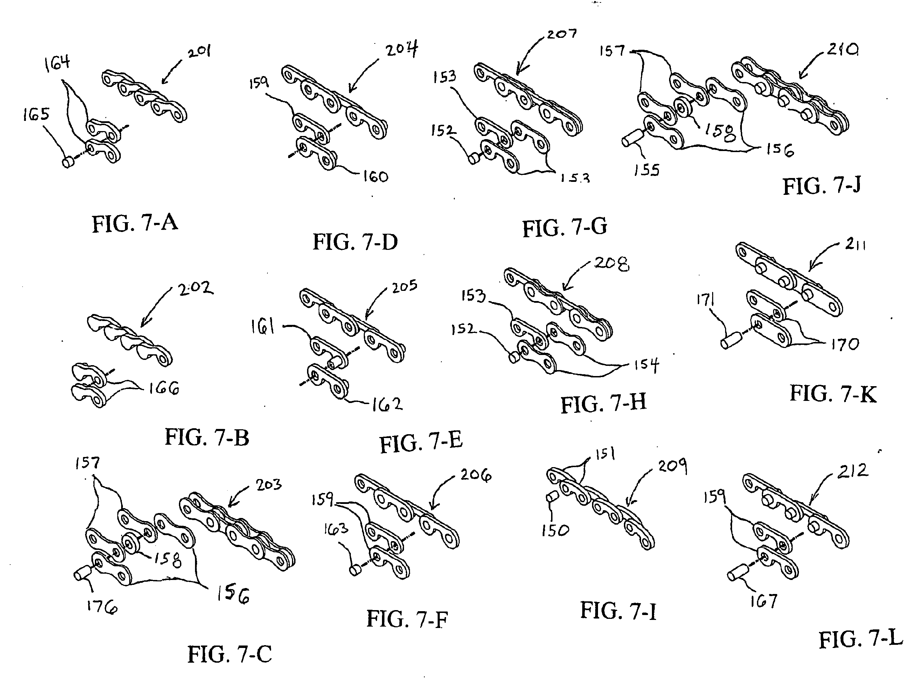

FIG. 7-I is an isometric view of an endless loop configuration,
FIG. 7-J is an isometric view of an endless loop configuration,
FIG. 7-K is an isometric view of an endless loop configuration,
FIG. 7-L is an isometric view of an endless loop configuration,

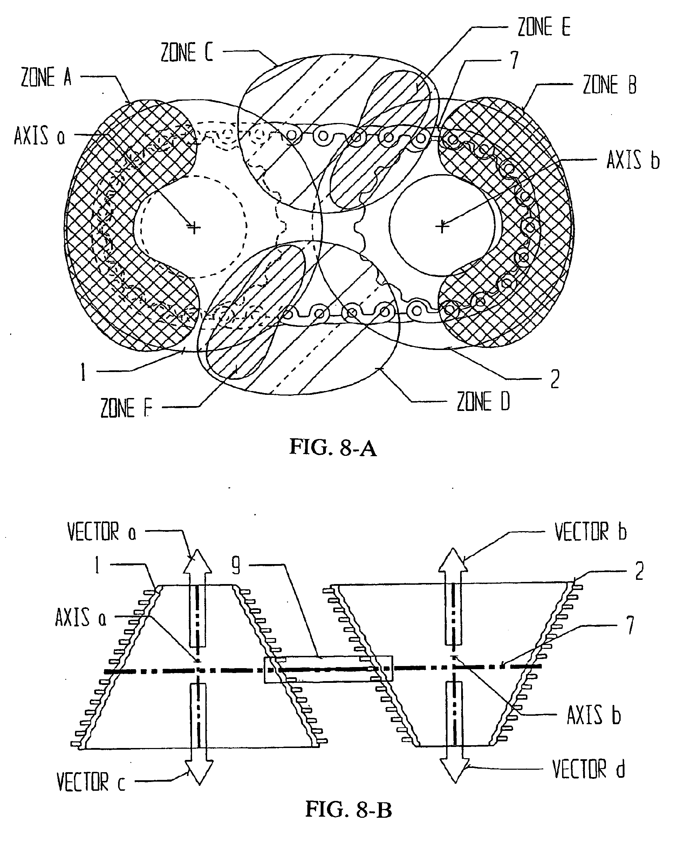

FIG. 8-A is a side elevation view of ratio change control zones for ratio change methods,
FIG. 8-B is a cross sectional top view of the carriers depicting carrier shift vectors,

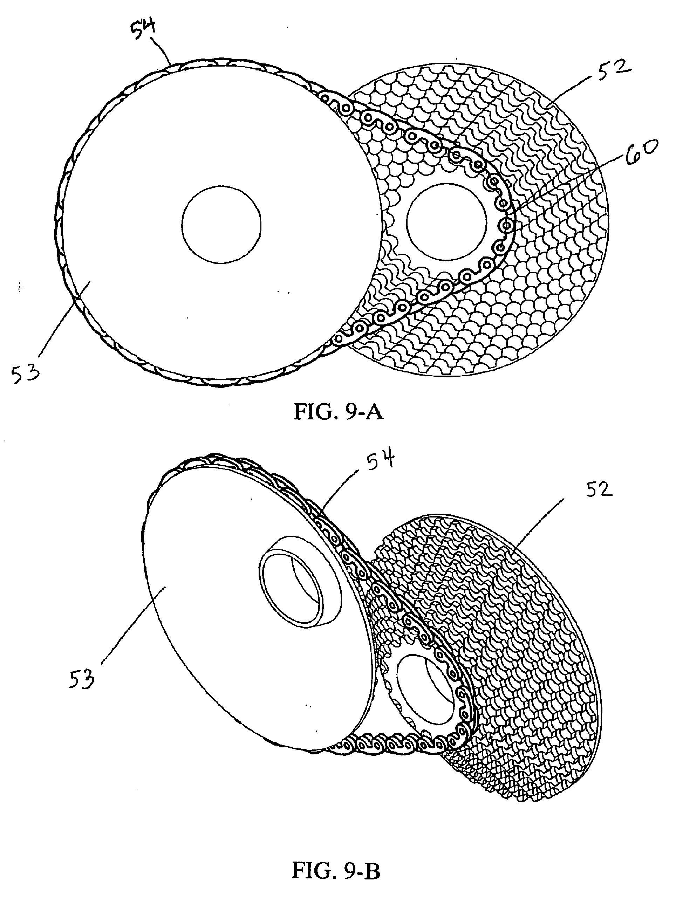

FIG. 9-A is a side elevation view of a drive carrier with stepped profiles depicting the up shift of the endless loop between the carrier's stepped profiles,
FIG. 9-B is an isometric view of the drive carrier with stepped profiles of FIG. 9-A depicting the up shift of the endless loop between the carrier's stepped profiles,

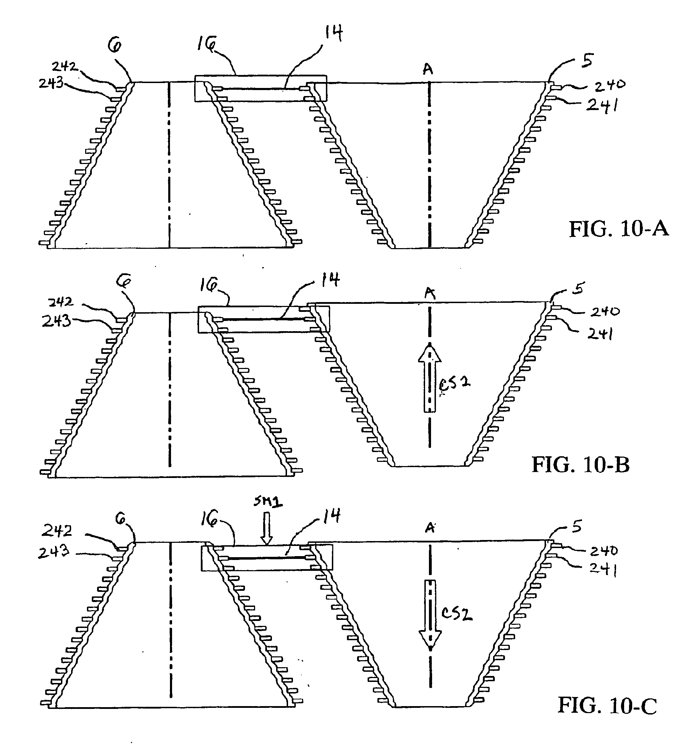

FIG. 10-A is a top view cutaway of conical carriers at start of drive ratio change sequence,
FIG. 10-B is a top view cutaway of conical carriers and a carrier shift sequence,
FIG. 10-C is a top view cutaway of conical carriers, a carrier shift combined with a connecting element shift sequence,

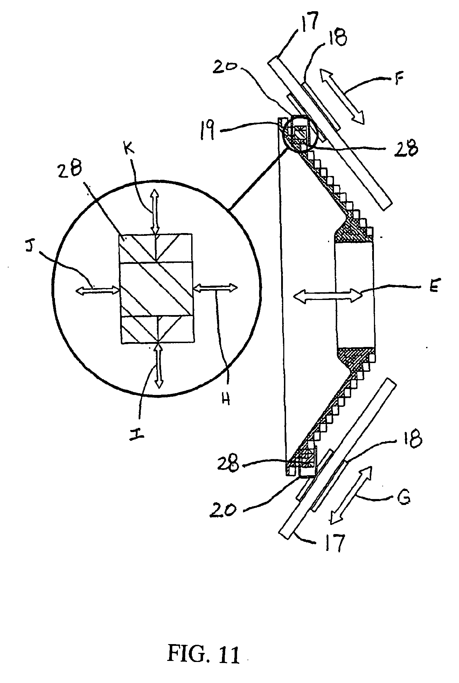

FIG. 11 is a cross sectional side elevation view of a stepped gear cluster depicting chain vectors,

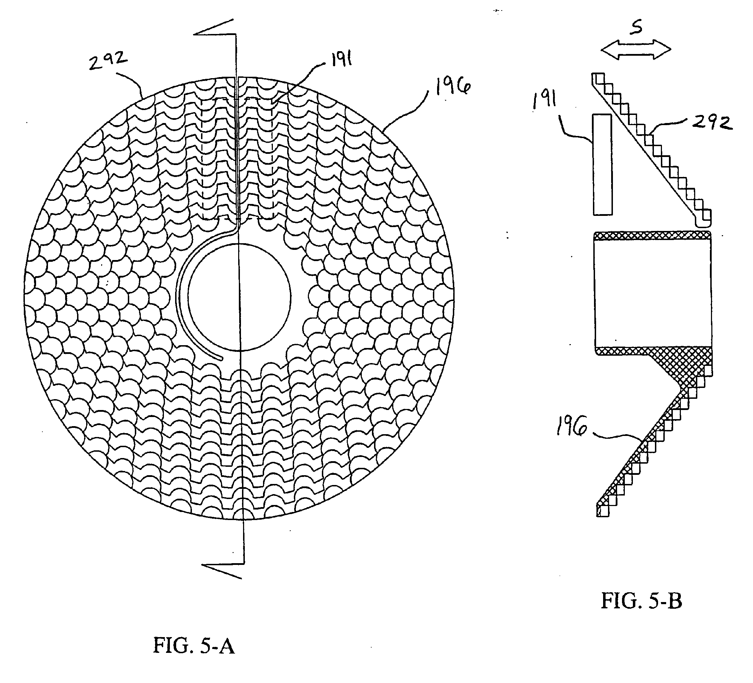

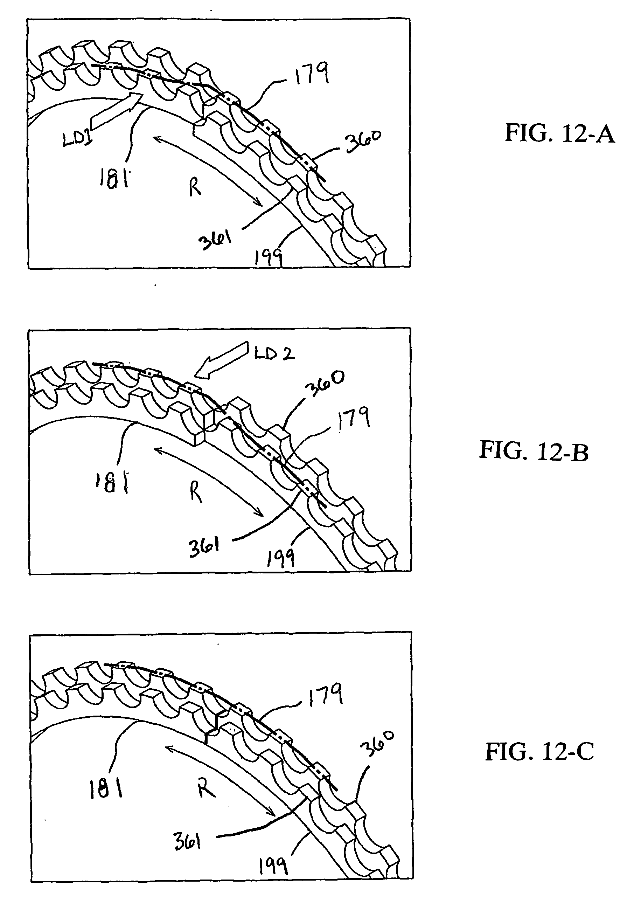

FIG. 12-A is an isometric section view of the moveable portion of the carrier of FIG. 5-A,
FIG. 12-B is an isometric view of the moveable portion of FIG. 5-A shifted laterally to one side,
FIG. 12-C is an isometric view of the moveable portion of FIG. 5-A shifted laterally to the opposite side,

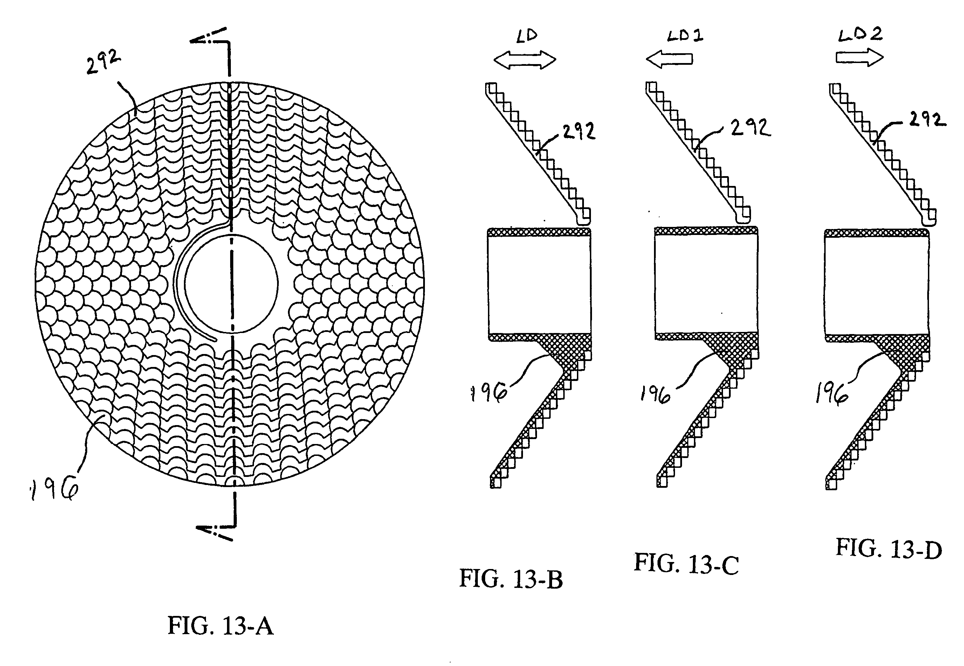

FIG. 13-A is a side elevation view of the stepped gear cluster of FIG. 5-A,
FIG. 13-B is an end cutaway view of the moveable portion shift vectors of the stepped gear cluster of FIG. 5-A,
FIG. 13-C is an end cutaway view of the moveable portion of the stepped gear cluster of FIG. 5-A shifted laterally,
FIG. 13-D is an end cutaway view of the moveable portion of the stepped gear cluster of FIG. 5-A shifted laterally,

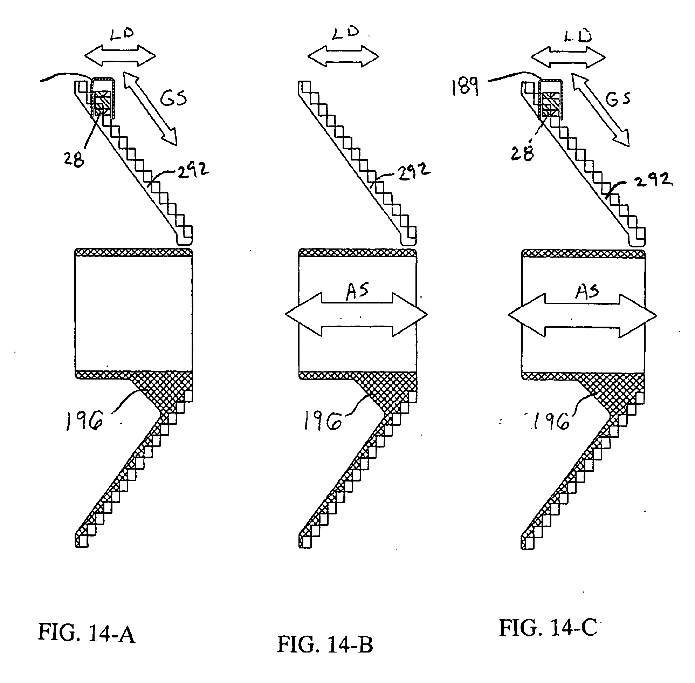

FIG. 14-A is an end cutaway view of the moveable portion of the stepped gear cluster of FIG. 5-A shifted laterally combined with an endless loop guide movement,
FIG. 14-B is an end cutaway view of the moveable portion of the stepped gear cluster of FIG. 5-A shifted laterally combined with a stepped gear cluster shift,
FIG. 14-C is an end cutaway view of the moveable portion of the stepped gear cluster of FIG. 5-A shifted laterally combined with an endless loop guide movement and with a stepped gear cluster shift,

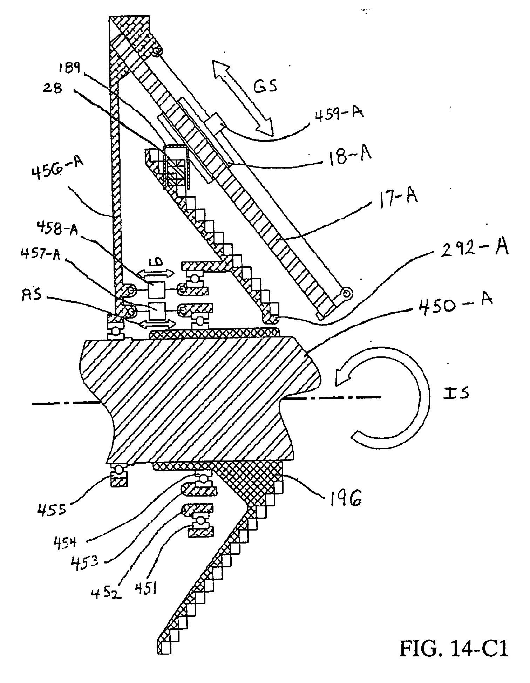

FIG. 14-C1 is an end cutaway view of an embodiment of the moveable portion of the stepped gear cluster of FIG. 5-A shifted laterally combined with an endless loop guide movement and with a stepped gear cluster shift,

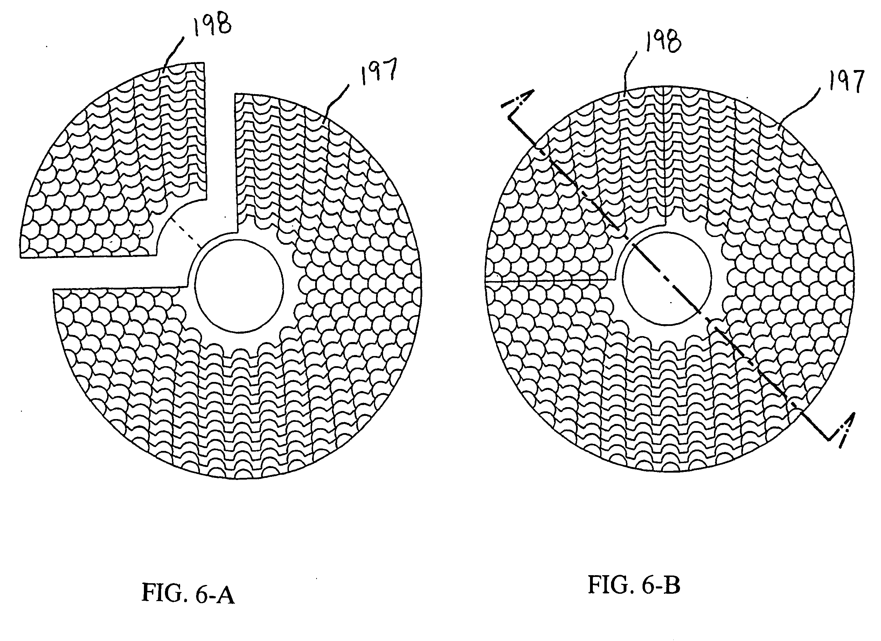

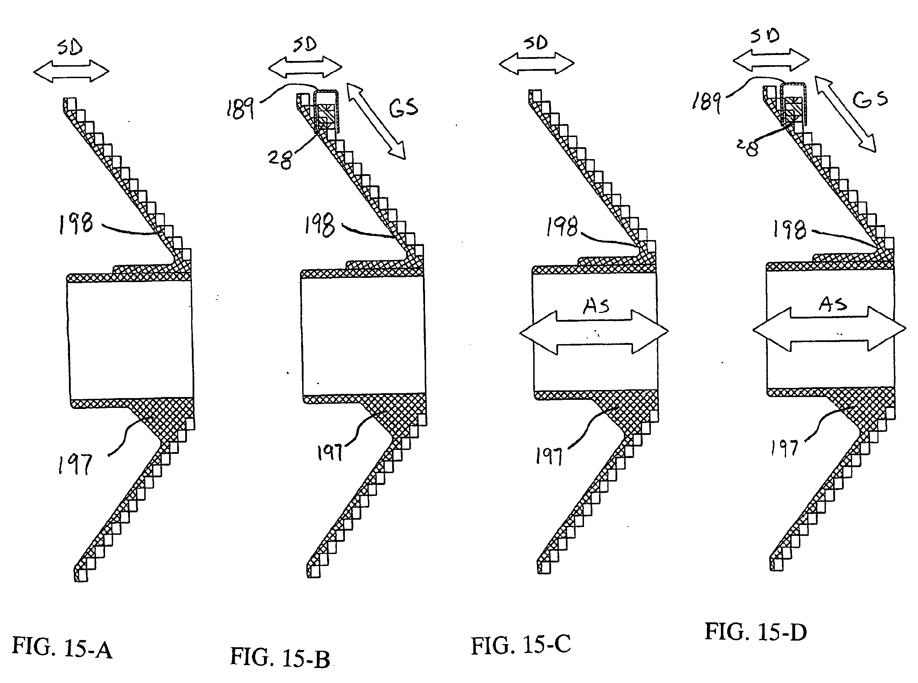

FIG. 15-A is an end cutaway view of the moveable section of the stepped gear cluster of FIG. 6-A and the moveable section shift vectors,
FIG. 15-B is an end cutaway view of the moveable portion of the stepped gear cluster of FIG. 6-A shifted laterally combined with an endless loop guide movement,
FIG. 15-C is an end cutaway view of the moveable portion of the stepped gear cluster of FIG. 6-A shifted laterally combined with the stepped gear cluster shift,

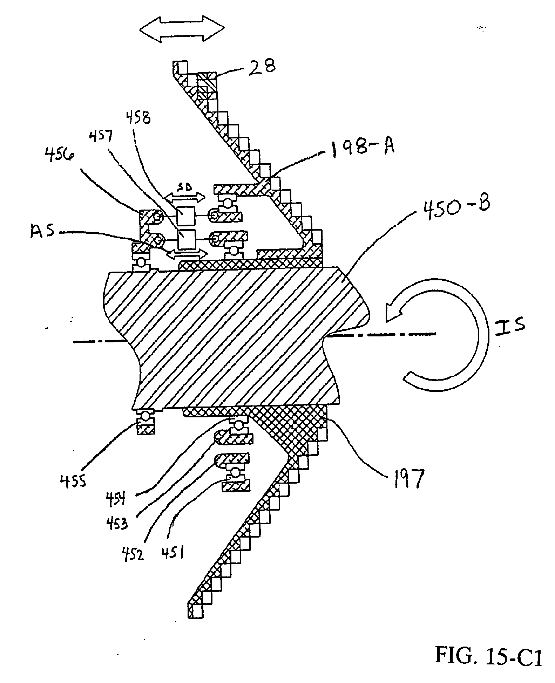

FIG. 15-C1 is an end cutaway view of an embodiment of the moveable portion of the stepped gear cluster of FIG. 6-A shifted laterally combined with a stepped gear cluster shift,
FIG. 15-D is an end cutaway view of the moveable portion of the stepped gear cluster of FIG. 6-A shifted laterally combined with an endless loop guide movement and with the stepped gear cluster shift,

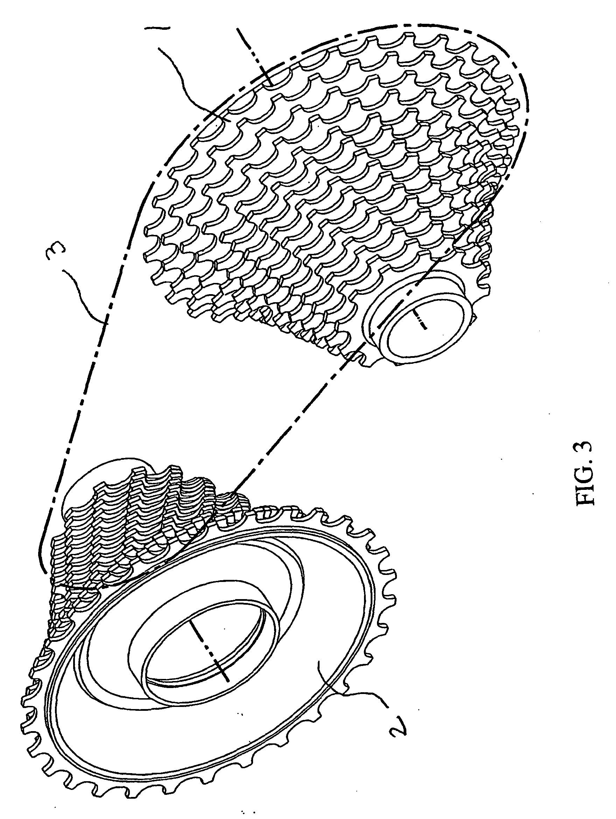

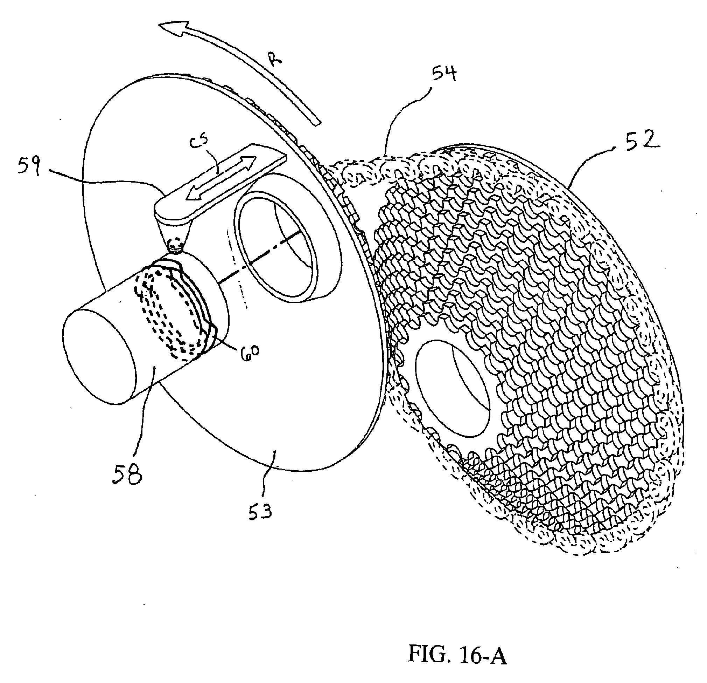

FIG. 16-A is an isometric view of the stepped gear clusters of FIG. 3 with a cam that enables stepped gear cluster shifts along the central axis of the cluster,

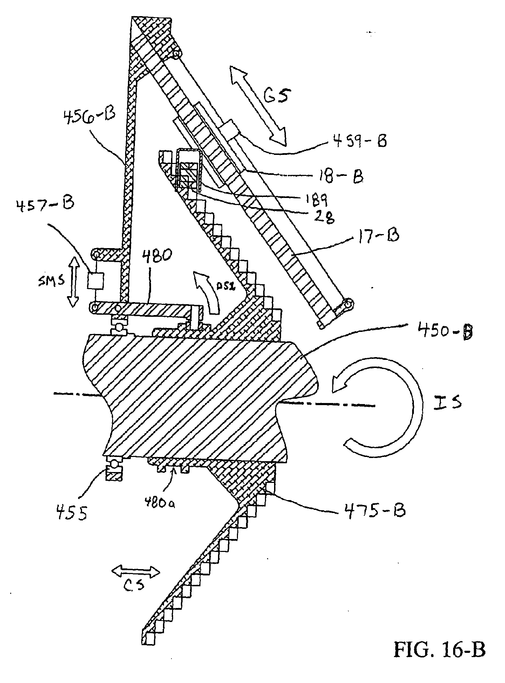

FIG. 16-B is a side elevational view of an embodiment similar to the stepped gear cluster of FIG. 3 wherein the stepped gear cluster has a cam assembly that enables stepped gear cluster shifts along the central axis of the cluster,

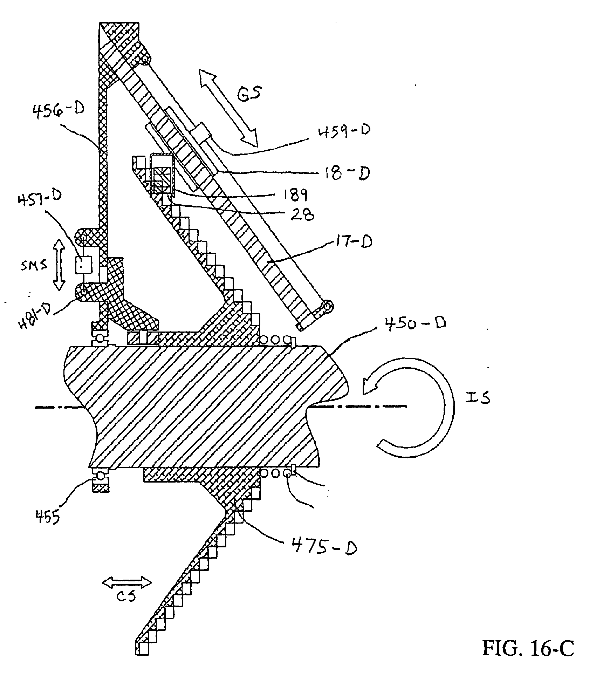

FIG. 16-C is a side elevational view of an embodiment similar to the stepped gear cluster of FIG. 3 wherein the stepped gear cluster has a cam assembly that shifts along the central axis of the cluster,

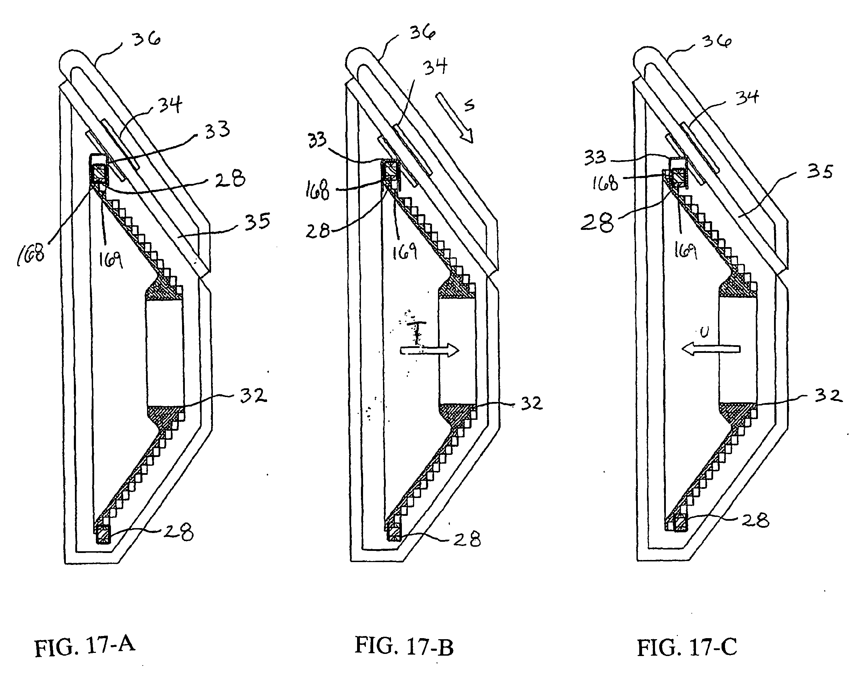

FIG. 17-A is an end cutaway view of the stepped gear cluster of FIG. 11 and an endless loop guide system,
FIG. 17-B is an end cutaway view of the stepped gear cluster of FIG. 11 and an endless loop guide shift combined with a carrier shift,
FIG. 17-C is an end cutaway view of the stepped gear cluster of FIG. 11 and an endless loop guide shift combined with a carrier shift,

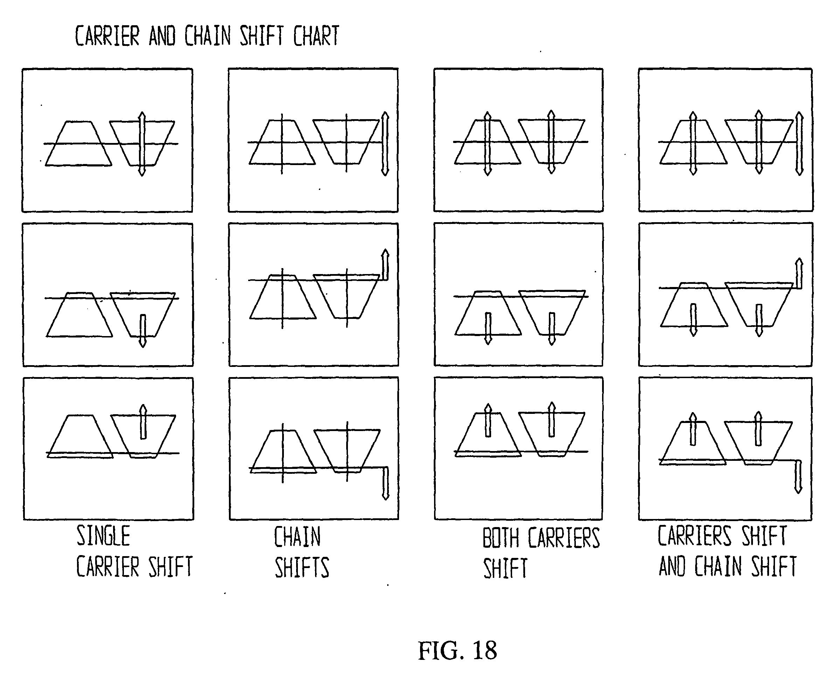

FIG. 18 is a block diagram showing varied carrier and chain shift combinations,

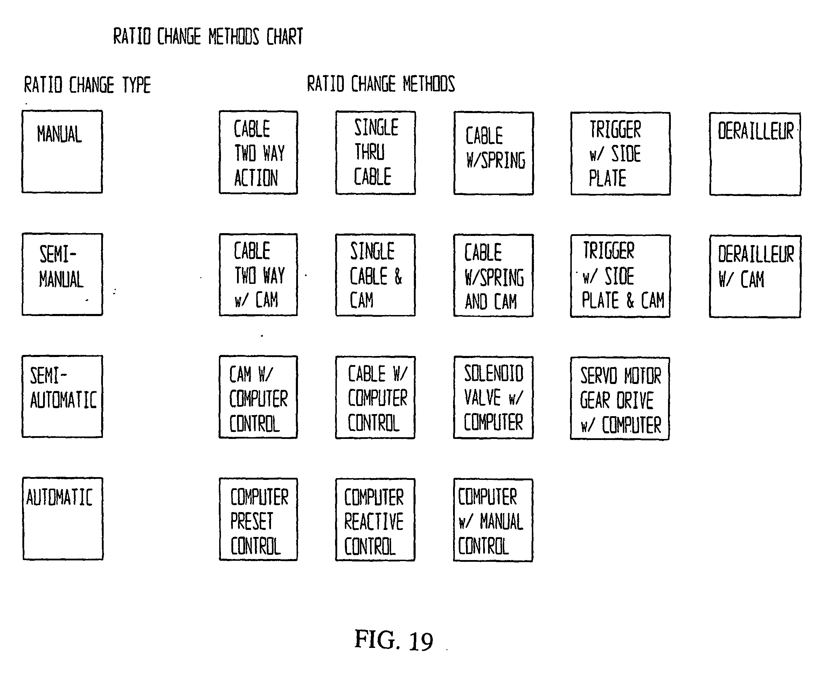

FIG. 19 is a block diagram listing of ratio change types and ratio change method means,

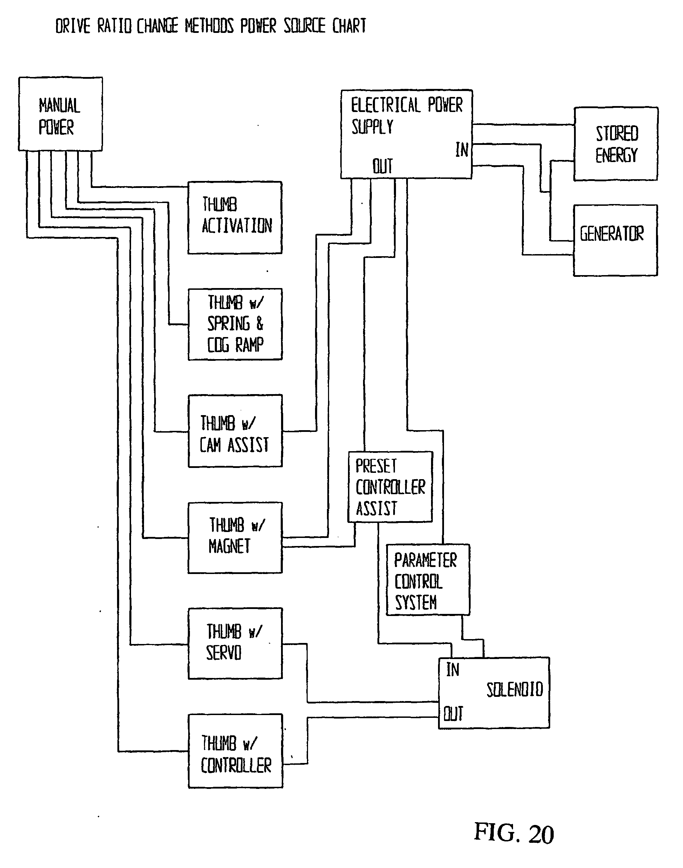

FIG. 20 is a block diagram listing of ratio change types and power supply means,

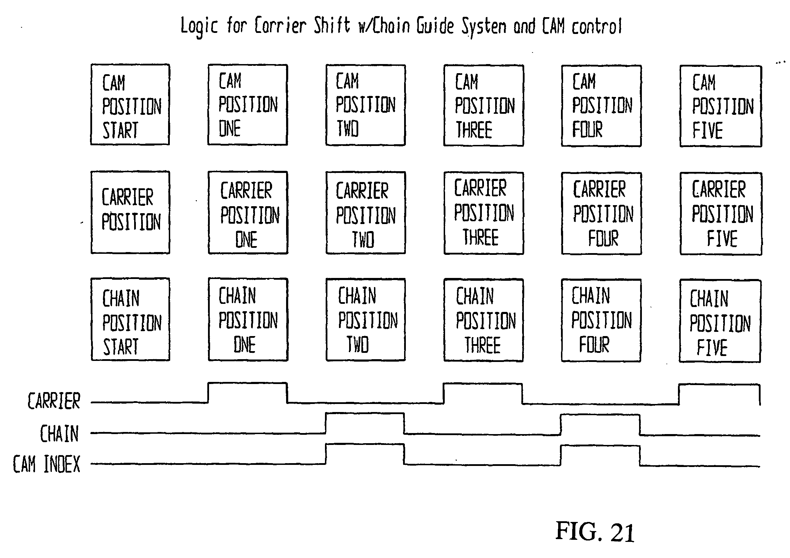

FIG. 21 is a block diagram representative of a carrier shifting sequence using a cam actuator,

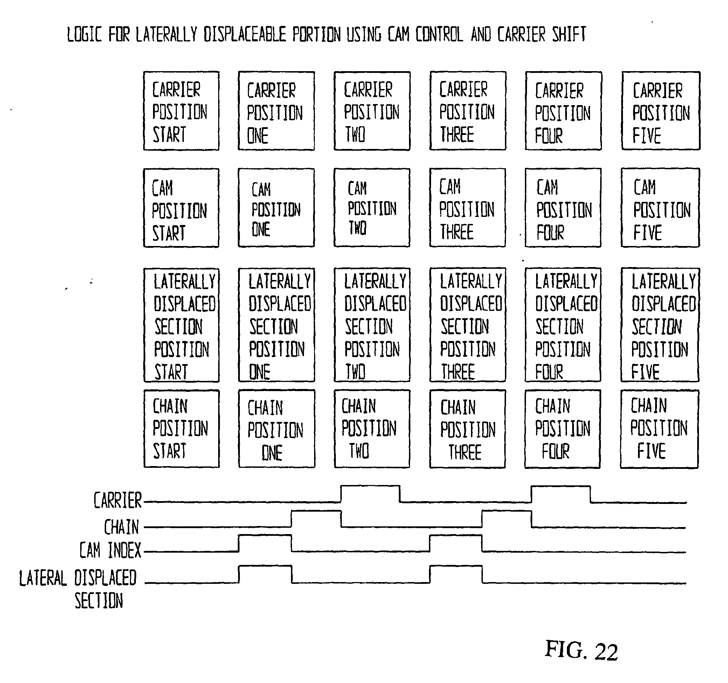

FIG. 22 is a block diagram representative of a carrier shifting and section shifting sequence using a cam actuator,

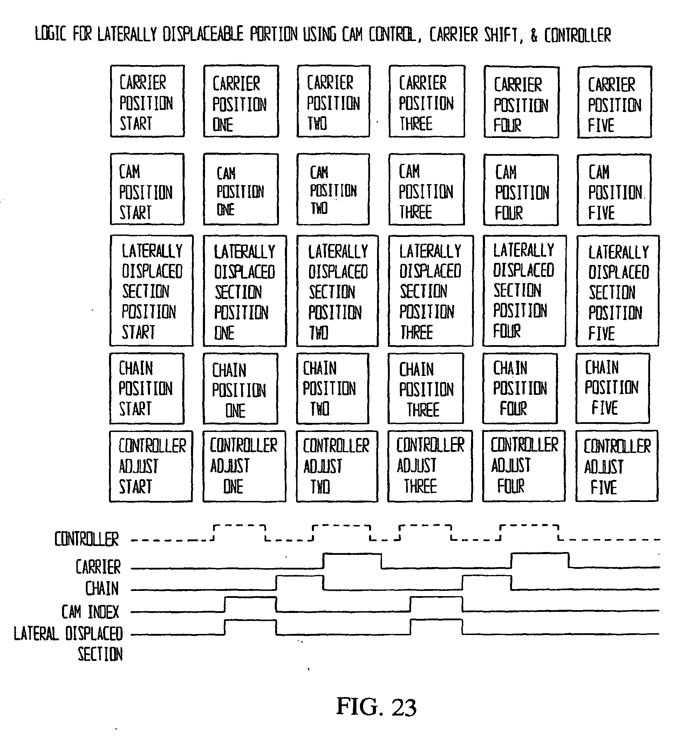

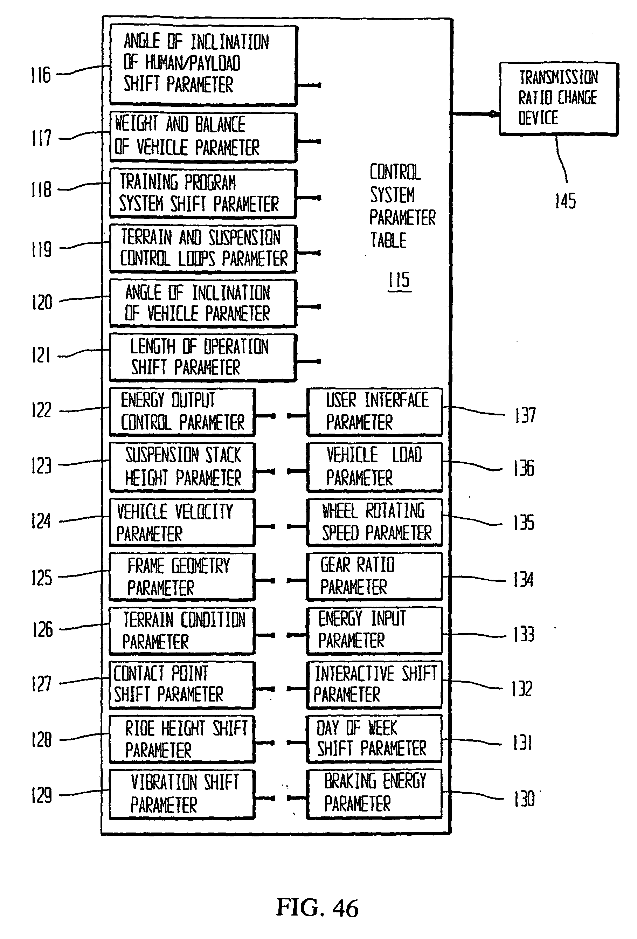

FIG. 23 is a block diagram representation of the shifting sequence of FIG. 46 with a controller,

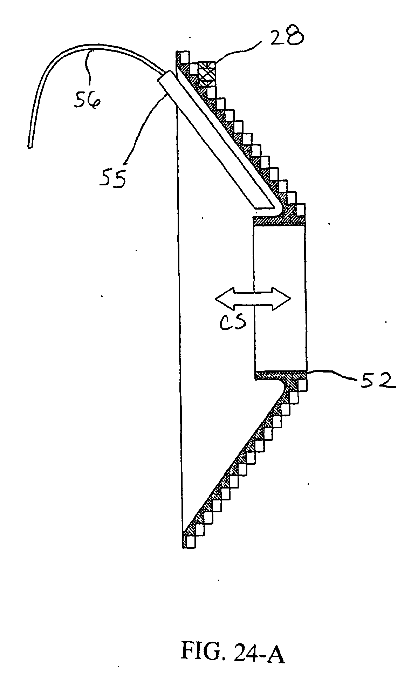

FIG. 24-A is an end cutaway view of a carrier with a positional sensor,

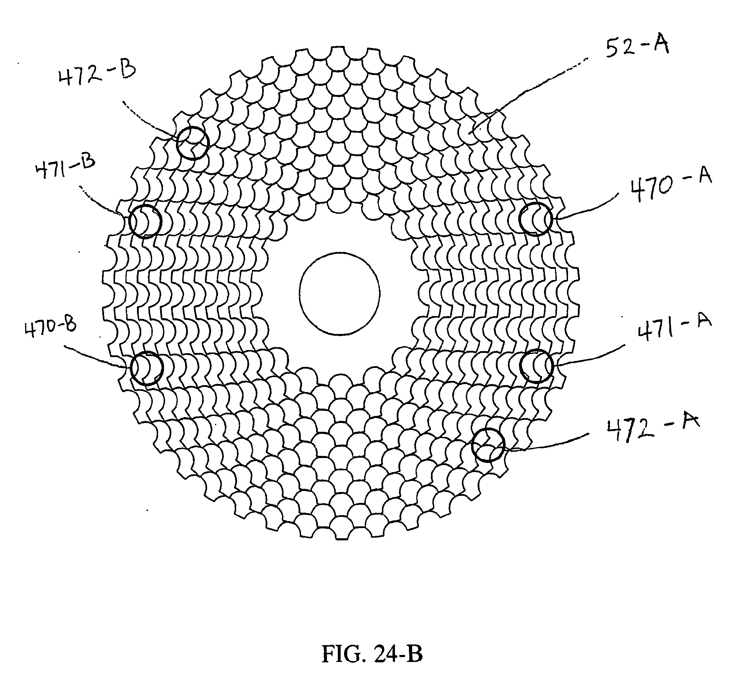

FIG. 24-B is a side elevational view of a stepped gear cluster with sensor locatable zones,

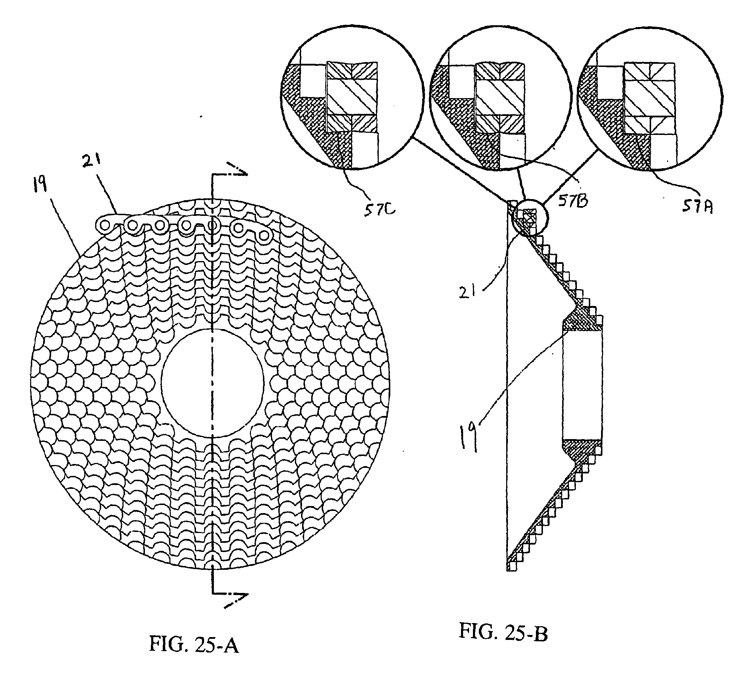

FIG. 25-A is a side elevation view of a stepped gear cluster and an endless element segment,
FIG. 25-B is a cross sectional view of the stepped gear cluster of FIG. 25-A and chain contact forms,

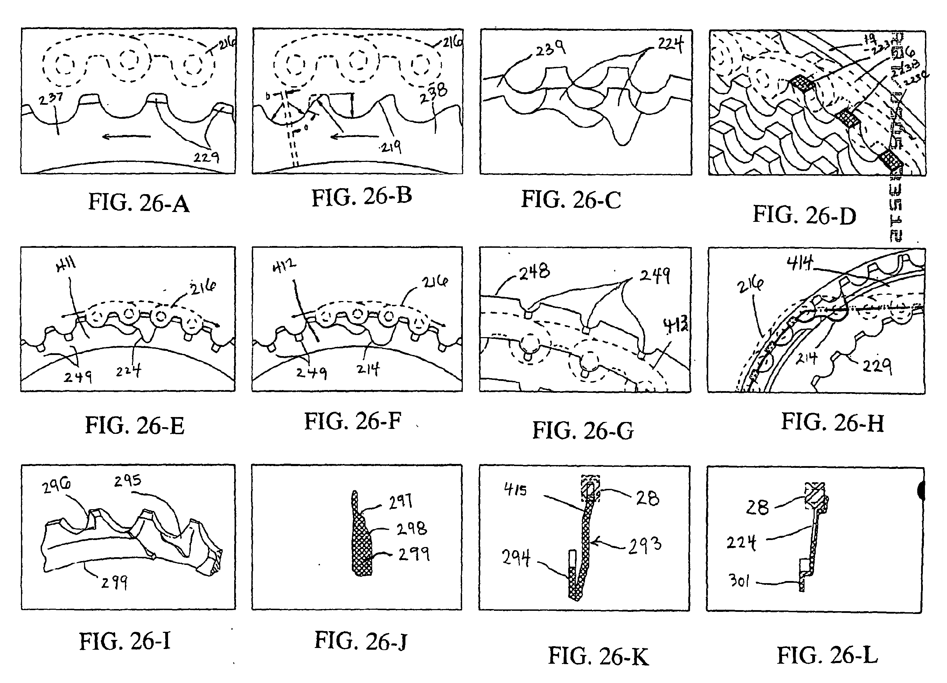

FIG. 26-A is a side sectional view of a tooth chamfer,
FIG. 26-B is a side sectional view of a sprocket modification,
FIG. 26-C is a side sectional view of a stepped carrier clearance,
FIG. 26-D is an isometric sectional view of a stepped carrier contact patches,
FIG. 26-E is a side sectional view of a mud clearance and chain clearance,
FIG. 26-F is a side sectional view of a mud clearance and another chain clearance,
FIG. 26-G is a side sectional view of a mud clearance on pin drive gear cluster,
FIG. 26-H is a side sectional view of a shift aide,
FIG. 26-I is an isometric sectional view of a tooth profile modification,
FIG. 26-J is an end cutaway sectional view of a element clearance profile cross section,
FIG. 26-K is an end cutaway sectional view of a element profile cross section,
FIG. 26-L is an end cutaway sectional view of a gear cluster cross section with clearance,

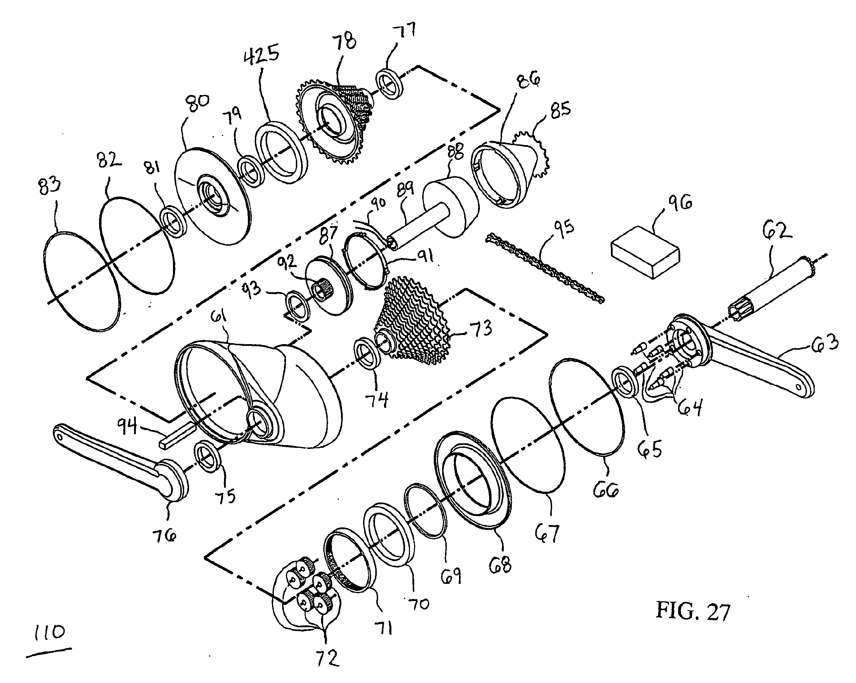

FIG. 27 is an exploded view of a structure for a transmission system assembly and showing its component parts (REFERENCE is Figure 14; from Improvements in Bicycle Systems and Method Provisional Application No. 60/610,944; Inventor: Darrell W. Voss; Filed September 20, 2004),

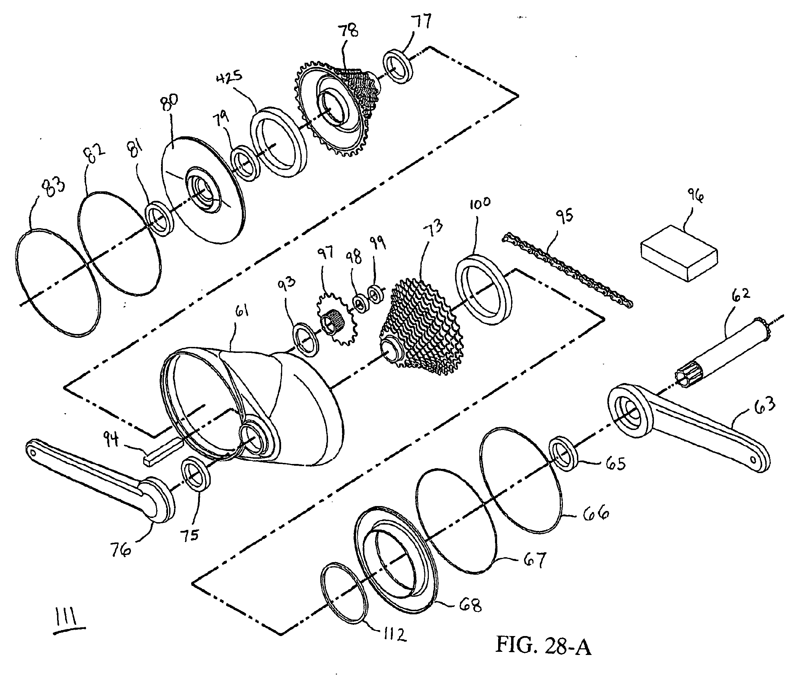

FIG. 28-A is an exploded view of a structure for a transmission system assembly showing its component parts without a force reduction device included,

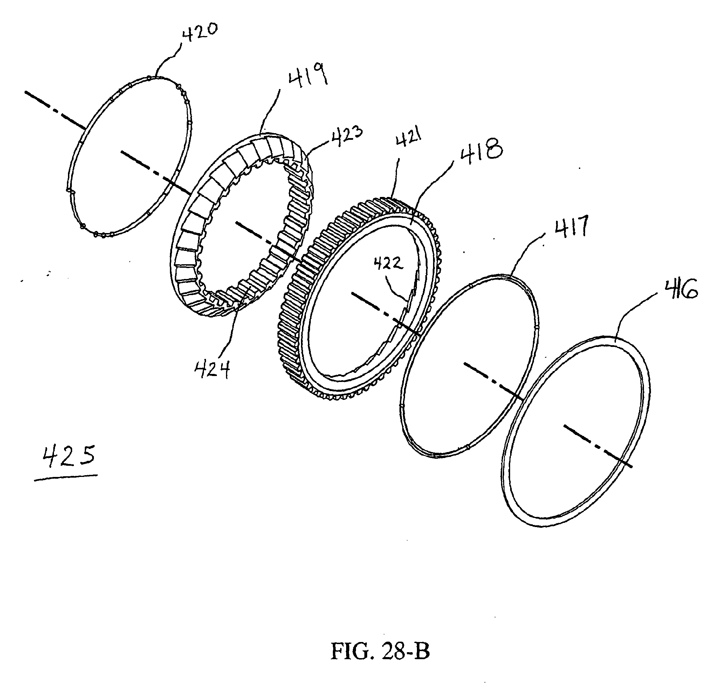

FIG. 28-B is an exploded view of the clutch assembly similar to FIG. 28-A,

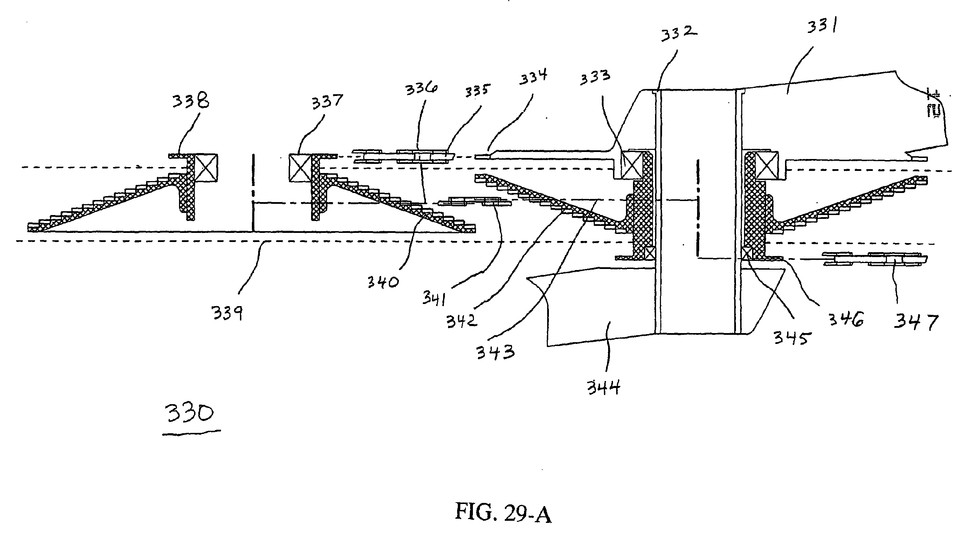

FIG. 29-A is a top sectional view of a transmission assembly,

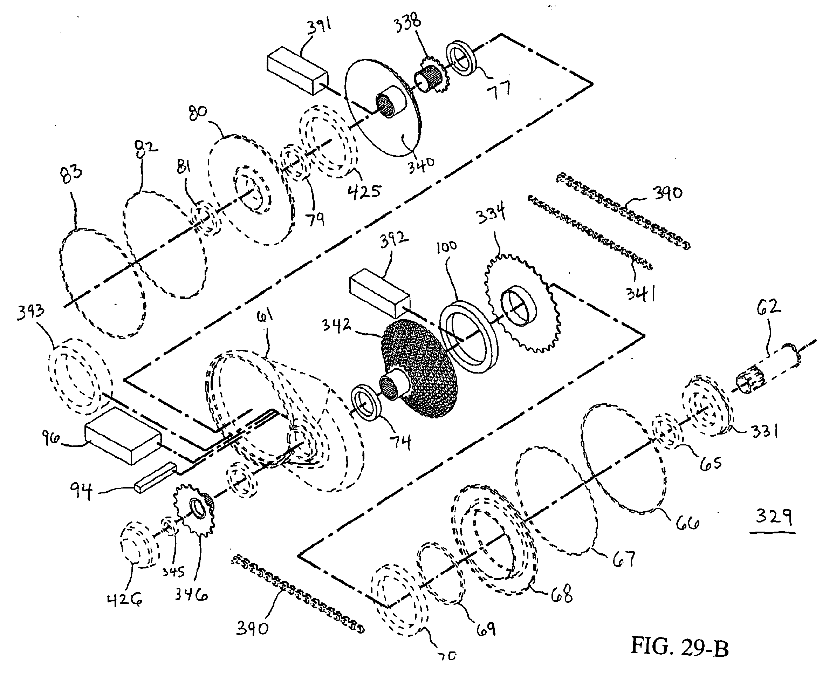

FIG. 29-B is an exploded view of a transmission assembly similar to FIG. 29-A,

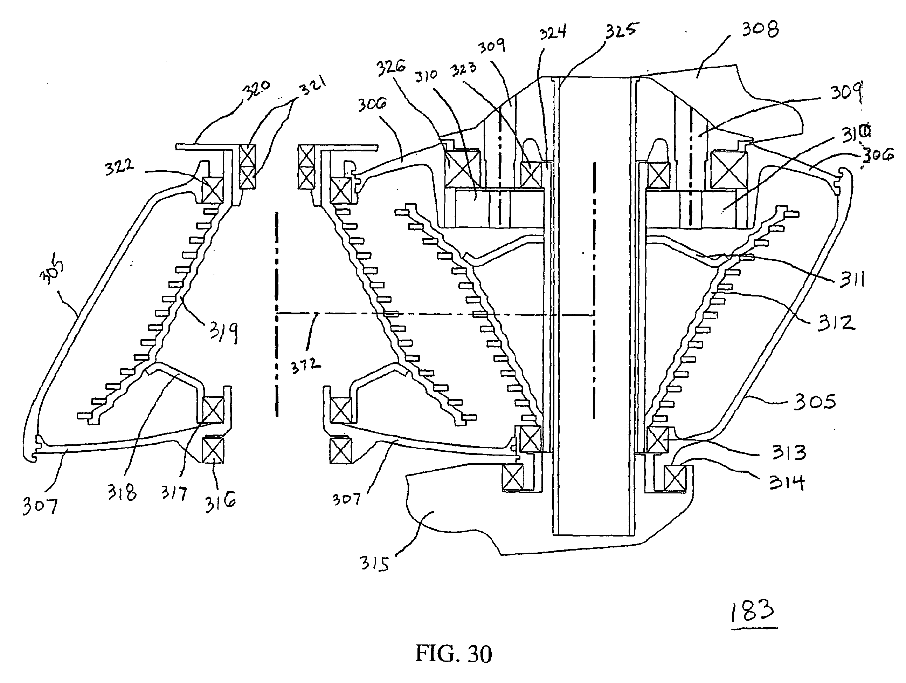

FIG. 30 is a top sectional view of a transmission assembly with a planetary assembly,

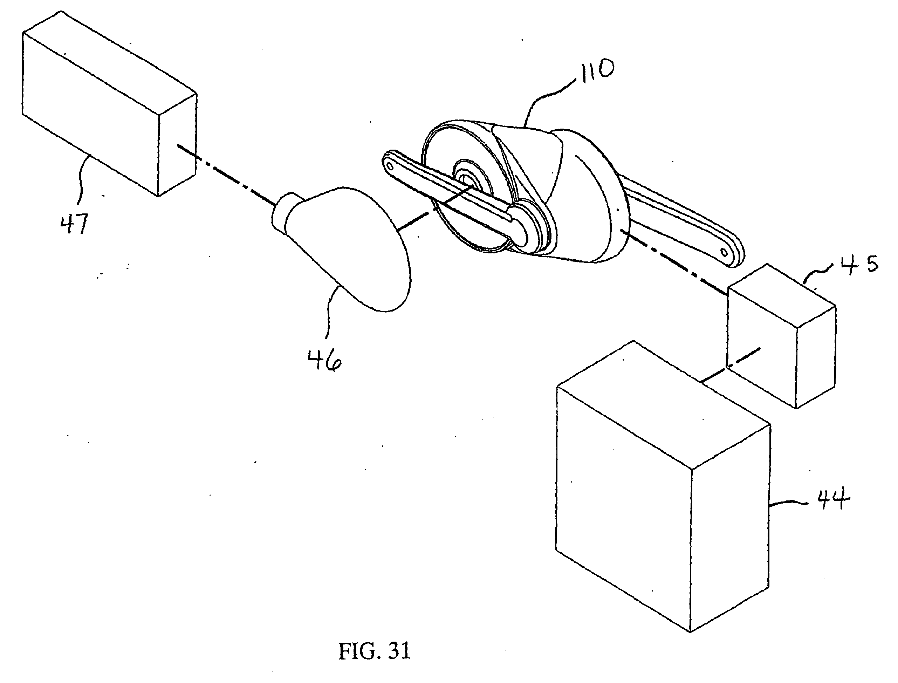

FIG. 31 is an isometric view depicting a transmission housing assembly with a motor supply, a clutch system, and an output system attached,

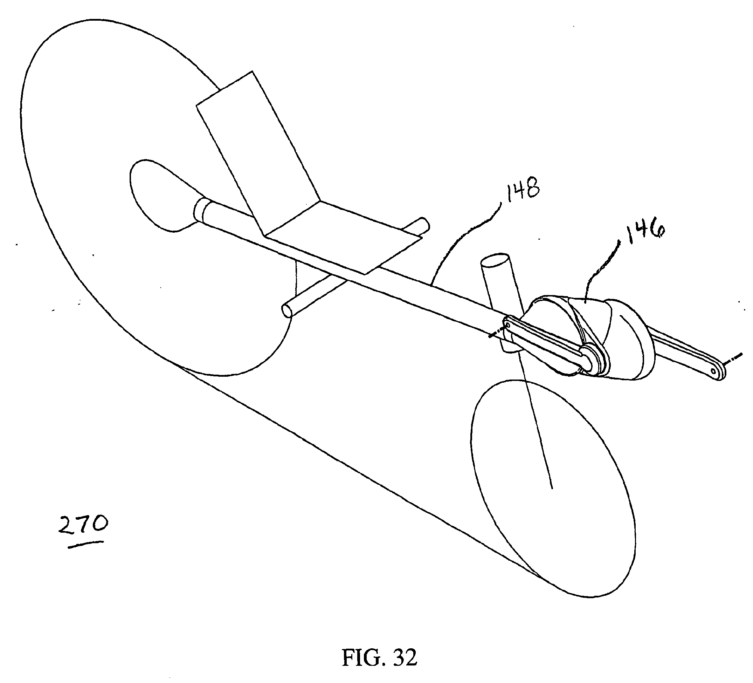

FIG. 32 is an isometric view of a representative recumbent bicycle bike frame and a transmission system disclosed herein,

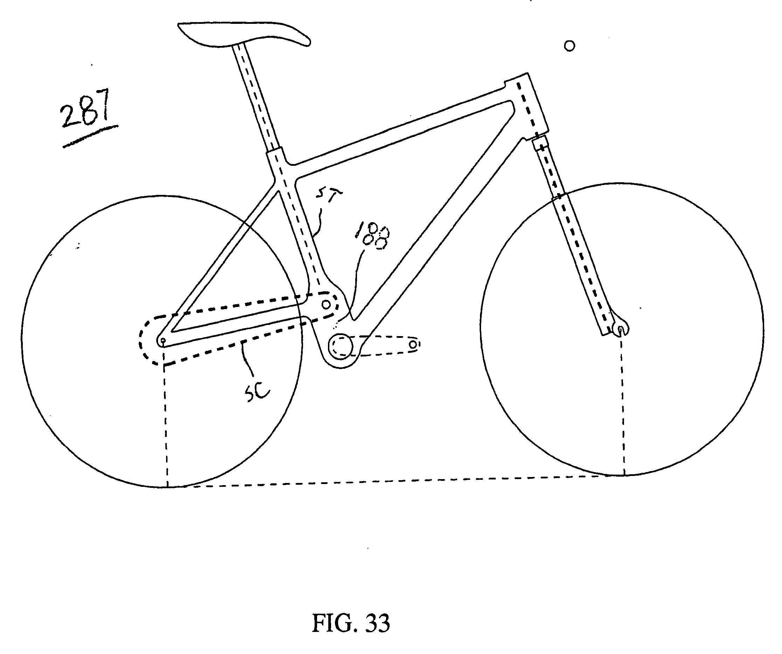

FIG. 33 is a side elevational view of a bicycle assembly with an embodiment of the invention incorporating the novel transmission system,

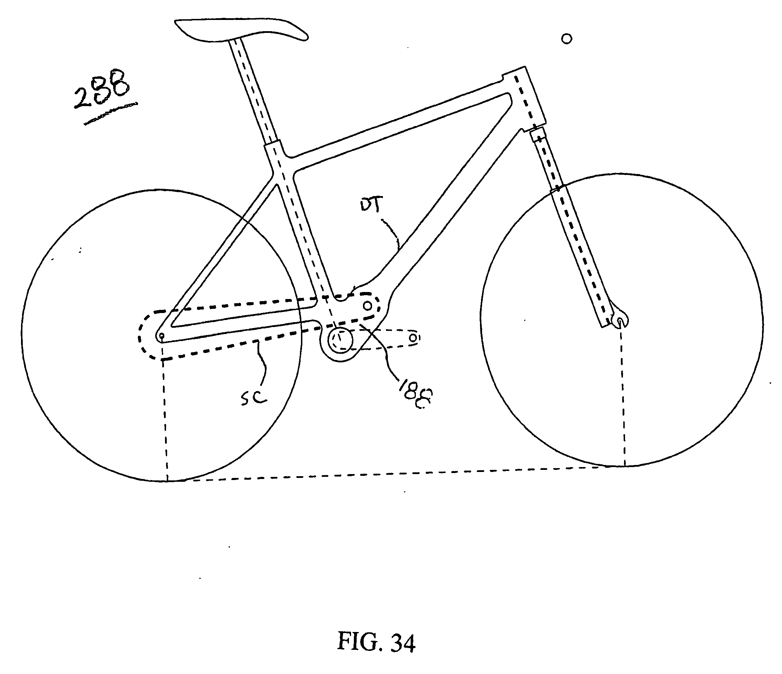

FIG. 34 is a side elevational view of a bicycle assembly with an embodiment of the invention incorporating the novel transmission system,

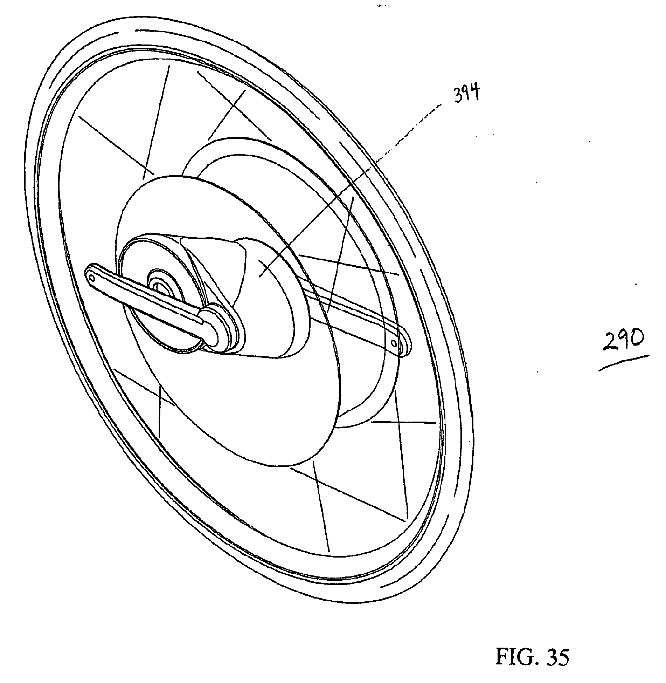

FIG. 35 is an isometric view of a transmission system similar to FIG. 27 inside a wheel assembly for a vehicle,

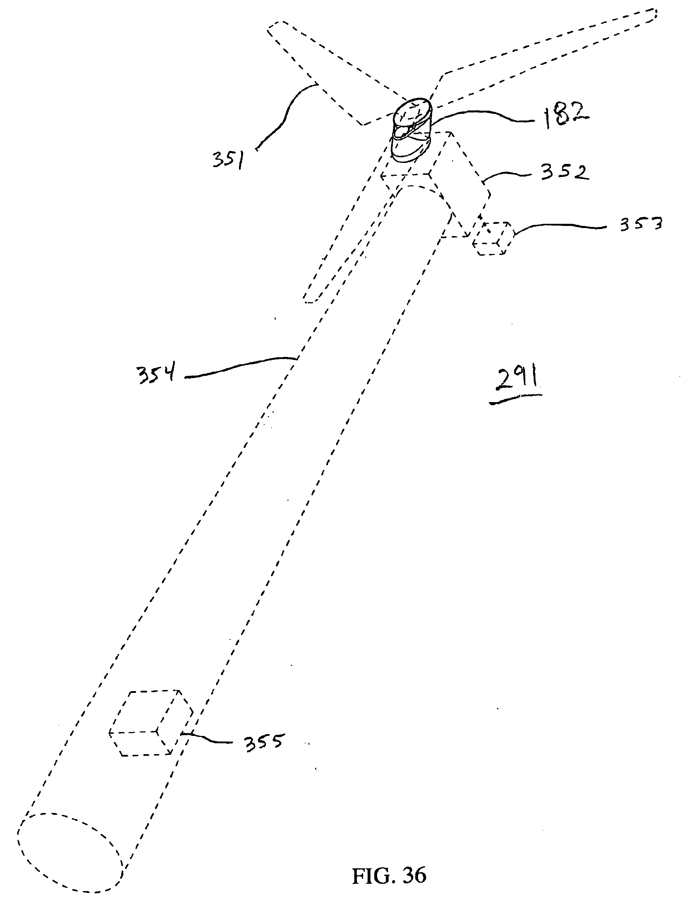

FIG. 36 is an isometric view of a transmission system applied to a wind powered energy generator device,

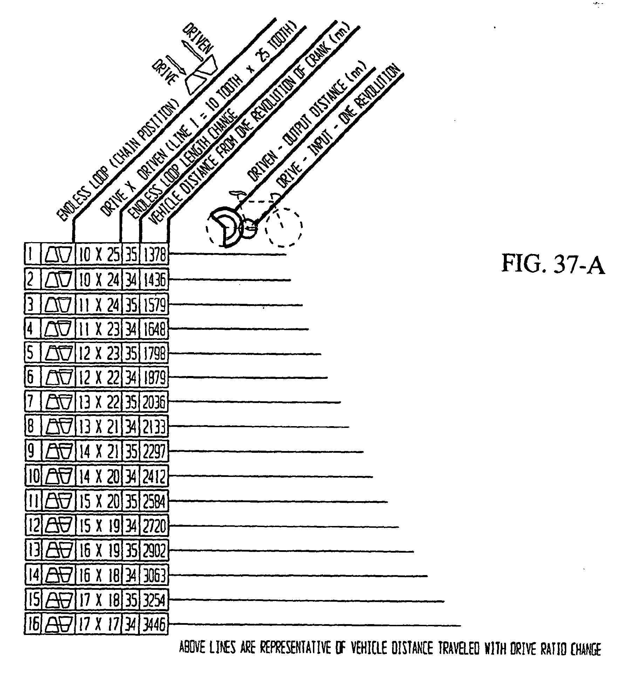

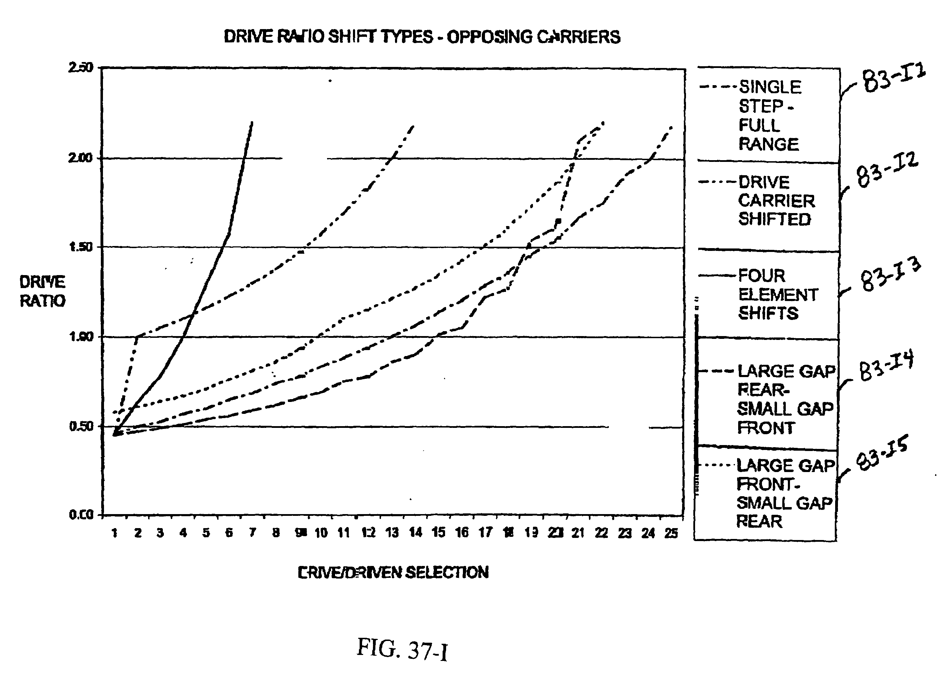

FIG. 37-A is a graphical chart illustrating a set of transmission ratios from ratio changes with drive and driven carriers incorporating sixteen elements each,

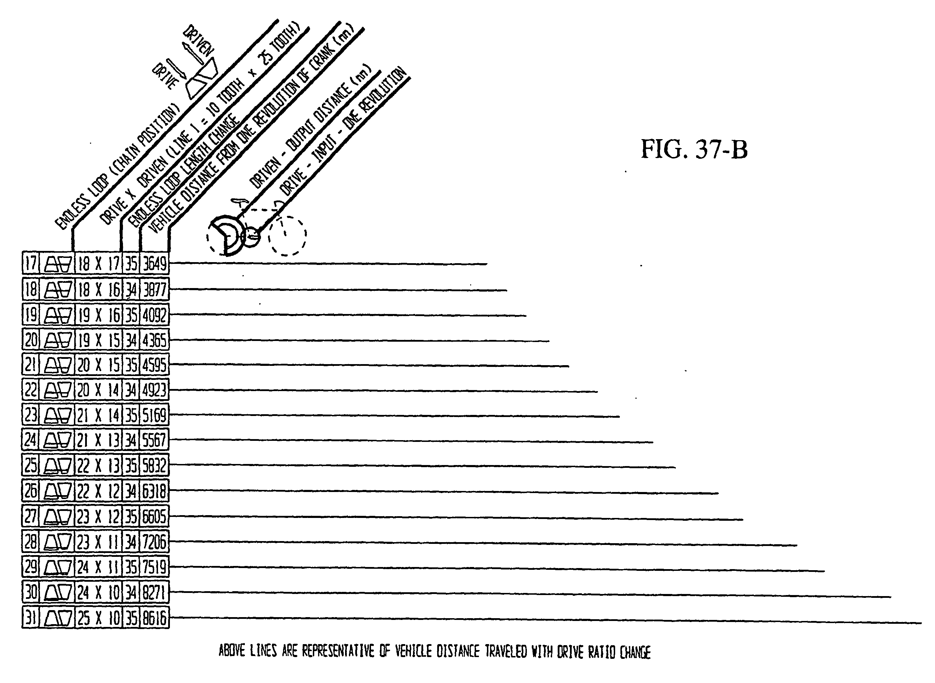

FIG. 37-B is a graphical chart illustrating a set of transmission ratios from ratio changes with drive and driven carriers incorporating sixteen elements each,

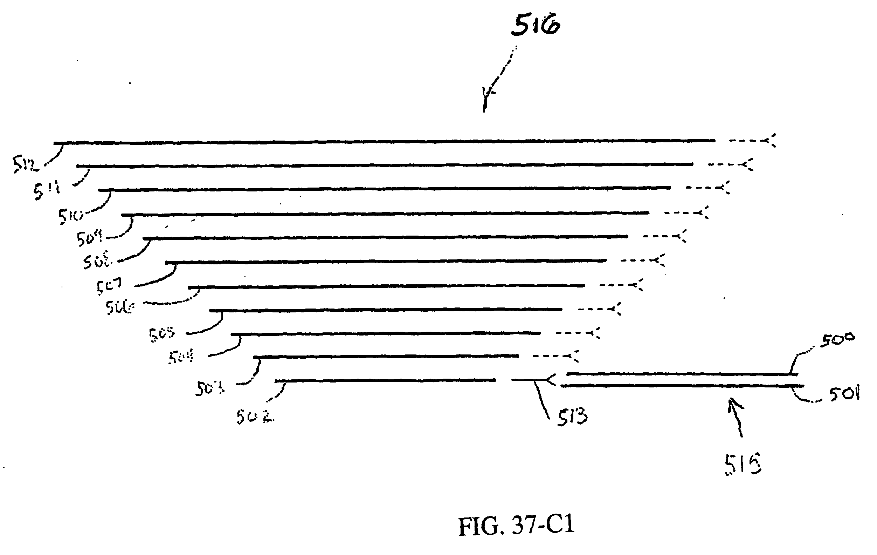

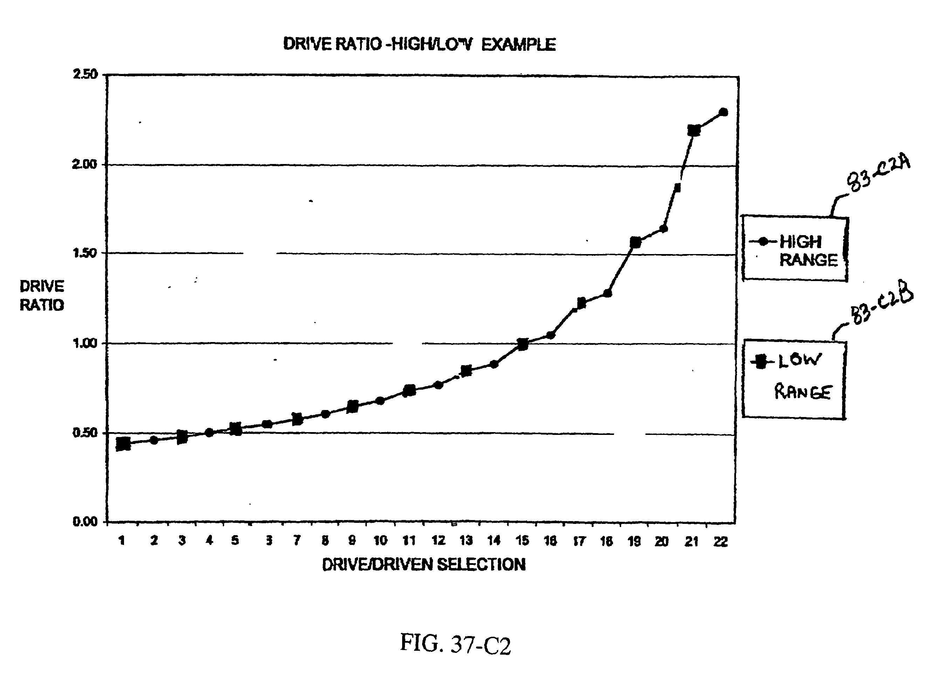

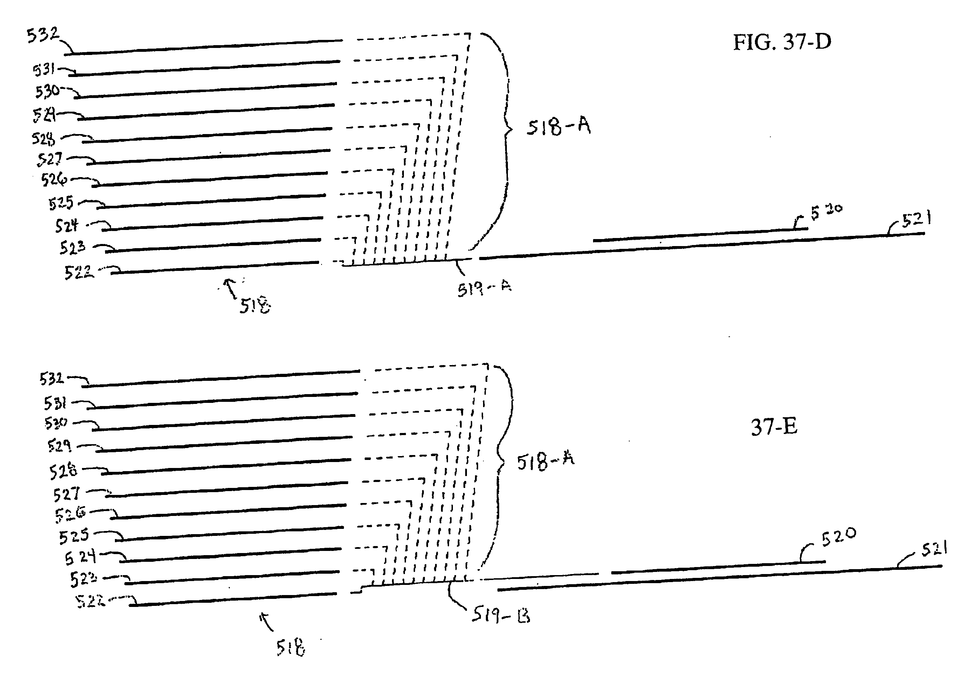

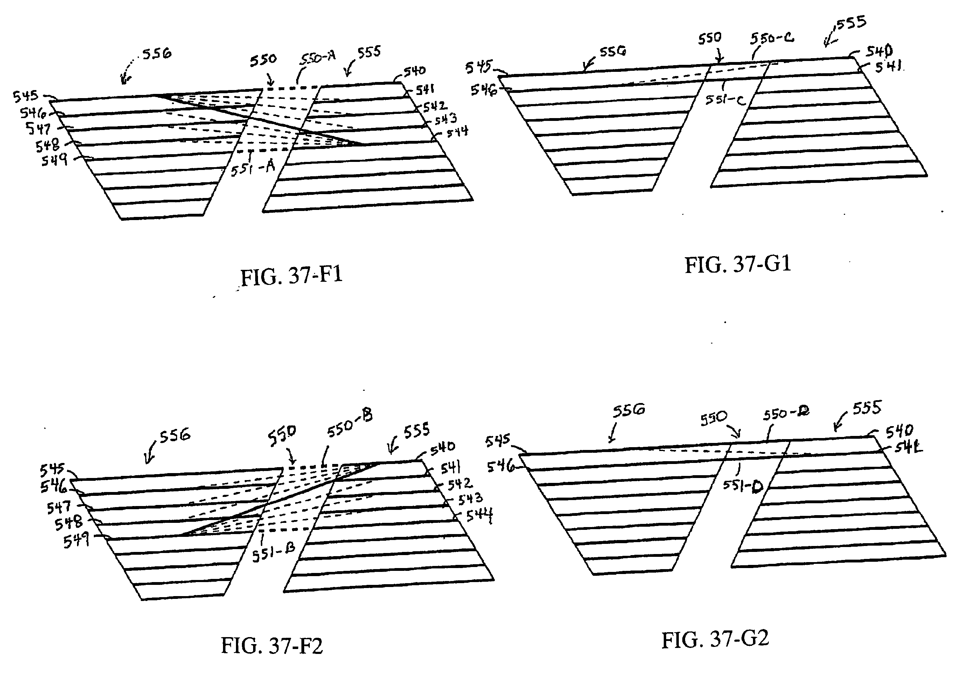

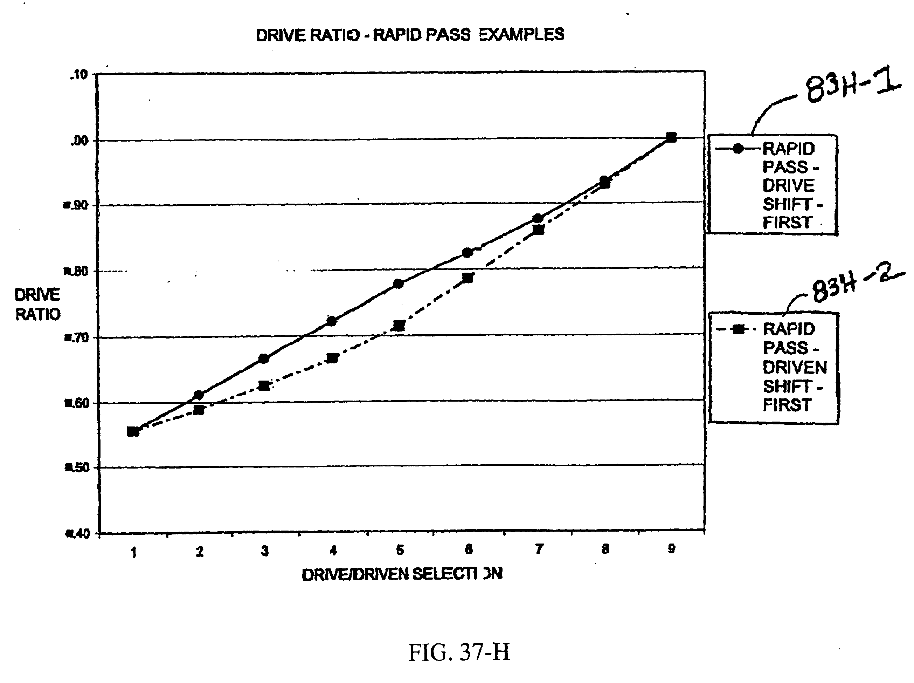

FIG. 37-C1 is a graphical chart illustrating a drive carrier incorporating two elements and a driven carrier incorporating eleven elements,
FIG. 37-C2 is a graphical chart illustrating an example drive ratio range for the carriers of FIG. 37-C1,
FIG. 37-D is a graphical chart illustrating a drive carrier incorporating two elements and a driven carrier incorporating eleven elements,
FIG. 37-E is a graphical chart illustrating the drive and driven carriers of FIG. 83-D shifted,
FIG. 37-F1 is a graphical chart illustrating a drive and driven carrier shift pattern,
FIG. 37-F2 is a graphical chart illustrating a drive and driven carrier shift pattern,
FIG. 37-G1 is a graphical chart illustrating the a drive and driven carrier shift pattern,
FIG. 37-G2 is a graphical chart illustrating the drive and driven carrier shift pattern,
FIG. 37-H is a graphical chart illustrating the drive ratio differences for a rapid pass over shift on a drive and a driven carrier,
FIG. 37-I is a graphical chart illustrating drive ratio shift patterns for drive and driven carriers,

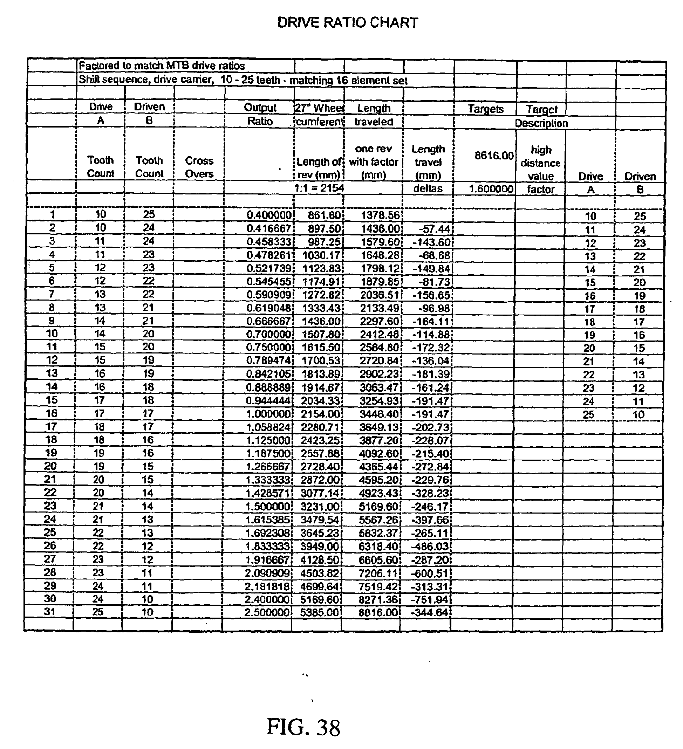

FIG. 38 is the data chart illustrating changes in length of travel per the transmission ratios of FIG. 37-A and 37-B,

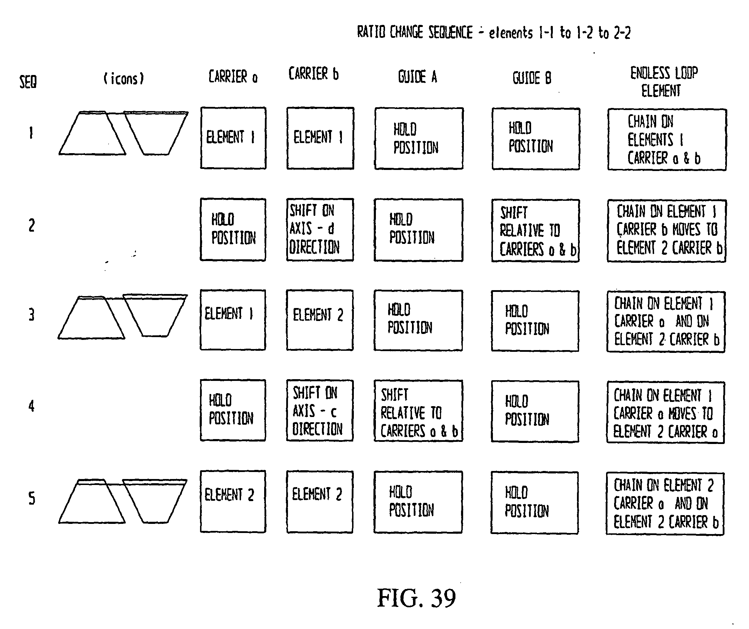

FIG. 39 is a block diagram detailing a ratio change sequence for carrier elements from 1-1 to 1-2 to 2-2,

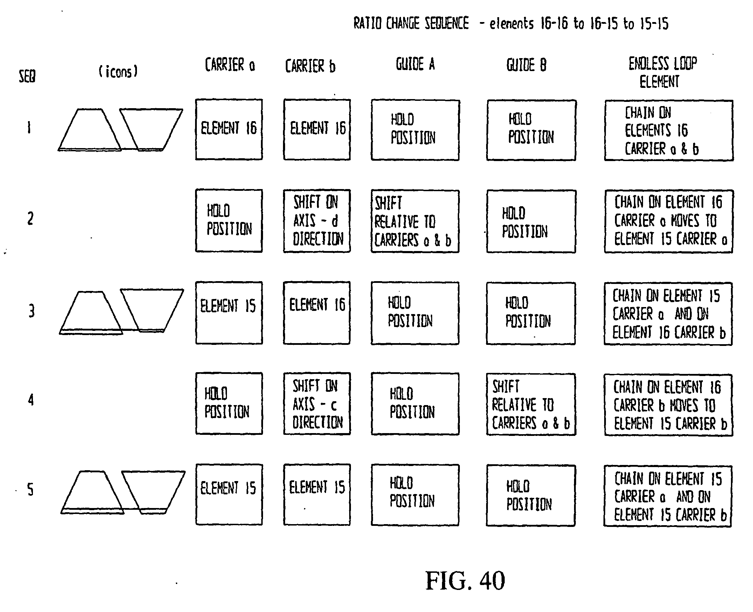

FIG. 40 is a block diagram detailing a ratio change sequence for carrier elements from 16-16 to 15-16 to 15-15,

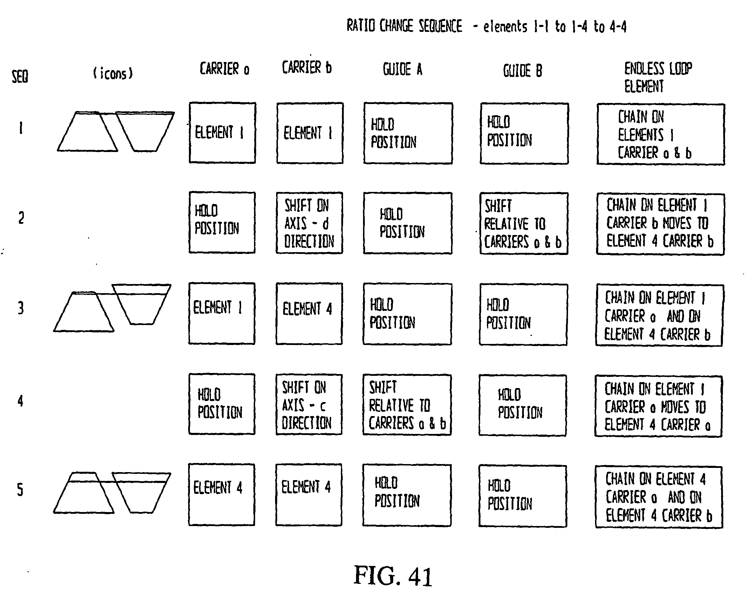

FIG. 41 is a block diagram detailing a ratio change sequence for multiple carrier elements from 1-1 to 1-4 to 4-4,

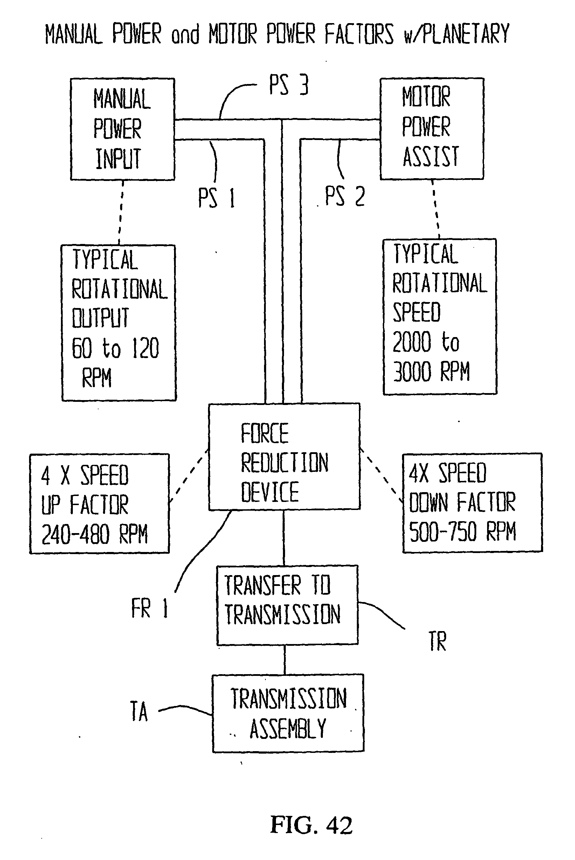

FIG. 42 is a graphical chart illustration of the transmission system incorporating human power and motor power assist,

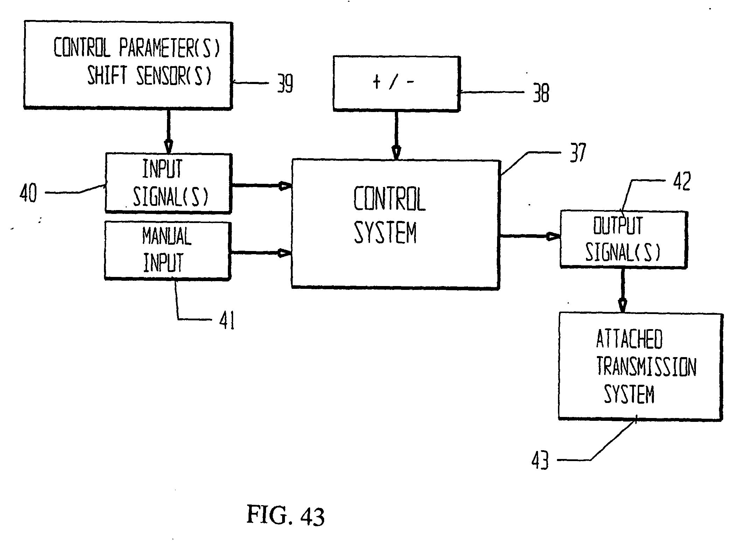

FIG. 43 is a simplified block diagram of a transmission control system,

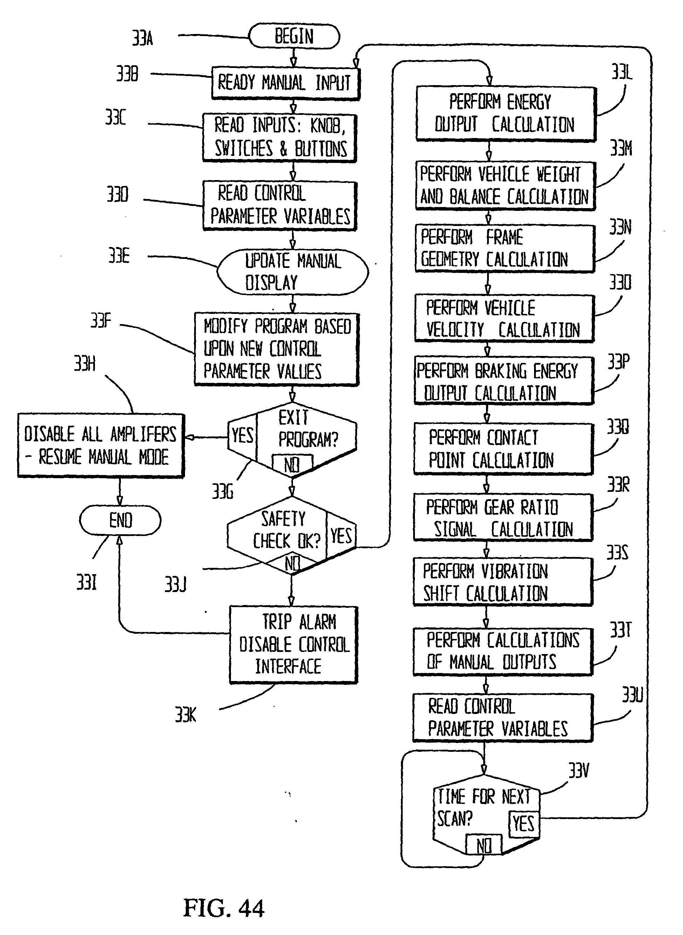

FIG. 44 is a block diagram representation of a decision sequence chart,

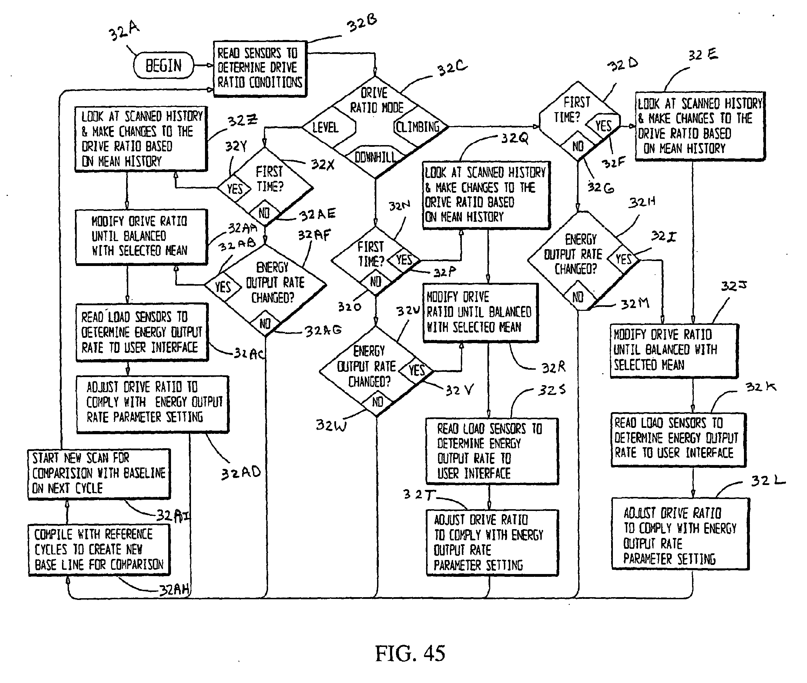

FIG. 45 is a block diagram representative of a decision tree chart,
FIG. 46 is a block diagram of parameter inputs for a transmission control system,

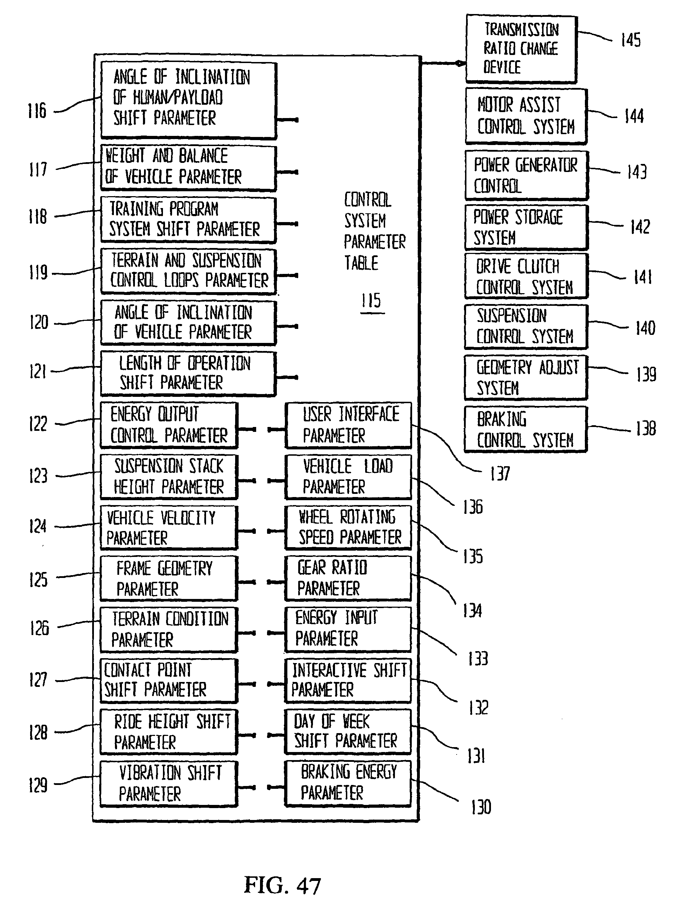

FIG. 47 is a block diagram of parameter inputs for multiple vehicle devices,

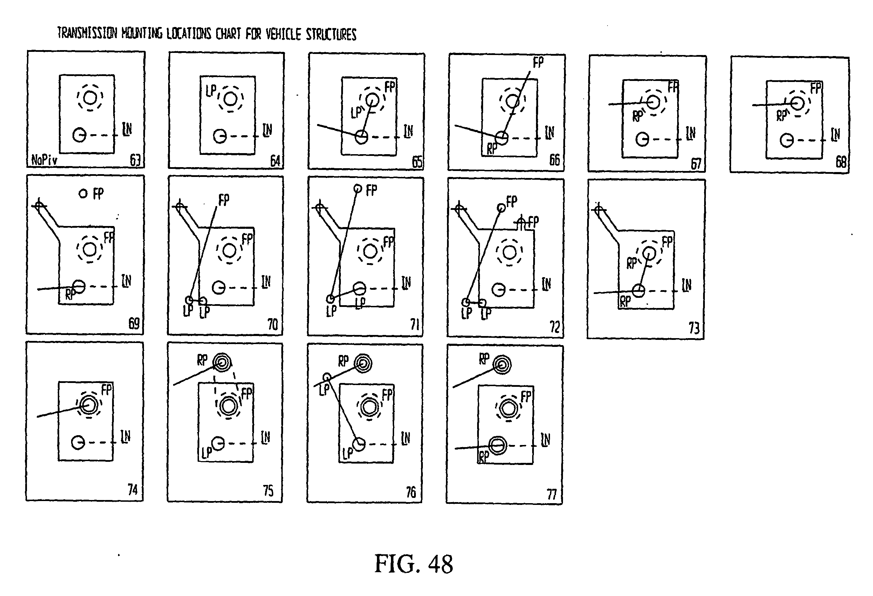

FIG. 48 is a chart for examples of transmission locations on frames and suspension types,

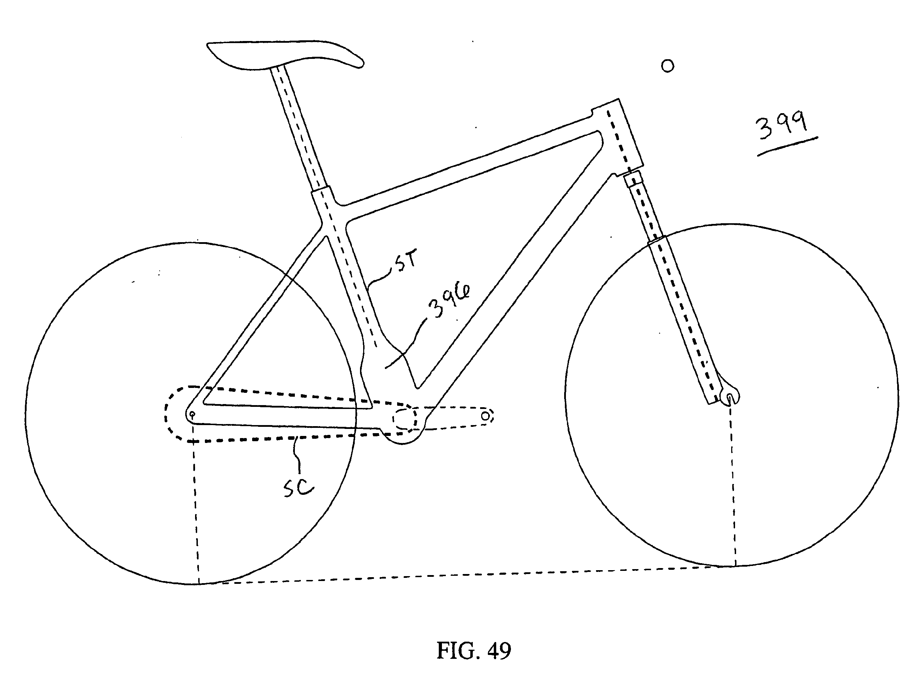

FIG. 49 is a side elevational view of a bicycle with an embodiment of the invention incorporating the novel transmission system shown in FIG. 29,

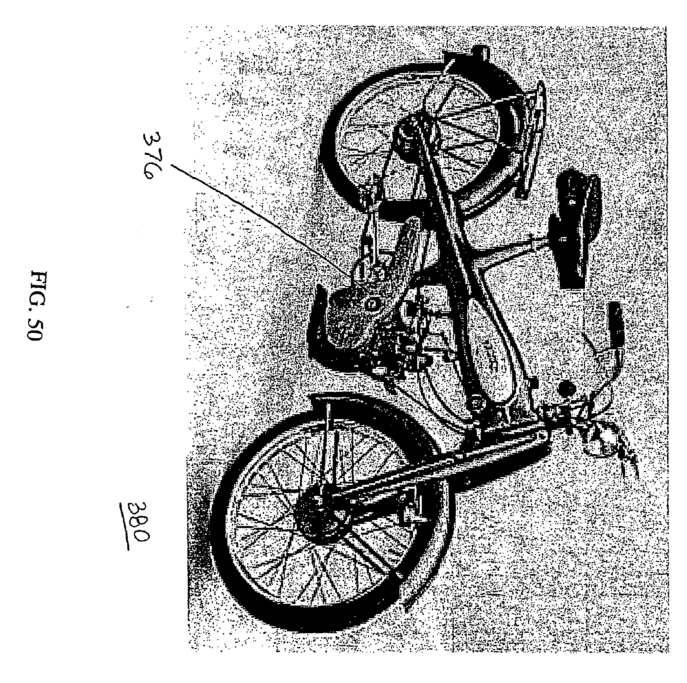

FIG. 50 is a side elevational view of a moped with an embodiment of the invention incorporating the novel transmission system shown in FIG. 29,

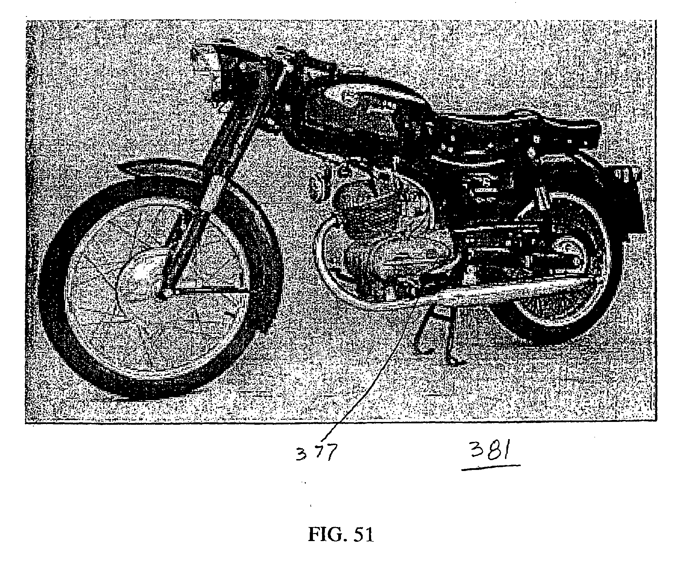

FIG. 51 is a side elevational view of a motorcycle with an embodiment of the invention incorporating the novel transmission system shown in FIG. 29,

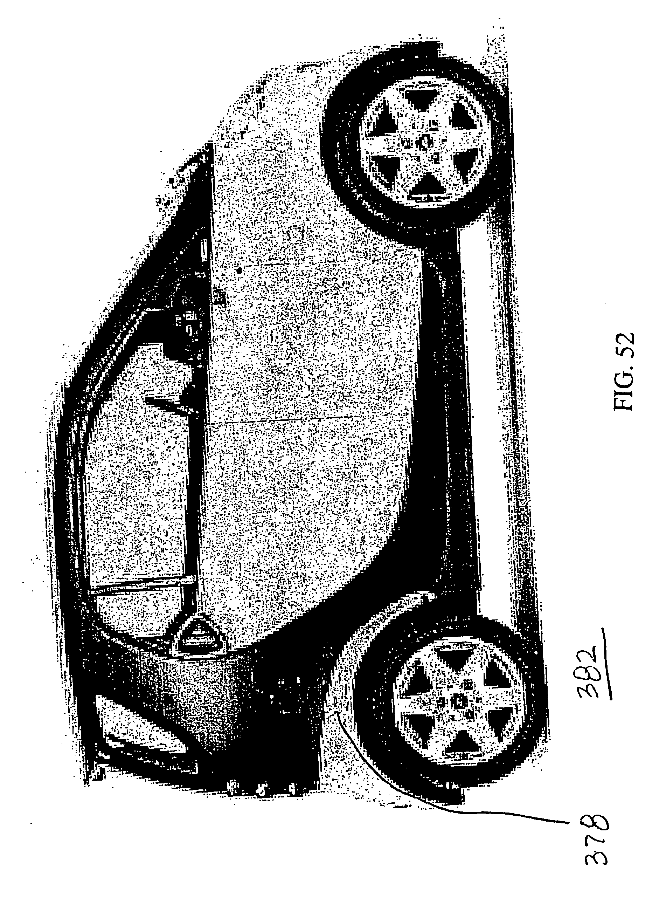

FIG. 52 is a side elevational view of a lightweight vehicle with an embodiment of the invention incorporating the novel transmission system shown in FIG. 29,

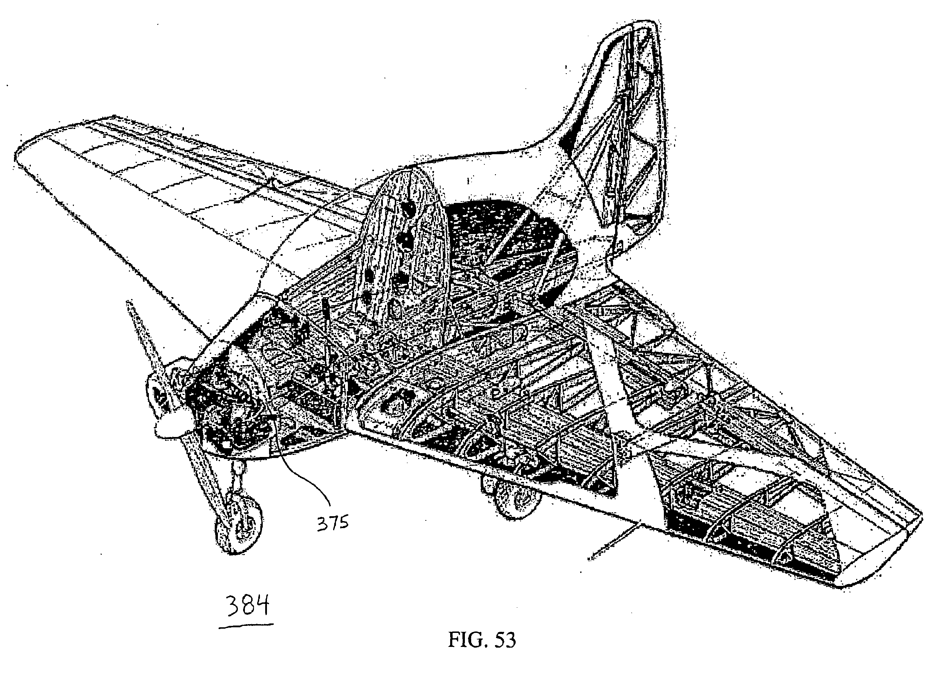

FIG. 53 is a perspective view of an air vehicle assembly with an embodiment of the invention incorporating the novel transmission system shown in FIG. 29.

### DETAILED DESCRIPTION OF THE PREFERRED EMBODIMENT

Referring now to the drawings for the purpose of illustrating a preferred embodiment of the present invention only, and not for purposes of limiting the same:

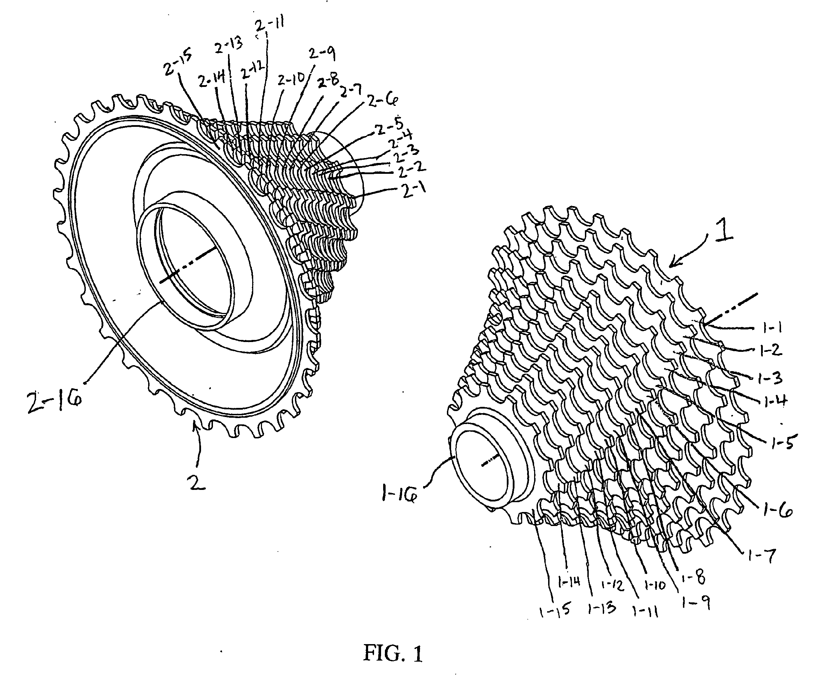

FIG. 1 is an embodiment of a transmission carrier 1 having a plurality of fixed and coaxial ratioed drive elements of decreasing diameters located essentially parallel to a transmission carrier 2 having a plurality of fixed coaxial driven elements of decreasing diameters facing the opposite direction of transmission carrier 1. Transmission drive carrier 1 has fixed drive elements 1-1, 1-2, 1-3, 1-4, 1-5, 1-6, 1-7, 1-8, 1-9, 1-10, 1-11, 1-12, 1-13, 1-14, and 1-15 and each evenly spaced drive element is a smaller diameter in order from fixed drive element 1-1 through 1-15. Transmission drive carrier 1 has an inner diameter hub 1-16 and is fixable to an axle for rotation of the carrier around the carrier's central axis. Transmission carrier 2 has fixed driven elements 2-1, 2-2, 2-3, 2-4, 2-5, 2-6, 2-7, 2-8, 2-9, 2-10, 2-11, 2-12, 2-13, 2-14, and 2-15 and each driven element is a larger diameter in order from fixed drive element 2-1 through 2-15. Transmission driven carrier 2 has an inner diameter hub 2-16 and is fixable to an axle for rotation of the carrier around the carrier's central axis.

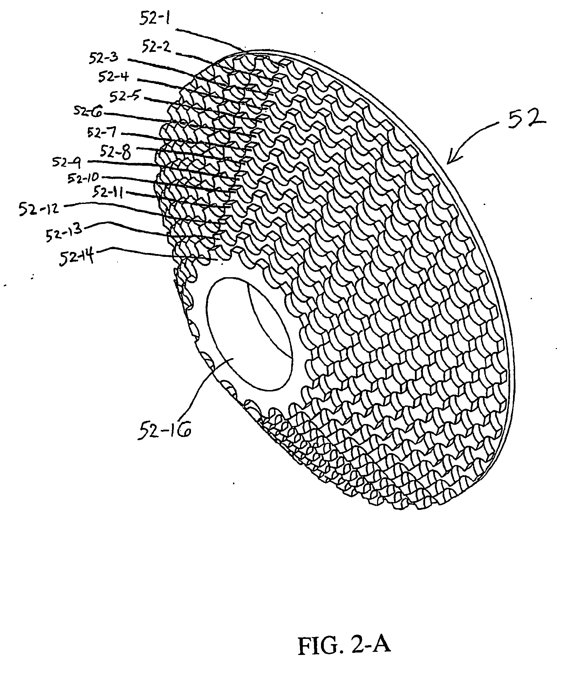

In Fig. 2-A, a transmission drive carrier 52, as shown, is a stepped gear cluster comprising fourteen fixed drive ring elements 51-1, 52-2, 52-3, 52-4, 52-5, 52-6, 52-7, 52-8, 52-9, 52-10, 52-11, 52-12, 52-13, and 52-14. Transmission drive carrier 52 has an inner diameter hub 52-16 and is fixable to an axle for rotation of the carrier around the carrier's central axis. A stepped gear cluster is defined as a gear cluster wherein each of the fixable elements have no spacing between the other fixed drive elements, unlike the spacing between fixable elements as shown in FIG. 1. Typical gear clusters have spacing between the gear toothed elements to allow the endless loop element, such as a chain, to fit around both sides and the outer profile of the fixable element which results in three contact surfaces. The stepped gear cluster fixable elements only require one contact surface which is the outer profile. The fixable elements each have a circumferential profiled shape that is capable of transferring loads to an endless loop element. The circumferential profiled shapes may be made of, but are not limited by, the following forms: gear involute curve, sprocket curve, radiuses, splines, and other shapes that can engage an endless loop element having a matching or similar profile.

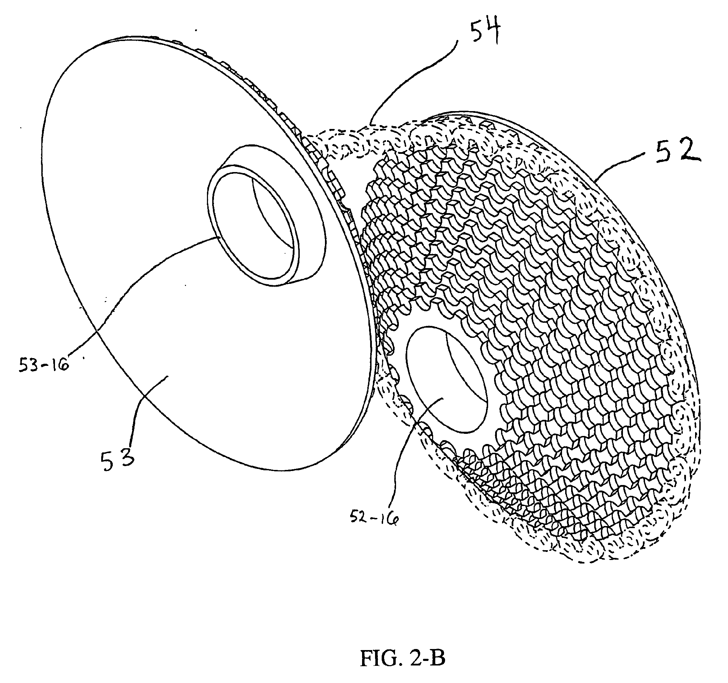

In FIG. 2-B, transmission drive carrier 52 is coupled by endless loop element 54 which is representative of an endless series of chain links to transmission drive carrier 53 which is also a stepped gear cluster. Transmission input force in the form of rotational energy is transferred from transmission drive carrier 52 by the coupling of the endless loop element 54 to the transmission driven carrier 53 which provides a transmission drive to driven ratio output. The stepped gear cluster incorporates profiled steps of varying circumferential length aligned along the central axis of the carrier. The profiled steps do not have spaces between the elements. The stepped gear cluster series of profiled steps have increasing or decreasing diameters in an approximately conical shape. The step profile circumferential center points may be offset or concentric to the carrier central axis. The step profiles are circular in form, but may be elliptical to the central axis and vary in their center point relationship to each other. The step profile heights may be irregular or equal in height. The step profiles may have irregular or have matching circumferential patterns. The step profile may include clearanced sections, undercuts, relief cutouts, holes through, chamfers, and notches as detailed in prior art references relating to bicycle sprockets and their shapes. The profiles around the circumference of the step engage the profiles of the endless loop element 54 individual links to transfer the input force of the transmission drive carrier 52 to the transmission driven carrier 53 in an efficient manner.

FIG. 3 depicts the transmission carriers of FIG. 1 wherein transmission carrier 1 is coupled by endless chain 3 to transmission carrier 2. Endless chain 3 is representative of an endless series of chain links. Transmission input force in the form of rotational energy transferred from transmission carrier 1 by the coupling of the endless loop element 3 to the transmission carrier 2 provides a transmission drive to driven ratio output.

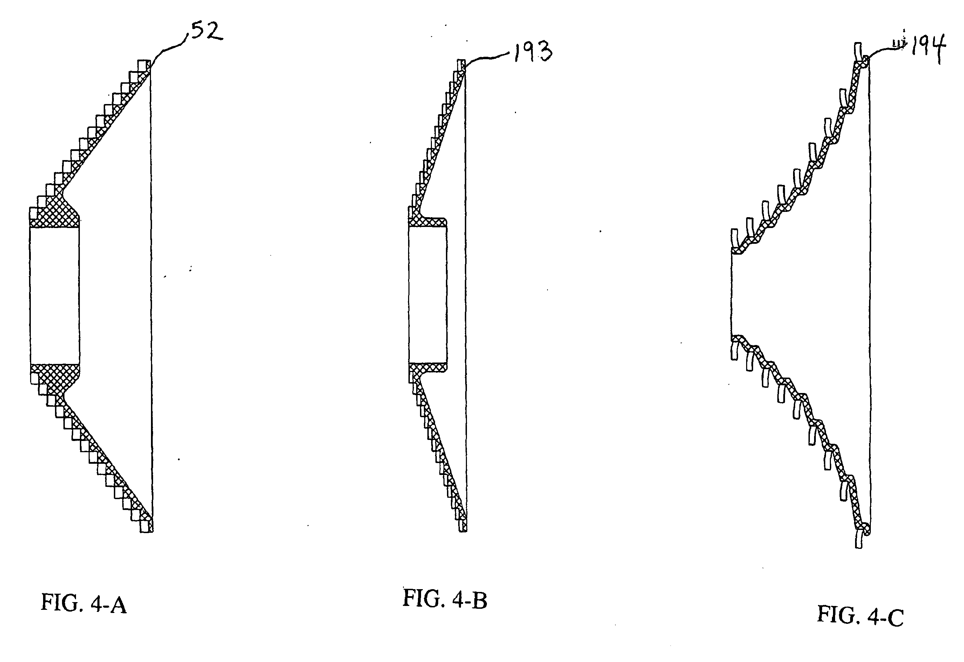

The flexibility of the invention is further shown in the transmission carrier shapes as shown in FIGS.4-A, 4-B, and 4-C. Transmission carriers may be constructed in different shapes, sizes, diameters. As shown in FIG. 4-A, transmission drive carrier 52 has fourteen stepped profile diameters. FIG. 4-B displays a transmission carrier 193 which is a stepped gear cluster with fourteen stepped profiles and yet is much narrower in width than transmission drive carrier 52. Fig. 4-C displays a transmission carrier 194 with nine fixable elements with spacing between the elements. These transmission carrier shapes show the diversity and versatility of the invention's scope.

Additional embodiments of the stepped gear cluster design are also possible.

In FIG. 5-A, a modified form of a stepped gear cluster is introduced. Stepped gear cluster 196 has a moveable portion 292. Moveable portion 292 is created by slitting the stepped gear cluster 196 in a form to allow flexible movement of moveable portion 292. Cam actuator 191 moves the moveable portion 292. The stepped gear cluster 196 with a moveable portion 292 is constructed from material that allows lateral flex through the width while providing structural support in the radial direction from the axis center. Supporting structural material may be inserted into the slotted section of the stepped gear cluster to assist in supporting the radial load while still allowing lateral movements of the movable section.

In FIG. 5-B, the moveable portion 292 has a movement vector S and is controlled along the vector by the cam actuator 191. Cam actuator 191 may be controlled by a mechanical method such as a manual cable pull with spring return, by a hydraulic method such as a manually switched hydraulic actuator, or by an electrical method such as an electronically controlled solenoid actuator.

In FIG. 6-A, a stepped gear cluster 197 has a moveable section 198. The moveable section 198 is shown in place as one unit with stepped gear cluster 197 in FIG. 6-B.

FIGS. 7-A through 7-I are depictions of chain link configurations that are have varied engagement profiles and assembly construction. FIGS. 7-J through 7-L are chain link configurations applicable for the function of the transmission described herein. The chain link configurations enable a reduction in component parts and weight in comparison to prior art configurations. Chain width is greatly reduced allowing for narrower stepped gear cluster profiles with no spacing and narrower spacing on a transmission carrier with fixable spaced elements. Chain link assembly methods are covered in prior art and the chain link configurations herein are not restricted to a specific method.

In FIG. 7-A, link connecting pin 165 joins two units of link 164 into a double link combination to form an endless loop represented by section 201. An endless loop configuration using only two elements is shown in FIG. 7-B. A link connecting pin is not required as each link 166 has an extended spud and a matching spud receiving hole. The advantage of this design is the reduction of part shapes required. Two links 166 are combined to form an endless loop section 202 as shown.

In FIG. 7-C, an assembly similar to a typical bicycle chain assembly is shown, whereby link connecting pin 176 joins outer links 156, inner links 157, and roller bushing 158 together in an alternating alignment pattern as shown to form endless loop section 203.

In FIG. 7-D, another embodiment of a two part design is shown. Link 159 with two receiving holes accepts the protruding spuds of link 160 in an alternating pattern to form an endless loop section 204.

Another embodiment using only two elements is shown in FIG. 7-E. Link 161 and link 162 each have one protruding spud and one receiving hole in opposite orientations to each other. This allows the two links to be combined in an alternating pattern to form an endless loop section 205.

In FIG. 7-F, two units of link 159 are combined using link connecting pin 163. Three pieces are used to form the endless loop section 206 and since the links are identical the reduction of part type count reduces manufacturing costs.

Another embodiment of the endless loop using a single link shape is shown in FIG. 7-G. Three units of link 153 have two receiving holes each and are connected with link connecting pin 152 to form an endless loop section 208. The link 153 is shaped to match drive profiles and pitch of a transmission carrier tooth profile. The link 153 shape has clearances underneath to aid in shifting between gear profile diameters.

In FIG.7-H, the shape of link 154 shown is similar to that used in Fig. 7-C. Link 153 is sandwiched between two link 154's in an alternating pattern and connected together by link connecting pin 142 to form endless loop section 208.

In FIGS. 7-I through 7-L, the endless loop designs have a common feature. The connecting pin extends beyond the width of the links and is the extended section of the link pin is useable as a drive engagement surface. The connecting pins are shown as extending an equal distance beyond each endless loop section width, but the design of these configurations may also have the pins extend beyond only one side or the other to match with dissimilar transmission gear profiles. An endless loop section 209 is formed using link connecting pin 150 and two units of link 151 in an alternating pattern. The top profile of link 151 is curved upward to increase the cross section of the link which increases the load carrying capacity.

In FIG. 7-J, the endless loop section 210 has a similar construction to endless loop section 203 of FIG. 7-C. The major difference is the link connecting pin 155 extends beyond the outer faces of links 156 an equal distance. This enables an endless loop assembled in this manner to allow the pins to be used as engageable drive surfaces.

FIG. 7-K shows a similar endless link embodiment as FIG. 7-I, wherein link connecting pin 171 joins two units of link 170 in a repeating pattern to form endless loop section 211.

In FIG. 7-L, the connecting pin 167 inserts into one end hole of a link 159 and the opposite end hole of another link 159 to form endless loop 212. The connecting pin 167 extends past the outer faces of each link 159 an equal distance to be useable as an engageable load transfer surface.

In FIG. 8-A, the transmission drive and driven carriers have ratio change control zones. Control zone A and control zone B are control areas where the endless loop element 7 is contacting the transmission drive carrier 1 and transmission driven carrier 2 respectively. The control zone C and control zone D are control regions where the endless loop element 7 is not in contact with transmission drive carrier 1 or transmission driven carrier 2 elements. Control zone E and control zone F are the specific control regions where the endless loop element 7 is guided onto elements of the transmission drive carrier 1 and transmission driven carrier 2.

In FIG. 8-B, transmission drive carriers 1 and transmission driven carrier 2 have axial shift vectors. Vectors 'a' and 'c' are directional vectors along transmission drive carrier 1 central Axis 'a'. Vectors 'b' and 'd' are the directional vectors along transmission driven carrier 2 central Axis 'b'. The combined coordinated movements of one or both transmission carriers along vectors 'a', 'b', 'c', or 'd' and guide element 9 control the alignment of endless loop element 7.

FIG. 9-A depicts a movement of the endless loop element 54 between two stepped profiles of drive carrier 52. Dotted line 60 represents the path of the endless loop element 54 around the profiles of drive carrier 52. The endless loop element 54 is able to transfer from the smallest diameter profile step to the next largest diameter profile step because the profiled patterns are lined up to match the pitch and profiles of the links of the endless loop element 54.

FIG. 9-B is depicting the same transfer of the endless loop element 54 between the stepped profiles of drive carrier 52.

FIGS. 10-A, 10-B, and 10-C depict an embodiment of a drive ratio change method whereby the transmission carrier 5 of FIG. 1 is moved along axis 'A' to initiate shift sequences in combination with an endless loop guide mechanism 16.

FIG. 10-A depicts the parallel positioning of the transmission carrier 5 and transmission carrier 6 and line section 14 representing the projected path of the endless chain 3 located inside guide mechanism 16. The endless chain 3 is rotatably coupling the largest diameter of drive carrier 5 which is drive element 240 to the smallest diameter of driven carrier 6 which is driven element 242 and provides the largest drive ratio.

FIG. 10-B shows a drive carrier shift CS1 of transmission carrier 1 along axis 'A'. As the carrier shift is initiated, the endless chain 3 represented by line section 14 is laterally displaced by guide mechanism 16 and the endless chain 3 is thereby transferred to drive element 241 of transmission carrier 5 while still aligned with the driven element 242 of transmission carrier 6. This new position results in a reduction of the initial transmission drive ratio.

In FIG. 10-C, the transmission carrier 5 has a drive carrier shift along vector CS2 of axis 'A' to the original carrier position of FIG. 10-A. As guide mechanism 16 laterally moves along vector SM1 the endless chain 3 is guided and transferred from driven element 242 to the driven element 243 of transmission carrier 6. This results in another reduction in the transmission drive ratio. Thirty one separate drive ratios are available from this shifting method for the transmission carriers depicted each with sixteen fixable elements. A longer carrier shift CS1 movement along the 'A' axis combined with a coordinated movement of the guide mechanism 16 is conceivable and would allow the endless chain 3 to transfer between more than one set of adjoining drive or driven elements.

The shift sequence has now completed two drive ratio changes and moved the continuous loop 7 from drive element 244 and driven element 172 to the drive element 245 and driven element 173. As earlier noted, longer movements along the vectors SM2 and SM1 would allow increased drive ratio adjustments whereby ratio changes would be greater than the shifts between adjacent fixable elements.

In FIG. 11, the shift vectors H, I, J, and K are representative of the force vectors that influence the endless loop cross section 28 position laterally and vertically. Transmission carrier 19 is shown combined with two separate shift mechanisms each comprised of a guide rod 17, a guide rod housing 18, and an endless loop guide 20. The guide housings 18 and endless loop guides 20 control the position of the endless loop 21 laterally by moving along guide housing rods 17 via shift vectors F and G. Vector E is the shift vector along the carrier 19 central axis.

The following embodiment of a transmission carrier in FIGS. 12-A, 12-B, and 12-C incorporates transmission carrier 199 with a moveable portion 181 similar to US Patent No. 5,205,794 Browning, April 1993 has used moveable portions, but in the context of hinged portions that require multiple parts to connect the pieces. The benefit of using a moveable portion in a transmission carrier is the low friction of chain transfer between carrier diameters and the achievement of very low sidewall friction because of the low crossover angles involved.

FIG. 12-A depicts a moveable portion 181 of transmission carrier 199 similar to the embodiment shown in FIG. 5-A. Chainpath 179 is shown engaged with the profile of carrier element 360 along both the transmission carrier 199 and the moveable portion 181. Transmission carrier 199 may rotate in either direction as represented by vector R to allow the moveable portion and a chain transfer to be accomplished.

FIG. 12-B shows an adjusted chain path 179 as the moveable portion 181 is laterally moved along vector LD2. The chainpath 179 now shows a transfer between carrier element 360 and carrier element 361.

FIG. 12-C shows the moveable portion laterally displaced in the vector LD1 direction. Chainpath 179 is now transferring between carrier element 360 of carrier 199 and the carrier element 361 of the moveable portion 181. The ability to provide a lateral movement feature on the diameter of a moveable carrier portion improves the chain alignment and chain engagement efficiency of the transmission system. The other advantages are the decreased cost of the assembly by the use of fewer parts. Additional support may be included in the carrier body to provide increased load capacity of the moveable portion 181.

FIG. 13-A depicts a transmission carrier 196 that has a laterally moveable portion 292. Lateral movement of a portion of the carrier body is shown in FIG. 13-B along vector LD.

FIG. 13-C and FIG. 13-D show the lateral movement of the moveable portion 292 in the vector LD1 and vector LD2 directions respectively.

FIG. 14-A displays a combination of the lateral shift capability of the moveable portion 292 along vector LD and a chain guide section 189 movement along vector GS which is approximately parallel to the transmission carrier 196 conical outer diameter profiled steps to control the position of endless loop cross section 28. Another shift embodiment is the combination of the lateral shift of moveable portion 292 along vector LD combined with a lateral shift movement of transmission carrier 196 along the transmission carrier 196 centerline which is represented as vector AS in FIG. 14-B.

A further shift method embodiment is shown in FIG. 14-C as three shift vectors are combined to control the position of endless loop cross section 28. The lateral moveable portion 292 vector LD, the chain guide section 189 movement along vector GS, and the transmission carrier 196 movement along vector AS are all coordinated together to affect a change in the drive ratio of the transmission.

FIG. 14-C1 is an embodiment of the moveable portion of the stepped gear cluster of FIG. 14-C wherein moveable portion 292-A lateral shifts along vector SD are controlled by a cam device, combined with an endless loop guide shift along vector GS and a stepped gear cluster shift along vector AS to coordinate movement of all three vectors to allow a drive ratio shift of endless loop cross section 28 up or down on the stepped gear cluster 196-A. Shift control device 459-A controls the position of the endless loop cross section 28 via shifts along vector GS of guide 189 connected to guide housing 18-A which moves along guide rod 17-A. Cam control device 459-A is attached to cam support 456-A. Cam control device 457-A connects from cam support 456-A to cam connector mount 453 and cam control device 458-A connects from cam support 456-A to cam connector mount 452. Cam support 456-A is supported on shaft 450-A by bearing 455. Cam device 457-A enables shifts along vector AS of the stepped gear cluster main section 196 about the central axis of shaft 450-A. Cam device 458-A enables shift LD of the moveable portion 292-A. Rotation vector IS represents the rotation of shaft 450-A around a central axis. Bearing 454 is mounted on stepped gear cluster 196 and supports cam connector mount 453. Bearing 452 is mounted to laterally moveable portion 292-A and supports cam connector mount 452.

FIG. 15-A shows the stepped gear cluster laterally displaceable section 198 movement vector SD in relationship to the transmission carrier 197.

FIG. 15-B displays a combination of the lateral shift capability of the laterally displaceable section 198 along vector SD and a chain guide section 189 movement along vector GS which is approximately parallel to the transmission carrier 197 conical outer diameter profiled steps to control the position of endless loop cross section 28. Another shift combination is the lateral shift of laterally displaceable section 198 along vector SD combined with a lateral shift movement of transmission carrier 197 along the transmission carrier 197 centerline which is represented as vector AS in FIG. 15-C. A further shift method is shown in FIG. 15-C as three shift vectors are combined to control the position of endless loop cross section 28. The laterally displaceable section 198 movement along vector SD, the chain guide section 189 movement along vector GS, and the transmission carrier 197 movement along vector AS are all coordinated together to affect a change in the drive ratio of the transmission.

FIG. 15-C1 is an embodiment of the moveable section of the stepped gear cluster of FIG. 15-C wherein moveable section 198-A shifts laterally along vector SD combined with stepped gear cluster 197-A shifts along vector AS control a drive ratio up or down shift of endless loop cross section 28 on the stepped gear cluster 197-A. Cam control device 457 and cam control device 458 are attached to cam support 456. Cam control device 457 connects from cam support 456 to cam connector mount 453 and cam control device 458 connects from cam support 456 to cam connector mount 452. Cam support 456 is supported on shaft 450-B by bearing 455. Cam device 457 enables shift AS of the stepped gear cluster main section 196-A along the central axis of shaft 450-B. Cam device 458 enables shift SD of the laterally displaceable section 198-A. Rotation vector IS represents the rotation of shaft 450-B around a central axis. Bearing 454 is mounted on stepped gear cluster 196 and supports cam connector mount 453. Bearing 452 is mounted to moveable section 198-A and supports cam connector mount 452.

FIG. 16-A depicts the transmission carriers 52 and 53 of FIG. 2 with a cam guide pin attached to transmission carrier 53. As transmission carrier 53 rotates along the vector R, the cam pin 59 is controlled by cam guide profile 60 on the outer diameter cam 58. Shifts of the transmission carrier 53 along the vector CS enable controlled lateral movement of chain 54 on the transmission carrier 53 stepped profile diameters.

FIG. 16-B is an embodiment of the cam controlled stepped gear cluster of FIG. 16-A wherein stepped gear cluster 475-B has a cam guide groove 480a. Cam control device 457-B enables shifts of stepped gear cluster 475-B along shift vector CS and shift control device 459-B enables shifts along vector GS to coordinate movement of two vectors to allow a drive ratio shift of endless loop cross section 28 up or down on the stepped gear cluster 475-B. Shift control device 459-B controls the position of the endless loop cross section 28 via shifts along vector GS of guide 189 connected to guide housing 18-B which moves along guide rod 17-B which is attached to cam support 456-B. Rotation vector IS represents the rotation of shaft 450-B around a central axis. Bearing 455 supports cam support 456-B. Cam control device 457-B controls contact of the cam arm 480 with cam groove 480a through engagement or disengagement of cam arm 480 by shift vector SMS.

FIG. 16-C is an embodiment similar to the cam controlled stepped gear cluster of FIG. 16-A wherein stepped gear cluster 475-D has a cam guide face 480b. Cam control device 457-D enables shifts of stepped gear cluster 475-D along shift vector CS and shift control device 459-B enables shifts along vector GS to coordinate movement of two vectors to allow a drive ratio shift of endless loop cross section 28 up or down on the stepped gear cluster 475-D. Shift control device 459-D controls the position of the endless loop cross section 28 via shifts along vector GS of guide 189 connected to guide housing 18-D which moves along guide rod 17-D which is attached to cam support 456-D. Rotation vector IS represents the rotation of shaft 450-D around a central axis. Bearing 455 supports cam support 456-D. Cam control device 457-D controls contact of the cam roller 480c on cam arm 481-D with cam face 480b through engagement or disengagement of cam arm 481-D by shift vector SMS. Spring 480-5 and retainer 480-6 maintain tension on stepped gear cluster 475-D for the cam roller 480c contact with cam face 480b.

In FIGS. 17-A, 17-B, and 17-C, a series of sequential steps illustrate the coordination of an endless loop shift mechanism and a transmission carrier shift movement. Chain guide 33 is attached to chain guide housing 34 which is movable along the guide housing support rod 35 which is positioned along an axis that is approximately parallel to the tangent angle of the external stepped profiles of transmission carrier 32. The guide housing support rod 35 is installed into and supported by the outer housing 36. The shift mechanism vector and carrier shift vectors are denoted by directional arrows 'S', 'T' and 'U'. The shift vector of the guide housing 34 movement along the guide housing support rod 35 is denoted as vector 'S'. The initial guide housing movement is in a coordinated relationship with carrier 32 whose lateral movement along the carrier central axis 'A' is denoted by vector 'T'. As chain guide housing 34 moves chain guide 33 along the 'S' vector, carrier 32 shifts along vector 'T' to keep the chain in position on the first carrier element 168, as shown in FIG. 17-B.

In FIG.17-C, the endless loop cross section 28 is transferred from the first carrier element 168 to the second carrier element 169 when carrier 32 shifts along the carrier 'A' axis as denoted by vector 'U' and the chain guide housing 34 maintains the position achieved in FIG. 17-B. One complete cycle is complete when the carrier 32 has shifted back to the initial position. The endless loop cross section 28 is now on the second carrier element as shown.

FIG. 18 is a simplified chart showing a single carrier shift vectors, chain shift vectors, both carriers shift vectors, and combined carriers and chain shift vectors. Earlier shift methods have shown the movement of the chain laterally as a primary method of transfer for drive ratio changes. Carrier lateral shift distances may be increased to allow for the chain to stay in the same lateral position.

FIG. 19 is a chart listing of transmission ratio change types and drive ratio change methods. Ratio change type categories include yet are not limited to manual, semi-manual, semi-automatic, and automatic. Ratio change methods include but are not limited to dual action cables, single action cable, cable with spring, triggers with side plates, derailleurs, two way cables with cam assist, single cable pull with cam assist, single cable with spring return and cam support, trigger with side plate and cam assist, derailleur with cam assist, cam assist with computer control, single cable with computer control, solenoid value with computer control, servo motor gear drive with computer control, computer preset control, computer reactive control, and computer control with manual assist.

FIG. 20 is a chart listing of drive ratio change device types and power supply types for the drive ratio devices. Manual power, magnetic force, electrical energy supplied by a generator, stored energy as from a battery or a spring, singly or in combination may provide the energy for the drive ratio change devices.

FIG. 21 graphically represents a basic carrier shift and chain guide system whereby a CAM controls the coordination of the carrier shifts. Cam actuators provide shift mechanism timing control where multiple movements are required simultaneously or in rapid sequence. The cam lobes provide the index or timing movement required for the shift mechanisms.

FIG. 22 graphically represents a flow chart that is indicative of coordinated carrier shifts with additional shift mechanisms via CAM control. In this case, a laterally displaceable section and a carrier shift are coordinated by the CAM function.

FIG. 23 graphically represents a controller coordination of carrier shifts, laterally displaceable section shifts via cam controls.

Proximity sensor 55 positioned as shown in FIG. 24-A inside the transmission carrier 52 measures the vector CS changes in position of the carrier and the location of the endless loop cross section 28 on the carrier. Sensor cable 56 transmits the sensor signals to a controller such as the controller depicted in FIG. 27. Although only one sensor is shown, one or more sensors may be used in combination.

FIG. 24-B depicts approximate sensor locations for proximity sensor 55 of FIG. 24-A. Sensors 472-B and 472-A would provide signals for the index location initiation for the stepped profiles of transmission carrier 52-A. Sensors 470-A, 470-B, 471-A, and 471-B provide the index shift zone information for a controller. Sensors send output signals to a controller such as the controller depicted in FIG. 56. The application of multiple sensors used in combination provide a highly accurate determination of the transmission carrier 52-A rotational position even at elevated rotational speeds.

In FIG. 25-A, carrier 19 has multiple steps with profiled patterns to drive endless loop 21.

FIG. 25-B shows three embodiments of bottom edge profiles on the profiled pattern for the bottom edge of endless loop 21. Profile 57 'A' is straight and uniform across the bottom edge width. Profile 57 'B' has two radial sections across the bottom width for engagement. Profile 'C' is an inverted taper that centers in the middle of the bottom edge. These profiles assist in aligning the bottom edge of the endless loop 21 with the carrier's stepped profiles. The shaped surfaces assist in making a positive engagement that resists lateral deflections except when the endless loop 21 is purposely laterally shifted by shift mechanisms.

In FIGS. 26-A through 26-L, stepped gear profile modifications are depicted that when applied to the stepped gear clusters of FIG. 2 would aide in the lateral movement and control of the endless loop and the common engagement surfaces of the same.

In FIG. 26-A, transmission carrier stepped profile element 237 has chamfered profile edges 229 to assist in lateral movements of the endless loop 216. Chamfered profile edges are similar to those referenced from US Patent No. 4,348,200 Terada, September 1982.

In FIG. 26-B, gear profiles on transmission fixable element 238 may be modified as shown on gear shape 219 and are similar to reference US Patent No. 5,830,096 Schmidt et al., November 1998 to assist in the lateral movement of endless loop 216 and to allow for variations in the amount of stretch and assembly tolerance of the endless loop 216.

In FIG. 26-C, stepped gear profiles of transmission fixable element 239 has a side clearance portion similar to that shown in reference US Patent No. 5,545,096 Su, August 1996. The side clearance portion provides a transitional support surface during the lateral transfer of endless loop elements from a larger diameter element to a smaller diameter element on a transmission carrier.

FIG. 26-D is a depiction of the contact surfaces of the stepped gear profiles of transmission carrier 19. During an endless loop 216 lateral transfer between stepped profiles the contact surfaces 223A, 223B, and 223C will provide a transition of engagement as the endless loop lateral shifts to a smaller stepped gear profile diameter.

In FIG. 26-E, gear profiles on transmission fixable element 411 may be modified by a combination of clearance 224 similar in shape as shown in reference US Patent No. 5,545,096 Su, August 1996 and recesses 249 similar in shape as shown in reference US Patent No. 6,013,001 Miyoshi, January 2000.

In FIG. 26-F, stepped gear profiles on transmission fixable element 412 may be modified by a combination of clearance 214 similar in shape as shown in US Patent No. 5,609,536 Hsu, March 1997 and recesses 249 as shown in US Patent 6,013,001 Miyoshi, January 2000. The relieved portion of clearance 214 on the stepped profile will assist the endless loop element 216 transition between stepped gear profile diameters when lateral transfers are made. Recesses 249 assist in the ability for the stepped profiled gear surface to be free of debris.

In FIG. 26-G, gear profiles on transmission fixable element 248 that are shaped to drive the connecting pin of endless loop 413 similar in construction to the endless loop of FIG. 7-L may be modified with clearance shapes 249 as referenced by US Patent No. 6,013,001 Miyoshi, January 2000. The clearance shapes 249 allow for debris to not prevent the engagement of the endless loop 413 contact surface with the transmission carrier 248.

In FIG. 26-H, the stepped gear element 414 has a recessed portion 214 as referenced in US Patent No. 4,889,521 Nagano, December 1989. The recessed portion supports the endless loop 216 during a lateral movement transition to the next smaller diameter stepped profile 229 as shown.

In FIG. 26-I, gear profiles on transmission fixable element 299 are modified with clearance relief 296 and side portion recess 295 as per reference US Patent No. 5,192,249 Nagano, March 1993.

In FIG. 26-J, a stepped gear profile cross section 299 is shown similar to reference US Patent No. 6,666,786 Yahata, December 2003. Clearance shape 297 and clearance radius 298 assist in the endless loop lateral transfers between stepped profile diameters.

FIG. 26-K depicts an endless loop cross section 28 on a fixable element 293 outer gear profile. Fixable element 293 has a tapered angle 415 on the side that assists in the transfer of the endless loop cross section 28 to the smaller diameter fixable element 294.

FIG. 26-L depicts the clearance portion 224 as shown in FIG. 26-E on transmission carrier 301. Endless loop cross section 28 is a reference for the endless loop position prior to a lateral shift.

Transmission carriers similar to those shown in FIG. 3 are utilized in the transmission assembly disclosed in FIG. 27 (REFERENCE is Figure 14; from Improvements in Bicycle Systems and Method Provisional Application No. 60/610,944; Inventor: Darrell W. Voss; Filed September 20, 2004), and the individual component parts of transmission assembly 110 are as follows:

### PARTS LIST

| | | |
|---|---|---|
| 61 | - | Case |
| 62 | - | Spindle |
| 63 | - | Crank A |
| 64 | - | Planetary Post |
| 65 | - | Bearing |
| 66 | - | Clip Ring |
| 67 | - | O-Ring Seal |
| 68 | - | Flange |
| 69 | - | Seal |
| 70 | - | Bearing |
| 71 | - | Ring Gear |
| 72 | - | Planetary Gears |
| 73 | - | Transmission drive carrier |
| 74 | - | Bearing |
| 75 | - | Bearing |
| 76 | - | Crank B |
| 77 | - | Bearing |
| 78 | - | Transmission driven carrier |
| 79 | - | Bearing |
| 80 | - | Flange |
| 81 | - | Bearing |
| 82 | - | O-Ring Seal |
| 83 | - | C Clip Retainer |
| 85 | - | Output Sprocket |
| 86 | - | Clutch Hub |
| 87 | - | Inner Clutch Hub |
| 88 | - | Generator /Alternator |
| 89 | - | Shaft |
| 90 | - | Generator/Alternator output wires |
| 91 | - | Clutch Bands |
| 92 | - | Sun Gear |
| 93 | - | Seal |
| 94 | - | Shift Device |
| 95 | - | Chain |
| 96 | - | Control box |

In this illustration, the chain 95 is a single endless loop which is laterally moved by shift device 94 which is operated mechanically, hydraulically or electrically. In the case of electrically, the power for this comes from the generator/alternator 88 and/or a battery system. Control box 96 is mounted inside or external of case 61 and is powered by the generator/alternator 88 and/or a battery system. Various control inputs may be generated in sensor devices corresponding to those disclosed in the PCT application, reference Voss U.S. Patent Application Serial No. 10/113,931 filed April 2, 2002 and International Publication No. WO 2002/081257A3 entitled VEHICLES AND METHODS OF USING CENTER-OF-GRAVITY AND MASS SHIFT CONTROL SYSTEM. The transmission carriers 73 and 78 are essentially identical, but this need not be the case. In other words, one transmission carrier can be larger or smaller than the other and vice versa. One transmission carrier can also have more or less elements than the other and vice versa.

The chain 95 is an endless loop, that is the ends are connected together and is diagrammatically illustrated as a single straight piece section in FIG. 27. In this embodiment, the output sprocket 85 is coupled to the vehicle drive system via a clutch mechanism having clutch bands 91 mounted on clutch hub 87 which engage with recesses in outer clutch hub 86 only when rotating in the drive direction. Normally, the carrier 78 is not rotating unless crank 63 and crank 76 are rotating, even if the rear wheel is rotating. The clutch mechanism is mounted on stationary shaft 89 which engages a generator/alternator 88. Generator power is supplied only when the vehicle output shaft is turning whether through manual power, motorized input power, or gravity. The generator/alternator output wires 90 route through the inside of the stationary shaft 89 for connection to a battery and/or a control device. A planetary gearing system 72 and ring gear 71 are coupled to transmission drive carrier 73 which is the power input of the transmission and via the chain 95 coupled to the transmission driven carrier cassette 78 which is the ratio changed output of the transmission, which is clutched to the output sprocket 85 via outer clutch hub 86. When the rider apples torque through the pedals, the gearing transfers the rider's energy or power input via the stepup or stepdown transmission drive to the rear wheels. The transmission system assembly 110 can be an integral element in combination with the suspension and braking systems due to its compact features and centralized locations. Transmission carrier 73 is coupled with outer sun ring 71. Planetary gears 72 engage with the sun gear 71 and the inner drive ring 84 which is connected to a shaft (not shown). The planetary gears 72 mount on planetary posts 64. Planetary posts 64 are mounted to mounting ring 184. Transmission input energy in the form of rotational speed will drive the planetary gears 72 to provide a speed increasing effect as the gears mesh with the sun gear 71. The transmission carrier 73 will rotate at higher revolutions per minute than if directly connected to the transmission input device. This in effect, reduces the frictional forces and loads at the transmission carrier element contact interfaces with a coupling element such as chain 95 of FIG. 27.

While the transmission system shown in FIG. 27 is preferred, other speed change mechanisms may also be incorporated wherein. For example, the transmission system in combination with variable V-belt drives, hydraulic eccentric gear drives, hydrostatic drives, or toroidal fluid drives are within the scope of this invention.

Referring to FIG. 28-A, the transmission system assembly 111, similar to transmission assembly 110 of FIG. 27, is without a planetary system installed. Clutch assembly 100 allows the crank 63 to be separate from the drive carrier such as when the vehicle is going down an incline and gravity provides the energy needed for the vehicle motion. Output sprocket 97 is the external drive output connection.

FIG. 28-B discloses an embodiment of a clutch assembly 425 similar to clutch assembly 100 of FIG. 28-A. Retainer 416 captures o-ring 417 against one flat side face of outer clutch ring 418. Outer clutch ring 418 has a spline profile 421 on the outer diameter for load transfer. The outer clutch ring 418 has a convex tapered helical toothed pattern 422 on the opposite side face. The face with the convex tapered helical toothed pattern 422 meshes with the side face of inner clutch ring 419 which has an opposing concave tapered toothed pattern 423. Inner clutch ring 419 has a spline profile 424 on the inner diameter for load transfer. Spring 420 applies a force to the opposite side face of inner clutch ring 419. The spring 420 applies a consistent load to mesh the helical faces of the inner clutch ring 419 and outer clutch ring 418. The two clutch rings are driven together when a rotation occurs in the same direction as the helical faces mesh. The clutch rings do not drive each other when one or the other ring is not driven in the same direction. The helical angle of the meshed faces allows the clutch rings to spring apart and rotate independent of each other when not driven in the same direction.

In FIG. 29-A, transmission carriers based on the narrow carrier form shown in FIG. 4-B are incorporated into a transmission assembly 330 that is compact and has a narrower width in comparison to the carrier diameters. The transmission assembly 330 is also novel in respect to the transfer of the power input through drive input sprocket 334 that couples via drive input transfer chain 335 to a smaller diameter drive carrier input sprocket 338. The power input revolutions per minute are sped up through the large to small diameter transfer. The other novel aspect of this design is that the power input and power output is accomplished through the same axle centerline. Power inputs are through a drive input connecting axle 332 that is mounted internally to the driven transmission carrier 342 that is coupled to driven output sprocket 346 and driven output sprocket output endless loop element 347 which couples the output sprocket to the attached device whether the attached device is a wheel assembly for a vehicle, a flywheel for an energy storage device, a shaft for a power generator device, or similar system that uses transmission system outputs. The transmission drive carrier 340 and transmission driven carrier 342 are coupled together by endless loop element for stepped gear clusters 341. Power input is through drive input A 331 and drive input B 344 which are connected together by drive input connecting axle 332. Bearing 345 supports the output sprocket 346 about the outer diameter of the drive input connecting axle 332. Bearing 333 supports input loads at the opposite end of the drive input connecting axle 332 and the drive input sprocket 334. Bearing 337 internally supports the drive carrier input sprocket 338 which connects with transmission drive carrier 340. Chain path representations 336 and 343 show the engagement alignments of the endless loop element for stepped gear clusters 341 with transmission drive carrier 340 and transmission driven carrier 342 respectively. Support body 339 is the structure that contains the internal drive assembly 330.

In FIG. 29-B, a transmission assembly 329 similar to the transmission assembly of FIG. 29-A utilizes shift mechanism 392, as disclosed earlier herein, to control the endless loop 341 alignment and coupling to transmission driven carrier 342 and shift mechanism 391 to control the endless loop 341 alignment and coupling to transmission drive carrier 340. In this illustration, shift device 94 actuates shift mechanisms 392 and 391 singly or together so that the endless loop 341 is laterally moved to effect a drive ratio change. Shift device 94 is operated mechanically, hydraulically or electrically. In the case of electrically, the power for this comes from the generator 393 and/or a battery system. Control box 96 is mounted inside or external of optional case 61 and is powered by the generator 393 and/or a battery system. Various control inputs may be generated in sensor devices corresponding to those disclosed in the PCT application, reference Voss U.S. Patent Application Serial No. 10/113,931 filed April 2, 2002 and International Publication No. WO 2002/081257 A3 entitled VEHICLES AND METHODS OF USING CENTER-OF-GRAVITY AND MASS SHIFT CONTROL SYSTEM. Shaft 62 supports bearing 65 which is housed in carrier 331.

In FIG. 30, a transmission assembly is shown using transmission carriers similar in design to those shown in FIG. 1. Transmission assembly 183 is comprised of a transmission drive carrier 312 coupled by an endless loop represented by endless loop representative 372 to transmission driven carrier 319 to effect a drive to driven ratio. The transmission carriers each have fifteen fixable drive elements providing thirty one separate drive ratio outputs. Driven carrier 319 is supported by carrier support 318 on bearing 317. Main housing 305 connects with housing cover 307 where bearing 316 is nested. Power input 315 and 308 are mounted at the ends of transfer shaft 325. Carrier support 311 mounts to planet gear transfer 324. Planet gears 310 rotate around the planet gear posts 309 mounted into power input 308. Planet gears engage with the sun gear body 306. Outer bearing 326 supports the sun gear body 306 around power input 308. Inner bearings 323 supports the radial load of the planet gear transfer 324. Outer sprocket 320 is connected to driven carrier 319 and is supported by bearings 321. Power input 315 houses bearing 314 and carrier bearing 313 supports main housing 305. This carrier arrangement provides for a compact, efficient transmission assembly.

In FIG. 31, the transmission assembly 110 of FIG. 27 is shown coupled to a motor power supply 44 via clutch system 45. Output transfer assembly 46 connects the transmission assembly 110 output to an output transfer device 47. Output transfer device 47 may include but is not limited to a shaft drive, worm gears, chain drive, helical gears, spur gears, cable drive, or pulley belt.

FIG. 32 refers to a representative recumbent bicycle assembly 270 and a novel transmission system disclosed herein. A transmission system 146 is coupled to the rear wheel by transfer device 148. The transmission system 146 is generally of the type disclosed in FIG. 27 herein.

Referring to FIG. 33, transmission assembly 188 is mounted within the framework of the bicycle assembly 287. The bicycle assembly 287 structure is that of a front suspension bicycle. The sprocket chain SC transfers the driven output of the transmission assembly 188 from the bicycle front frame seat tube ST to the rear wheel. The transmission system 188 is generally of the type disclosed in FIG. 27 herein.

FIG. 34 is an embodiment of a bicycle assembly similar to FIG. 33, except the sprocket chain SC transfers the driven output of the transmission assembly 188 from the bicycle main frame down tube DT to the rear wheel. The bicycle assembly 288 structure is that of a front suspension bicycle. The transmission system 188 is generally of the type disclosed in FIG. 27 herein.

FIG. 35 depicts a transmission system 394 generally of the type disclosed in FIG. 27 herein located inside a wheel assembly 290 for a vehicle. Transmission system 394 is connected directly to a vehicle attached device, which in this case is a vehicle wheel assembly.

FIG. 36 is an embodiment of a transmission assembly 182 incorporated in a wind power energy generation device 291. The wind power device has a power capture system, power generation system, and transmission systems to enable an efficient use of the wind energy. Wind energy transfer blade assembly 351 rotates as wind flows across the airfoil shapes of the blades. The spinning blades are coupled through transmission assembly 182 which used the novel transmission carrier designs described previously to efficiently transfer the captured wind energy that has been converted into a rotational force. Transmission assembly 182 transfers the rotational force with appropriate drive ratios to maximize the efficiency of the attached power generator assembly 352. Clutch assembly 353 is attached to the power generator assembly 352 to enable consistent operating conditions during variable wind conditions. Tower support 354 functionally provides the appropriate heights required for the blade length and enables the connection of the power generated to the power output assembly 355.

FIGS. 37-A and 37-B are graphical illustrations detailing a set of transmission ratios from transmission drive and driven carriers wherein each carrier has thirteen elements each having one tooth difference in diameter. Drive and driven carriers are each shifted one element in an alternating sequence similar to the sequence shown in FIGS. 10-A and 10-B. Twenty five drive ratios are possible from this specific combination.

FIG. 37-C1 depicts a drive carrier 515 having drive elements 500 and 501 with a circumferential difference between them and driven carrier 516 having driven elements 502, 503, 504, 505, 506, 507, 508, 509, 510, 511, and 512; wherein each driven element has a progressively increasing circumference. Drive carrier 515 may consist of two or more elements. Drive ratio changes are progressively increasing or decreasing when the drive carriers' 515 drive elements circumferential difference is less than the circumferential difference between each pair of elements of driven carrier 516. Connecting element 513 connecting from drive element 501 to driven element 502 provides a drive ratio as shown. A drive ratio change is provided when connecting element 513 is shifted from drive element 501 to drive element 500. Driven carrier 516 is shiftable in increments of one, two, or more driven elements. In this way, the drive ratio can be changed quickly to the approximate desired drive ratio and then minor drive ratio adjustments are made through shifts of connecting element 513 on drive carrier 515 elements 500 and 501. Additional shifting methods and patterns are also conceivable in this arrangement.

FIG. 37-C2 illustrates the high and low range of a drive ratio shift pattern as defined in FIG. 37-C1. Shift pattern 37-C2A represents the high ratio range of ratios for each rear driven element selected in combination with the largest circumferential drive element. Shift pattern 37-C2B represents the low ratio range of ratios for each rear driven element selected with the smallest circumferential drive element.

FIG. 37-D depicts drive carrier 517 having drive elements 520 and 521 with a circumferential difference between them and driven carrier 518 having driven elements 522, 523, 524, 525, 526, 527, 528, 529, 530, 531, and 532; each with an increasing circumference. The driven elements range is group 518-A. Drive element 521 is connectively coupled through connecting element 519-A to each driven element on the driven carrier 518 to provide drive ratios. The drive carrier 517 may consist of two or more elements. The shifting of the connecting element 519-A provides progressively increasing or decreasing drive ratios, as long as the driven elements circumferential difference is greater than the circumferential difference of group 518-A.

FIG. 37-E depicts drive carrier 517 having two drive elements with a circumferential difference between them similar to FIG. 37-D. Driven carrier 518 has driven elements 522, 523, 524, 525, 526, 527, 528, 529, 530, 531, and 532; each having an increasing circumference. Driven elements are grouped together as group 518-A. Drive carrier 517 is connected from drive element 521 coupled through connecting element 519-B for each element on the driven carrier 518. The drive carrier 517 may consist of two or more elements. The shifting of the connecting element 519-A provides progressively increasing or decreasing drive ratios, as long as the driven elements circumferential difference is greater than the circumferential difference of group 518-A.

FIGS. 37-F1and 37-F2 are chart illustrations of drive ratio shift patterns representing a sequence wherein an endless coupling passes through elements on a drive or driven transmission carrier to achieve a rapid change in the drive ratios. The drive ratio patterns are possible for both increasing or decreasing ratio directions by reversing the sequences of shifts. A rapid change in drive ratios is possible from the advance of the endless coupling 550 passing through a plurality of elements along either the drive or driven carriers. Passing through a plurality of drive elements and then a plurality of driven elements to achieve a change in drive ratios is shown in FIG. 37-F1. Transmission drive carrier 555 and transmission driven carrier 556, each comprised of nine elements, have an endless coupling 550 connecting drive element 540 and driven element 545 at starting position 550-A. Endless coupling 550 is shifted in rapid sequence along transmission drive carrier 555 passing through to drive element 541, to drive element 542, to drive element 543, and then on to drive element 544. Endless coupling 550 is then shifted in a rapid sequence along transmission driven carrier 556 passing through driven element 545 to driven element 546, to driven element 547, to driven element 548, and then on to driven element 549. The endless coupling 550 provides a changed drive ratio by connecting drive element 544 and driven element 549 at position 551-A. In FIG. 37-F2, a similar change of drive ratios is shown, although the sequence is started along the driven carrier first, as transmission drive carrier 555 and transmission driven carrier 556 have endless coupling 550 connecting drive element 540 and driven element 545 at starting position 550-B. Endless coupling 550 is shifted in rapid sequence along transmission driven carrier 556 passing through driven element 545 to driven element 546, to driven element 547, to driven element 548, and then on to driven element 549. Endless coupling 550 is then shifted in a rapid sequence along transmission drive carrier 555 passing through from drive element 540 to drive element 541, to drive element 542, to drive element 543, and then on to drive element 544. The endless coupling 550 provides a changed drive ratio by connecting drive element 544 and driven element 549 at position 551-B.

FIGS. 373-G1 and 37-G2 are chart illustrations of shift patterns representing a sequence wherein endless coupling shifts to each individual element on a drive or driven transmission carrier provide a change in drive ratios. A change in drive ratios is provided by the advance of endless coupling 550 to an element along either the drive or driven carriers. A change of drive ratios by shifting along either the drive or driven carriers first is applicable for both increasing and decreasing drive ratios. In FIG. 37-G1, transmission drive carrier 555 and transmission driven carrier 556 are comprised of nine elements each and have an endless coupling 550 connecting drive element 540 and driven element 545 at starting position 550-C. Endless coupling 550 is shifted along transmission driven carrier 556 from driven element 545 to driven element 546 to provide a drive ratio change. Endless coupling 550 is then shifted along transmission drive carrier 555 from drive element 540 to drive element 541 to create the next drive ratio change. The endless coupling 550 provides a drive ratio change by connecting drive element 541 and driven element 546 at ending position 551-C. The same pattern is repeatable for creating drive ratio changes from the drive and driven elements along the drive and driven carriers until the ends of the carriers are reached. In FIG. 37-G2, a drive ratio change is shown by endless coupling 550 connecting drive element 540 and driven element 545 at starting position 550-D and then being shifted along transmission drive carrier 555 from drive element 541 to drive element 540 to create a drive ratio change. Endless coupling 550 is then shifted along transmission driven carrier 556 from driven element 545 to driven element 546 to position 551-D to create another drive ratio change. The same pattern is repeatable for creating drive ratio changes from the drive and driven elements along the drive and driven carriers until the ends of the carriers are reached.

FIG. 37-H is a chart showing drive ratio variations from using a shift pattern where the drive carrier or driven carrier elements are passed over first to provide drive ratios. Shift pattern 37-H1 is a pattern of ratios derived from passing over the drive carrier, then the driven carrier ratio until the carriers are aligned on opposing elements such as the pattern shown in FIG. 37-F1. Shift pattern 37H-2 shows the change in drive ratios when the driven carrier is shifted, then the drive carrier such as the pattern shown in FIG. 37-F2.

In FIG. 37-I, the chart illustrates five drive ratio shift patterns using different shift methods and carrier types. Shift pattern 37-I1 represents the drive ratios similar to those of FIG. 37-A and 37-B. Shift pattern 37-12 represents a drive carrier shifted similar to FIG. 37-F1. Shift pattern 37-I3 is representative of the pattern shown in FIG 41. Shift pattern 37-I4 is representative of the drive and driven carriers shown in FIG. 37-C1. The available shift sequences and methods enable versatility in application of the transmission system.

FIG. 38 is a chart detailing the changes in length of travel derived from the gear ratio combinations as shown in the charts of FIGS. 37-A and 37-B. The high range ratio target of a bicycle road configuration is derived from a fifty three tooth drive to an eleven tooth driven ratio of 4.81818. The high range target ratio provides 10378.36 millimeters of wheel travel per one revolution of the eleven tooth driven gear when attached to a wheel with a 2154 millimeter circumference. The wheel circumference of 2154 millimeters multiplied by the output ratio of the driven carrier and then multiplied by a factor value of 2.11999 provides the millimeters traveled by the wheel per one revolution of the driven carrier. The factor value of 2.11999 is derived from the high range travel length target of a bicycle road configuration divided by the output ratio of the twenty five tooth drive to eleven tooth driven carriers.

FIG. 39 is a chart detailing a ratio change sequence for transmission drive and driven carrier elements; elements 1-1 to 1-2 to 2-2; respectively. The chart depicts the component element relationships during a ratio change sequence. The first step is the initial position profile of a continuous loop 7 on transmission drive carrier element 1 and transmission driven carrier element 1. Steps two and three show the ratio change means for the continuous loop 7 transition from transmission driven carrier element 1 to element 2 while the continuous loop 7 stays engaged on transmission drive carrier element 1. Steps four and five show the ratio change means for an continuous loop 7 transition from transmission drive carrier element 1 to element 2 while the continuous loop 7 stays engaged on transmission driven carrier element 2.

FIG. 40 is a chart detailing a ratio change sequence for transmission drive and driven carrier elements; elements 16-16, 15-16, 15-15. The first step is the initial position profile of a continuous loop 7 on transmission drive carrier element 16 and transmission driven carrier element 16. Steps two and three show the ratio change means for the continuous loop 7 transition from transmission drive carrier element 16 to element 15 while the continuous loop 7 stays engaged on transmission driven carrier element 16. Steps four and five show the ratio change means for a continuous loop 7 transition from transmission drive carrier element 16 to element 15 while the continuous loop 7 stays engaged on transmission driven carrier element 15.

FIG. 41 is a chart detailing a ratio change sequence for multiple carrier elements; elements 1-1, 1-4, 4-4. The first step is the initial position profile of a continuous loop 7 on transmission drive carrier element 1 and transmission driven carrier element 1. Steps two and three show the ratio change means for the continuous loop 7 transition from transmission driven carrier element 1 to element 4 while the continuous loop 7 stays engaged on transmission drive carrier element 1. Steps four and five show the ratio change means for an continuous loop 7 transition from transmission drive carrier element 1 to element 4 while the continuous loop 7 stays engaged on transmission driven carrier element 4.

A graphical illustration of the conversion of human energy to motion is illustrated in FIG. 42. As shown, the applied human energy is converted to a rotational force, that is a torque, as a downward force on the crank arm rotates the axle. The manual power input force PS1 is connected to force reduction ratio device FR1. The rotational force is converted to a faster rotation by force reduction ratio device FR1 which converts the rotational speed into a higher output ratio conversion. The schematic also shows the connection of an additional power supply in the form of a motor power device PS2 which is applicable as the primary power supply or as a supplemental power supply to PS1. The output ratio device reduces the output rotational speed of the motor power force PS2 to more closely match the manual power input force PS1. Power supply PS3 is the power supply ratio of PS1 and PS2 combined. The power supply PS3 is a ratio that ranges from PS1 as 100 percent and PS2 as 0 percent of the power supply PS3 total and is infinitely adjustable to PS1 as 0 percent and PS2 as 100 percent of the power supply PS3 total. The rotational speed increase of the human power supply and the rotational speed decrease of the motor power supply provides more closely balanced rotational input speeds to the transmission assembly. The balanced speed inputs results in improved drive ratio transitions when switching between the power supplies or when one power supply provides a greater percentage of the power mix than the other power supply.

In FIG. 43, an example of the controller 96 of Fig. 27, is shown as control system 37 powered by power supply 38 which may be a battery and/or an electric generator evaluates control parameter shift sensors 39 input signals 40 to determine the appropriate output signals 42 for the attached transmission system 43. Additionally manual inputs are controlled through manual input 41.

FIG. 44 is a flow diagram example for external inputs to effect changes in drive ratio control system parameters by a technician or other manual means. The drive ratio control system runs a sensor input cycle beginning at step 33A. The cycle will look for technician or manual input first in step 33B. Knobs, switches, buttons, and other drive inputs are looked for in step 33C. A wait state step 33D to read variable condition states as follows. A technician display or other output device is updated in step 33E. The controller modifies the program parameters based on new variable values at step 33F. The cycle will pause briefly at exit command step 33G to determine if a program stop or exit command has been entered either by manual or automatic mode. If the exit command is read, the cycle will move to step 33H, step and switch to manual mode, then close cycle loop at step 33I. The cycle will continue to step 33J and make a system safety check before proceeding to step 33K if the safety mode is tripped or continue on to perform a sequence of sensor measuring functions shown as steps 33L, 33M, 33N, 330, 33P, 33Q, 33R, 33S, 33T and 33U. After inputs from the sensor steps, the controller will read the variable states and determine if changes have occurred. The decision step 33V will send the cycle loop our after a timer wait state is reached. Then the cycle will begin again at step 33B.

FIG. 45 is a logic flow diagram for a programmable control to show one manner of a controller decision cycle for drive ratio changes using the embodiment of FIG. 1 in a transmission assembly with a controller similar to that shown in FIG. 27. The initial control cycle sets the control system parameters to zero in begin cycle step32A, then initial drive ratio shift measurements are taken at step32B. The drive ratio mode is determined by the selector step 32C and the cycle path is routed to the corresponding steps 32D, 32N, or 32X for the selected mode settings, "Climbing", "Downhill", and "Level" modes, respectively. The routing for the drive ratio mode described as "Downhill" is, as follows. If the cycle is the first cycle then step 32N sends a signal through the YES gate 32P. The control system then looks up the scanned history and makes changes (or not) based on drive ratio data 32Q. The control system sends a signal to regulate the drive ratio until balanced with the load sensor data at step 32R. The system reads load sensors at step 32S to determine the energy output rate to user interface and adjusts the drive ratio to match energy output rate parameters at step 32T. The system computes the reference cycles to create a baseline 32AH to use as comparison for the next cycle then returns to the beginning of the cycle through step 32AI which sends the signal to the drive ratio shift measurements step 32B. If the cycle was not the first cycle at step 32N, then the control system is routed through NO gate 320 to step 32U, which checks if the energy output rate has changed from the baseline parameter value. If the energy output rate has changed, then the signal is routed through YES gate 32V to steps 32R, 32S, 32T, 32AH, and 32AI. If the baseline energy output rate parameter value has not changed then the control signal sends the signal through the NO gate 32W to step 32AH and starts the scan process again through 32AI by returning to the beginning of the cycle at drive ratio shift measurements step 32B. An analogous procedure is followed for the "Climbing" mode using system parameter data designed for the optimal drive ratio conditions for the mode. The control system routes through step 32D to determine if the scan is the first pass. A first time scan is directed through the YES gate 32F to drive ratio data 32E to lookup the scanned history and make changes to the drive ratio based on mean history data. Routing then follows a similar sequence as the other modes; routing continues through to step 32J where the drive ratios are balanced to match the selected mean parameter values. Load sensors are read in step 32K and then step 32L adjusts the drive ratios to comply with energy output rate parameter settings for the "Climbing" mode. The signal routing is then sent through step 32AH to compile with reference cycles and step 32AI to start another scan process at step 32B. If the look up table at step32D is not the first cycle then the control system routes through NO gate 32G onto step 32H to check if there has been a shift in the energy output rate parameters. If the parameters have changed, then the signal routes through the YES gate 32I to process through control steps 32J, 32K, 32L, 32AH, and 32AI. Step 32AI sends the process back to the beginning for drive ratio shift measurements at step 32B. If at step 32H, the control determines the parameters have not changed, then the control process is sent through NO gate 32M onto step 32AH and step 32AI back to the beginning drive ratio shift measurements step 32B. Another analogous procedure is followed for the "Level" mode using system parameter data designed for the optimal drive ratio positions for the mode. The control system 32C "Level" mode setting routes to step 32X to check if this is the first pass. If this is the first pass, the signal is sent through the YES gate 32Y to look up the scanned history at step 32Z. Transmission drive ratios are modified until balanced with the mean parameter values derived at step 32AA. The control then reads load sensors to determine energy output rate to user interface at step 32AC. Drive ratios are adjusted to comply with the energy output rate parameter setting in step 32AD. After adjustments are made, the control process goes to step32AH to compile with the reference cycles to create an updated mean baseline value. Step 32AI then initiates another scan process back to drive ratio shift measurements at step 32B. If the process was not on the first pass at step 32X, then the signal routes through the NO gate 32AE on to step 32AF. At step 32AF, the control system determines if an energy output parameter shift has occurred and if so, the signal is then routed through the YES gate 32AB to step 32AA to modify the drive ratios until balanced with the mean parameter value. At this point, the control system follows the steps 32AC and 32AD to read sensors and adjust the drive ratios to match the energy output parameter setting values for the "Level" mode. After the drive ratio adjustments are made, the cycle will continue through to steps 32AH to compile with the reference cycles and 32AI to start a scan with the adjusted baseline in place. If the control system at step 32AF determines the energy output rate has not changed, then the signal is sent through the NO gate 32AG to steps 32AH to compile and 32AI to begin a scan at step 32B. The controller decision tree processing continues until the control system is powered off.

Parameters 116 through 137 for control system parameter table 115 as shown in FIG. 46 are applied singularly or in combination to effect adjustments and control of the transmission ratio change device 145. Parameters may be selected singly or in combination from angle of inclination of human/payload shift parameter 116, weight and balance of vehicle parameter 117, training program system shift parameter 118, terrain and suspension control loops parameter 119, angle of inclination of vehicle parameter 120, length of operation shift parameter 121, energy output control parameter 122, suspension stack height parameter 123, vehicle velocity parameter 124, frame geometry parameter 125, terrain condition parameter 126, contact point shift parameter 127, ride height shift parameter 128, vibration shift parameter 129, braking energy parameter 130, day of week shift parameter 131, interactive shift parameter 132, energy input parameter 133, gear ratio parameter 134, wheel rotating speed parameter 135, vehicle load parameter 136, and user interface parameter 137.

In FIG. 47, the transmission ratio change device 145, motor assist control system 144, power generator control 143, power storage system 142, drive clutch control system 141, suspension control system 140, geometry adjust system 139, and braking control system 138 are typical vehicle systems that benefit from the control system parameters shown in Fig. 46. The transmission ratio change device 145 may be adjusted individually or in combination with the other attached devices and systems to improve the vehicle ride characteristics.

The chart of FIG. 48 graphically displays the versatility of the invention and possible transmission assembly locations on vehicles using various suspension designs. Additional vehicle locations using the novel form of transmission assembly 330 as shown in FIG. 29 are possible and examples are shown in FIG. 49. Additional applications for the novel transmission assembly can be shown in FIGS. 50, 51, 52, and 53.

FIG. 49 is an embodiment of a bicycle assembly. The sprocket chain SC transfers the driven output of the transmission assembly 396 from the bicycle front frame seat tube ST to the rear wheel. The bicycle assembly 399 structure is that of a front suspension bicycle. The transmission system 396 is generally of the type disclosed in FIG. 29-A herein.

FIG. 50 is an embodiment of a moped assembly 380 utilizing a novel transmission system disclosed herein. A moped is a hybrid vehicle that has manual power capability through a pedal assembly combined with an assist motor power assembly. The moped assembly's two power sources are used individually or in combination together as represented in the chart of FIG. 42. Transmission assembly 376 is an embodiment of the transmission assembly of FIG. 27 that is fitted to the moped assembly 380.

FIG. 51 displays a motorcycle assembly 381 that utilized a transmission assembly 377 of similar form to the transmission assembly disclosed in FIG. 27.

FIG. 52 depicts a vehicle assembly 382 which utilizes transmission assembly 378 of similar form to the transmission assembly disclosed in FIG. 27. The vehicle assembly has two power sources that are used individually or in combination together as represented in the chart of FIG. 42.

FIG. 53 depicts an air vehicle assembly 384 which utilizes transmission assembly 375 of similar form to the transmission assembly of FIG. 27. The air vehicle assembly has two power sources that are used individually or in combination together as represented in the chart of FIG. 42.

While the invention has been described in relation to preferred embodiments of the invention, it will be appreciated that other embodiments, adaptations and modifications of the invention will be apparent to those skilled in the art.

## Claims

1. A transmission system comprising at least a pair of oppositely oriented drive and driven transmission carriers (1,2), each transmission carrier defining rings of fixable elements and wherein the carriers' central axes are essentially parallel and define a transverse dimension, an endless drive transfer loop coupling said drive elements on said drive transmission carrier to said driven elements on said driven transmission carrier, said system **characterized by**:
at least a first one said carriers is a slitted carrier (196), a slit being defined in transverse dimension crossing said rings of fixable elements and thereby defining a first side of said slit and a second side of said slit, separated from each other by said slit, and said system further having an actuator (191) adapted to move said first side of said slit out of alignment to said second side of said slit thereby causing said rings to be broken in alignment at said slit and so that when said carriers are in rotational motion and said endless transfer loop is on a first ring of said first one of said carriers, said endless transfer loop shifts from said first ring to an adjacent ring.

2. The transmission system of claim 1, further being mounted on a wheeled vehicle, having at least one front wheel and at least one rear wheel, and wherein a further endless drive transfer loop is mounted to said driven carrier, and is also mounted to a rear wheel carrier, so that when said driven carrier turns, each said rear wheel of said vehicle is driven and turns.

3. The transmission system of claim 1, wherein said slitted carrier is made of a material that permits lateral flexure, and wherein said moving of said first side of said slit is permitted by said lateral flexure.

4. The transmission system of claim 1, wherein said slitted carrier defines a second slit in transverse dimension crossing said rings of fixable elements, and whereby said first slit and said second slit defines a moveable portion of said slitted carrier, which said moveable portion is moved, to move said first side of said slit out of alignment to said second side of said slit.

5. The transmission system of claim 1, wherein both said carriers are slitted and each carrier is moved by an actuator to effect gear changes.

6. A bicycle gear assembly, comprising first and second carriers (5,6) defining sets of co-axial rings of fixable elements, each having at least three (240-242) rings of various sizes including a largest ring (240) and a smallest ring (242) oriented so that said largest ring of said first set is aligned with said smallest ring (243) of said second set, thereby forming a first pair of rings, and a ring adjacent to said largest ring (240) of said first set being aligned with a ring adjacent to said smallest ring of said second set, thereby forming a second pair of rings and wherein an endless drive transfer loop (3) is mounted about one of said pairs of rings; said assembly further including a gear changing assembly adapted to move said transfer loop from said first pair of rings to said second pair of rings and wherein said gear changing assembly moves said transfer loop from said first pair of rings to said second pair of rings by first moving said transfer loop to a first ring of said second pair of rings and then moving said transfer loop to a second ring of said second pair of rings, said assembly **characterized by**:
a ring set transverse movement mechanism (58,59,60) that moves said ring sets relative to one another during gear changing so that when said transfer loop is mounted on said first ring of said second pair of rings and is also mounted on said second ring of said first pair of rings, said two rings upon which said transfer loop is mounted are aligned.

7. The gear assembly of claim 6 further comprising a housing protecting said transfer loop and said rings.

8. The gear assembly of claim 6, said assembly being mounted on a bicycle and wherein a drive gear is co-axial to said driven carrier, said drive gear being fitted with a transfer loop to drive a ring co-axial to a wheel of said bicycle.

9. The gear assembly of claim 6, wherein each of said sets of rings is identical in size.

10. The gear assembly of claim 9, wherein each of said sets of rings have rings arranged linearly, in order of increasing size.

11. The gear assembly of claim 6, wherein each said ring set defines an adjacent ring pair spacing and said relative movement of said ring sets is limited to one adjacent ring pair spacing.

12. The gear assembly of claim 6, wherein said gear changing assembly moves said transfer loop from said first pair of rings to said second pair of rings by first moving said transfer loop to a first ring of said second pair of rings and then moving said transfer loop to a second ring of said second pair of rings and wherein when said transfer loop is mounted on said first ring of said second ring pair, and is also mounted on said second ring of said first ring pair, said first ring of said second ring pair does not exert a transverse force on said transfer loop sufficient to cause said transfer loop to move to said second ring of said second ring pair.

13. A bicycle, comprising: a gear assembly, having first, and second sets (5,6) of co-axial rings, each having rings of various sizes including a largest ring (240) and a smallest ring (242), oriented so that said largest ring of said first set is aligned with said smallest ring (243) of said second set, thereby forming a first pair of rings, and a ring adjacent to said largest ring of said first set being aligned with a ring adjacent to said smallest ring of said second set, thereby forming a second pair of rings; a transfer loop (3) mounted about said first pair of rings; a gear changing assembly adapted to move said transfer loop from said first pair of rings to said second pair of rings; and wherein said gear changing assembly moves said transfer loop from said first pair of rings to said second pair of rings by first moving said transfer loop to a first ring of said second pair of rings and then moving said transfer bop to said second pair of rings; said bicycle **characterized by**:
a. a ring set transverse movement assembly (58,59,60) that moves said ring sets relative to one another so that when said transfer loop is mounted on said first ring of said second pair of rings and is also mounted on said second ring of said first pair of rings, said two rings upon which said transfer loop is mounted are aligned.

14. The bicycle of claim 13 wherein a drive gear is co-axial to said driven carrier, said drive gear being fitted with a transfer loop to drive a ring co-axial to a wheel of said bicycle.

15. The bicycle of claim 13 wherein each of said sets of rings is identical in size.

16. The bicycle of claim 13 wherein each of said sets of rings have rings arranged linearly, in order of increasing size.

17. The bicycle of claim 13, wherein each said ring set defines an adjacent ring pair spacing and said relative movement of said ring sets is limited to one adjacent ring pair spacing.

18. The bicycle of claim 13 further comprising a housing protecting said transfer loop and said rings.

19. The bicycle of claim 13, further **characterized by** being powdered by a rider.

20. The bicycle of claim 13, further **characterized by** having a motor and being at least in part, powered by said motor.

## Patentansprüche

1. Getriebesystem mit mindestens einem Paar entgegengesetzt ausgerichteter Antriebs- und Abtriebsgetriebeträger (1, 2), wobei jeder Getriebeträger Ringe festlegbarer Elemente definiert und wobei die mittleren Achsen der Träger im Wesentlichen parallel verlaufen und eine Querabmessung definieren, wobei eine Antriebsübertragungsendlosschleife die Antriebselemente am Antriebsgetriebeträger an die angetriebenen Elemente am Abtriebsgetriebeträger koppelt, **dadurch gekennzeichnet, dass** mindestens ein erster der Träger ein geschlitzter Träger (196) ist, wobei ein Schlitz in der Querabmessung über die Ringe festlegbarer Elemente definiert ist, wodurch eine erste Seite des Schlitzes und eine zweite Seite des Schlitzes definiert sind, die durch den Schlitz voneinander getrennt sind, und dass das System ferner ein Stellglied (191) hat, das geeignet ist, die erste Seite des Schlitzes so zu bewegen, dass sie nicht mehr auf die zweite Seite des Schlitzes ausgerichtet ist, wodurch die laussichtung der Ringe an dem Schlitz unterbrochen ist, und so dass sich die Übertragungsendlosschleife vom ersten Ring zu einem benachbarten Ring verschiebt, wenn die Träger in Drehbewegung sind und sich die Übertragungsendlosschleife auf einem ersten Ring des ersten der Träger befindet.

2. Getriebesystem nach Anspruch 1, das ferner an einem Radfahrzeug montiert ist, das mindestens ein Vorderrad und mindestens ein Hinterrad hat, und wobei eine weitere Antriebsübertragungsendlosschleife am Abtriebsträger sowie an einem Hinterradträger montiert ist, so dass jedes Hinterrad des Fahrzeugs angetrieben ist und sich dreht, wenn sich der Abtriebsträger dreht.

3. Getriebesystem nach Anspruch 1, wobei der geschlitzte Träger aus einem Material hergestellt ist, das seitliches Biegen gestattet, und wobei die Bewegung der ersten Seite des Schlitzes durch das seitliche Biegen gestattet ist.

4. Getriebesystem nach Anspruch 1, wobei der geschlitzte Träger einen zweiten Schlitz in Querabmessung über die Ringe festlegbarer Elemente definiert und wobei der erste Schlitz und der zweite Schlitz einen beweglichen Abschnitt des geschlitzten Trägers definieren, wobei der bewegliche Abschnitt bewegt wird, um die erste Seite des Schlitzes so zu bewegen, dass sie nicht mehr auf die zweite Seite des Schlitzes ausgerichtet ist.

5. Getriebesystem nach Anspruch 1, wobei beide Träger geschlitzt sind und jeder Träger zum Gangwechsel von einem Stellglied bewegt wird.

6. Fahrradgetriebe mit einem ersten und einem zweiten Träger (5, 6), die Sätze koaxialer Ringe festlegbarer Elemente mit jeweils mindestens drei Ringen (240 - 242) unterschiedlicher Größe mit einem größten Ring (240) und einem kleinsten Ring (242) definieren, die so ausgerichtet sind, dass der größte Ring des ersten Satzes auf den kleinsten Ring (243) des zweiten Satzes ausgerichtet ist, wodurch ein erstes Paar Ringe gebildet wird, und ein Ring neben dem größten Ring (240) des ersten Satzes auf einen Ring neben dem kleinsten Ring des zweiten Satzes ausgerichtet ist, wodurch ein zweites Paar Ringe gebildet wird, und wobei eine Antriebsübertragangsendlosschleife (3) um eines der Ringpaare montiert ist, wobei das Getriebe ferner eine Gangwechselanordnung aufweist, die geeignet ist, die Übertragungsschleife vom ersten Paar Ringe zum zweiten Paar Ringe zu bewegen, und wobei die Gangwechselanordnung die Übertragungsschleife vom ersten Paar Ringe zum zweiten Paar Ringe bewegt, indem sie die Übertragungsschleife zuerst zu einem ersten Ring des zweiten Paars Ringe bewegt und dann die Übertragungsschleife zu einem zweiten Ring des zweiten Paars Ringe bewegt, **gekennzeichnet durch**
einen Ringsatzquerbewegungsmechanismus (58, 59, 60), der die Ringsätze während des Gangwechsels bezüglich einander bewegt, so dass die beiden Ringe, auf denen die Übertragungsschleife montiert ist, aufeinander ausgerichtet sind, wenn die Übertragungsschleife auf dem ersten Ring des zweiten Paars Ringe sowie auf dem zweiten Ring des ersten Paars Ringe montiert ist.

7. Getriebe nach Anspruch 6, ferner mit einem Gehäuse, das die Übertragungsschleife und die Ringe schützt.

8. Getriebe nach Anspruch 6, das an einem Fahrrad montiert ist und wobei ein Antriebszahnrad zu dem Abtriebsträger koaxial ist, wobei das Antriebszahnrad mit einer Übertragungsschleife ausgestattet ist, um einen Ring koaxial zu einem Rad des Fahrrads anzutreiben.

9. Getriebe nach Anspruch 6, wobei jeder der Sätze Ringe gleich groß ist.

10. Getriebe nach Anspruch 9, wobei jeder der Sätze Ringe linear nach zunehmender Größe angeordnete Ringe hat.

11. Getriebe nach Anspruch 6, wobei jeder Ringsatz einen benachbarten Ringpaarabstand definiert und die Relativbewegung der Ringsätze auf einen benachbarten Ringpaarabstand beschränkt ist.

12. Getriebe nach Anspruch 6, wobei die Gangwechselanordnung die Übertragungsschleife vom ersten Paar Ringe zum zweiten Paar Ringe bewegt, indem sie die Übertragungsschleife zuerst zu einem ersten Ring des zweiten Paars Ringe bewegt und dann die Übertragungsschleife zu einem zweiten Ring des zweiten Paars Ringe bewegt, und wobei der erste Ring des zweiten Ringpaars, wenn die Übertragungsschleife auf dem ersten Ring des zweiten Ringpaars sowie auf dem zweiten Ring des ersten Ringpaars montiert ist, keine Querkraft auf die Übertragungsschleife ausübt, die dazu ausreicht, die Bewegung der Übertragungsschleife zum zweiten Ring des zweiten Ringpaars zu veranlassen.

13. Fahrrad mit einem Getriebe mit einem ersten und einem zweiten Satz (5, 6) koaxialer Ringe, die jeweils Ringe unterschiedlicher Größe mit einem größten Ring (240) und einem kleinsten Ring (242) haben, die so ausgerichtet sind, dass der größte Ring des ersten Satzes auf den kleinsten Ring (243) des zweiten Satzes ausgerichtet ist, wodurch ein erstes Paar Ringe gebildet wird, und ein Ring neben dem größen Ring des ersten Satzes auf einen Ring neben dem kleinsten Ring des zweiten Satzes ausgerichtet ist, wodurch ein zweites Paar Ringe gebildet wird, einer Übertragungsschleife (3), die um das erste Ringpaar montiert ist, einer Gangwechselanordnung, die geeignet ist, die Übertragungsschleife vom ersten Paar Ringe zum zweiten Paar Ringe zu bewegen, und wobei die Gangwechselanordnung die Übertragungsschleife vom ersten Paar Ringe zum zweiten Paar Ringe bewegt, indem sie die Übertragungsschleife zuerst zu einem ersten Ring des zweiten Paars Ringe bewegt und dann die Übertragungsschleife zu dem zweiten Paar Ringe bewegt, **gekennzeichnet durch**
a. einen Ringsatzquerbewegungsmechanismus (58, 59, 60), der die Ringsätze bezüglich einander bewegt, so dass die beiden Ringe, auf denen die Übertragungsschleife montiert ist, aufeinander ausgerichtet sind, wenn die Übertragungsschleife auf dem ersten Ring des zweiten Paars Ringe sowie auf dem zweiten Ring des ersten Paars Ringe montiert ist.

14. Fahrrad nach Anspruch 13, wobei ein Antriebszahnrad zu dem Abtriebsträger koaxial ist, wobei das Antriebszahnrad mit einer Übertragungsschleife ausgestattet ist, um einen Ring koaxial zu einem Rad des Fahrrads anzutreiben.

15. Fahrrad nach Anspruch 13, wobei jeder der Sätze Ringe gleich groß ist.

16. Fahrrad nach Anspruch 13, wobei jeder der Sätze Ringe linear nach zunehmender Größe angeordnete Ringe hat.

17. Fahrrad nach Anspruch 13, wobei jeder Ringsatz einen benachbarten Ringpaarabstand definiert und die Relativbewegung der Ringsätze auf einen benachbarten Ringpaarabstand beschränkt ist.

18. Fahrrad nach Anspruch 13, ferner mit einem Gehäuse, das die Übertragungsschleife und die Ringe schützt.

19. Fahrrad nach Anspruch 13, ferner **dadurch gekennzeichnet, dass** es von einem Fahrer angetrieben wird.

20. Fahrrad nach Anspruch 13, ferner **dadurch gekennzeichnet, dass** es einen Motor hat und mindestens teilweise von dem Motor angetrieben wird.

## Revendications

1. Système de transmission, comprenant au moins une paire de supports de transmission d'entraînement et entraîné orientés de façon opposée (1, 2), chaque support de transmission définissant des anneaux d'éléments à fixer, et dans lequel les axes centraux des supports sont essentiellement parallèles et définissent une dimension transversale, une boucle de transfert d'entraînement sans fin couplant lesdits éléments d'entraînement sur ledit support de transmission d'entraînement auxdits éléments entraînés sur ledit support de transmission entraîné, ledit système étant **caractérisé en ce que**:
au moins un premier desdits supports est un support fendu (196), une fente étant définie dans une dimension transversale en travers desdits anneaux d'éléments à fixer et définissant de ce fait un premier côté de ladite fente et un deuxième côté de ladite fente, séparés l'un de l'autre par ladite fente, et ledit système comprenant en outre un actionneur (191) qui est adapté pour déplacer ledit premier côté de ladite fente hors de son alignement avec ledit deuxième côté de ladite fente, entraînant ainsi lesdits anneaux à se briser en alignement avec ladite fente, et de telle sorte que lorsque lesdits supports exécutent un mouvement de rotation et que ladite boucle de transfert sans fin se trouve sur un premier anneau dudit premier desdits supports, ladite boucle de transfert sans fin se déplace dudit premier anneau vers un anneau voisin.

2. Système de transmission selon la revendication 1, qui est en outre monté sur un véhicule à roues, comprenant au moins une roue avant et au moins une roue arrière, et dans lequel une boucle de transfert d'entraînement sans fin supplémentaire est montée sur ledit support entraîné, et est également montée sur un support de roue arrière, de telle sorte que lorsque ledit support entraîné tourne, chacune desdites roues arrière du véhicule soit entraînée et tourne.

3. Système de transmission selon la revendication 1, dans lequel ledit support fendu est constitué d'un matériau qui permet une flexion latérale, et dans lequel ledit déplacement dudit premier côté de ladite fente est permis par ladite flexion latérale.

4. Système de transmission selon la revendication 1, dans lequel ledit support fendu définit une deuxième fente dans une dimension transversale en travers desdits anneaux d'éléments à fixer, et dans lequel ladite première fente et ladite deuxième fente définissent une partie mobile dudit support fendu, ladite partie mobile étant déplacée afin de déplacer ledit premier côté de ladite fente hors de son alignement avec ledit deuxième côté de ladite fente.

5. Système de transmission selon la revendication 1, dans lequel lesdits deux supports sont fendus, et chaque support est déplacé par un actionneur afin d'effectuer des changements de rapport.

6. Ensemble de pignons de bicyclette, comprenant des premier et deuxième supports (5, 6) qui définissent des ensembles d'anneaux co-axiaux d'éléments à fixer, comprenant chacun au moins trois anneaux (240-242) de différentes tailles comprenant un plus grand anneau (240) et un plus petit anneau (242), orientés de telle sorte que ledit plus grand anneau dudit premier ensemble soit aligné avec ledit plus petit anneau (243) dudit deuxième ensemble, formant de ce fait une première paire d'anneaux, et un anneau adjacent audit plus grand anneau (240) dudit premier ensemble étant aligné avec un anneau adjacent audit plus petit anneau dudit deuxième ensemble, formant de ce fait une deuxième paire d'anneaux, et dans lequel une boucle de transfert d'entraînement sans fin (3) est montée autour de l'une desdites paires d'anneaux; ledit ensemble comprenant en outre un ensemble de changement de rapport qui est adapté pour déplacer ladite boucle de transfert de ladite première paire d'anneaux vers ladite deuxième paire d'anneaux, et dans lequel ledit ensemble de changement de rapport déplace ladite boucle de transfert de ladite première paire d'anneaux vers ladite deuxième paire d'anneaux en déplaçant d'abord ladite boucle de transfert vers un premier anneau de ladite deuxième paire d'anneaux, et en déplaçant ensuite ladite boucle de transfert vers un deuxième anneau de ladite deuxième paire d'anneaux, ledit ensemble étant **caractérisé par**:
un mécanisme de déplacement transversal d'ensembles d'anneaux (58, 59, 60) qui déplace lesdits ensembles d'anneaux les uns par rapport aux autres pendant un changement de rapport, de telle sorte que lorsque ladite boucle de transfert est montée sur ledit premier anneau de ladite deuxième paire d'anneaux et est également montée sur ledit deuxième anneau de ladite première paire d'anneaux, lesdits deux anneaux sur lesquels ladite boucle de transfert est montée soient alignés.

7. Ensemble de pignons selon la revendication 6, comprenant en outre un boîtier pour protéger ladite boucle de transfert ainsi que lesdits anneaux.

8. Ensemble de pignons selon la revendication 6, ledit ensemble étant monté sur une bicyclette, et dans lequel un engrenage d'entraînement est coaxial audit support entraîné, ledit engrenage d'entraînement étant pourvu d'une boucle de transfert pour entraîner un anneau coaxial à une roue de ladite bicyclette^{.}

9. Ensemble de pignons selon la revendication 6, dans lequel chacun desdits ensembles d'anneaux est de taille identique.

10. Ensemble de pignons selon la revendication 9, dans lequel chacun desdits ensembles d'anneaux comprend des anneaux agencés de façon linéaire, dans le but d'augmenter la taille.

11. Ensemble de pignons selon la revendication 6, dans lequel chacun desdits ensembles d'anneaux définit un espacement de paire d'anneaux adjacent, et ledit déplacement relatif desdits ensembles d'anneaux est limité à un espacement de paire d'anneaux adjacent.

12. Ensemble de pignons selon la revendication 6, dans lequel ledit ensemble de changement de rapport déplace ladite boucle de transfert de ladite première paire d'anneaux vers ladite deuxième paire d'anneaux en déplaçant d'abord ladite boucle de transfert vers un premier anneau de ladite deuxième paire d'anneaux, et en déplaçant ensuite ladite boucle de transfert vers un deuxième anneau de ladite deuxième paire d'anneaux, et dans lequel, lorsque ladite boucle de transfert est montée sur ledit premier anneau de ladite deuxième paire d'anneaux, et est également montée sur ledit deuxième anneau de ladite première paire d'anneaux, ledit premier anneau de ladite deuxième paire d'anneaux n'exerce pas une force transversale sur ladite boucle de transfert suffisante pour entraîner ladite boucle de transfert à se déplacer vers ledit deuxième anneau de ladite deuxième paire d'anneaux.

13. Bicyclette, comprenant un ensemble de pignons, comprenant des premier et deuxième ensembles (5, 6) d'anneaux coaxiaux comprenant chacun des anneaux de différentes tailles comprenant un plus grand anneau (240) et un plus petit anneau (242), orientés de telle sorte que ledit plus grand anneau dudit premier ensemble soit aligné avec ledit plus petit anneau (243) dudit deuxième ensemble, formant de ce fait une première paire d'anneaux, et un anneau adjacent audit plus grand anneau dudit premier ensemble étant aligné avec un anneau adjacent audit plus petit anneau dudit deuxième ensemble, formant de ce fait une deuxième paire d'anneaux; une boucle de transfert (3) montée autour de ladite première paire d'anneaux; un ensemble de changement de rapport qui est adapté pour déplacer ladite boucle de transfert de ladite première paire d'anneaux vers ladite deuxième paire d'anneaux; et dans laquelle ledit ensemble de changement de rapport déplace ladite boucle de transfert de ladite première paire d'anneaux vers ladite deuxième paire d'anneaux en déplaçant d'abord ladite boucle de transfert vers un premier anneau de ladite deuxième paire d'anneaux, et en déplaçant ensuite ladite boucle de transfert vers ladite deuxième paire d'anneaux, ladite bicyclette étant **caractérisée par**:
un ensemble de déplacement transversal d'ensembles d'anneaux (58, 59, 60) qui déplace lesdits ensembles d'anneaux les uns par rapport aux autres, de telle sorte que lorsque ladite boucle de transfert est montée sur ledit premier anneau de ladite deuxième paire d'anneaux et est également montée sur ledit deuxième anneau de ladite première paire d'anneaux, lesdits deux anneaux sur lesquels ladite boucle de transfert est montée soient alignés.

14. Bicyclette selon la revendication 13, dans laquelle un engrenage d'entraînement est coaxial audit support entraîné, ledit engrenage d'entraînement étant pourvu d'une boucle de transfert pour entraîner un anneau coaxial à une roue de ladite bicyclette.

15. Bicyclette selon la revendication 13, dans laquelle chacun desdits ensembles d'anneaux est de taille identique.

16. Bicyclette selon la revendication 13, dans laquelle chacun desdits ensembles d'anneaux comprend des anneaux agencés de façon linéaire, dans le but d'augmenter la taille.

17. Bicyclette selon la revendication 13, dans laquelle chacun desdits ensembles d'anneaux définit un espacement de paire d'anneaux adjacent, et ledit déplacement relatif desdits ensemble d'anneaux est limité à un espacement de paire d'anneaux adjacent.

18. Bicyclette selon la revendication 13, comprenant en outre un boîtier pour protéger ladite boucle de transfert ainsi que lesdits anneaux.

19. Bicyclette selon la revendication 13, **caractérisée en outre en ce qu'**elle est actionnée par un cycliste.

20. Bicyclette selon la revendication 13, **caractérisée en outre en ce qu'**elle est équipée d'un moteur et qu'elle est au moins en partie actionnée par ledit moteur.
